(19) Europäisches Patentamt
European Patent Office
Office européen des brevets

(11) **EP 2 333 723 A2**

(12) **EUROPEAN PATENT APPLICATION**

(43) Date of publication:
**15.06.2011 Bulletin 2011/24**

(51) Int Cl.:
***G06T 11/00*** *(2006.01)*

(21) Application number: **10012304.1**

(22) Date of filing: **30.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.09.2009 JP 2009228553
29.01.2010 JP 2010017783**

(71) Applicant: **Hitachi, Ltd.
Chiyoda-ku
Tokyo 100-8280 (JP)**

(72) Inventors:
• **Inada, Takahiro
Tokyo 100-8220 (JP)**
• **Motomiya, Yukie
Tokyo 100-8220 (JP)**
• **Nomura, Shigetoyo
Tokyo 100-8220 (JP)**
• **Tadano, Kanji
Tokyo 100-8220 (JP)**

(74) Representative: **Strehl Schübel-Hopf & Partner
Maximilianstrasse 54
80538 München (DE)**

(54) **Method of color customization of content screen**

(57) Each portion constituting a displayed screen can be displayed with colors which a user easily views. When an operation button as a component is selected as a target for color customization in a content screen (2), a color customization operation screen (17) is displayed which includes a first color selector display area (19) with respect to this operation button and a second color selector display area (20) with respect to a layout (background) on which this operation button overlaid and displayed. In the first color selector display area, the respective color selectors of text (101), background (200), and frame line (103) as the elements constituting this operation button are displayed, and colors of the respective elements can be selected using these color palettes (29c). It is similar for in the second color selector display area.

FIG. 9

**Description**

INCORPORATION BY REFERENCE

The present application claims priorities from Japanese applications JP-A-2009-228553 filed on September 30, 2009, JP-A-2010-017783 filed on January 29, 2010, the contents of which are hereby incorporated by reference into this application.

BACKGROUND OF THE INVENTION

The present invention relates to a method of color customization of a content screen, the method enabling to customize (change) the color of a component, such as an operation button, a text, or a check box, constituting a content and its background area displayed in a display screen of a terminal device or the like.

In the content displayed in the display screen of a personal computer or the like, an operation button, a text, a check box, and the like are provided for screen operations. Moreover, in order to facilitate the screen operations, these operation button, text, check box, and the like are colored so as to be easily identified.

When a text or the like is displayed, the text may be hard to view depending on the color of the background of a text, and for this reason, there has been proposed a technique wherein the display color of a text is changed depending on the situation of the background so as to easily view the text.

As one example, there has been proposed a technique, wherein when a text, such as the shooting date and time or the name of a photographer, is superimposed and displayed (printed) on an image captured by a digital camera, an area of this image on which the text is superimposed is treated as a background, and wherein this background is displayed with a color that makes the text easily viewable (for example, see JP-A-2008-182513).

Here, a plurality of colors used in a background (i.e., background colors) are set as text color management information in advance, and the color of an area (print position) serving as the background of a text in an image is obtained as the background color, and then the contrast (difference in luminance, hereinafter abbreviated as luminance) with respect to the background color that is obtained by sequentially selecting a setting color of this text color management information is calculated, and this contrast is compared with a reference value that is set in advance, and if this contrast exceeds this reference value, a set color relevant to this contrast is used as the color of the background while if there is no set color whose contrast exceeds this reference value, a set color whose contrast is the highest is used as the color of the background.

As another example, there has been proposed a technique, wherein when a caption text is superimposed on a background in a video reproduced from an optical disc, the reproduced video having such a caption superimposed is displayed after changing the relation in color between the text in this caption and the background so as to make the text easily viewable (for example, see JP-A-2009-27605).

Here, a color code table, in which a plurality of relations in color between a text in a caption and a background (e.g., a combination of a black text and a white background, a combination of a white text and a black background , a combination of a red text and a yellow background, and the like) for making the text easily viewable are set in advance, is provided, and if the transparency of the background, on which the text is hard to view depending on a video, is within a predetermined range, then a color of the background in the color code table relevant to the color of the text at this time is used as the color of the background of this caption.

As yet another example, there has been proposed also a technique wherein a color palette is prepared so as to allow for selection of a desired color component (for example, see JP-A-2008-153749).

This technique removes an unwanted color component from color components contained in image data so as to make the unwanted color component unnoticeable, wherein when a color component desired to remove is contained in the image data, all the color components contained in this image data are extracted and a color palette of these color components is prepared and displayed, and at the same time the color component desired to remove from this color palette is made designatable, and the color component desired to remove is designated from such a color palette and thereby the designated color component is selected and converted to a different unnoticeable color.

SUMMARY OF THE INVENTION

In the techniques set forth in JP-A-2008-182513 and JP-A-2009-27605, the color used in a background is determined in advance and furthermore the color actually used in the background is determined in relation to the color of a text. Although these techniques may make the text easily viewable with respect to the background, the text might not be necessarily easily viewable depending on users. Furthermore, although there may be such "coloring" that makes the text easily viewable, users cannot perform such coloring.

Although the coloring may need to be performed so as to make not only a text but a background easily viewable, neither of the technique set forth in JP-A-2008-182513 nor the technique set forth in JP-A-2009-27605 refers to a technique of making the background of a text easily viewable with respect to the above-described image or video.

Furthermore, in a content screen displayed, an operation button, a text, a check box, and the like (hereinafter, these are referred to as components of a content) constitute this content and these components differ from the text added to an image and its background in the techniques set forth in JP-A-2008-182513 and JP-A-2009-27605. Neither of the technique set forth in JP-A-2008-182513 nor the technique set forth in JP-A-2009-27605 refers to a capability of displaying such components in colors that users can easily view.

While the technique set forth in JP-A-2008-153749 makes it possible to select a predetermined color from a color palette, the colors displayed in this color palette are color components which image data contains, and are color components determined by this image data, and furthermore a color component selected with this color palette is removed from this image data so as to be unnoticeable. Accordingly, the technique set forth in JP-A-2008-153749 does not make selectable such a color that makes the content of a screen easily viewable.

The present invention has been made in view of such problems. It is an object of the present invention to provide a method of color customization of a content screen, the method enabling to display each component constituting a displayed screen in a color which users can easily view.

In order to achieve the above-described object, according to an aspect of the present invention, a method of color customization of a content screen, the method supporting a selection of a color of a component displayed in the content screen, comprises the steps of: designating a component that is a target for color selection in the content screen and displaying a color customization operation screen; in the color customization operation screen, displaying a color palette for color selection for each element constituting the designated component and also displaying a color palette for color selection for each element constituting other component adjacent to the designated component; and selecting desired colors with the use of the color palette and thereby displaying an element of a selected component and an element of the other component in the selected colors, respectively.

Moreover, according to another aspect of the present invention, the component includes a text and a background as its elements, and furthermore includes a frame line as its element as needed.

According to yet another aspect of the present invention, the method further includes the steps of: in either one of the color palette for the text as the element and the color palette for the background as the element, treating a color, whose luminance contrast ratio between the text and the background becomes less than a first ratio, as an unselectable color and putting a mark on this color, the mark being indicative of an unselectable color; and in either one of the color palettes for the respective two elements other than the text as the element, treating a color, whose luminance contrast ratio between these elements becomes less than a second ratio, as an unrecommended color and putting a mark on this color, the mark being indicative of an unrecommended color.

Furthermore, according to yet another aspect of the present invention, the first ratio is 4.5:1 and the second ratio is 1.7:1.

According to yet another aspect of the present invention, the designated components are a plurality of components contained in a designated drag area, and the color palette for color selection of the respective elements constituting the component is displayed for each of the components in the drag area.

Furthermore, according to yet another aspect of the present invention, the other component is a component on which the designated component is overlaid and displayed.

According to yet another aspect of the present invention, a selected component area containing the component, which is designated in the content screen, is displayed in a preview area set in the color customization operation screen.

Furthermore, according to yet another aspect of the present invention, a method of color customization of a content screen, the method supporting a selection of a color of a component displayed in the content screen, the method comprises the steps of: designating a component that is a target for color selection in the content screen and displaying a color customization operation screen; and displaying a color palette for color selection in this color customization operation screen; wherein in the color palette, specifying portions for specifying hue, luminance, saturation, and a transparency, respectively, are provided, wherein color cells of a plurality of colors with hues in a hue range specified by the hue specifying portion and luminance's in a luminance range specified by the luminance specifying portion are arranged in matrix, and the method further comprises the step of selecting the color cell indicative of a desired color with the color palette and thereby displaying the designated component in the selected color.

According to yet another aspect of the present invention, the color cells are arranged in matrix with an axis of hue and an axis of luminance, and the color cells arranged along the hue axis of the matrix display colors having the same luminance but different hues in the hue range while the color cells arranged along the luminance axis of the matrix display colors having the same hue but different luminance's in the luminance range.

Furthermore, according to yet another aspect of the present invention, in the hue specifying portion, an unselectable area indicative of an unselectable hue range is set and displayed while in the luminance specifying portion, an unselectable area indicative of an unselectable luminance range is set and displayed.

According to yet another aspect of the present invention, the unselectable area of the hue specifying portion also contains a hue that is selectable but is not recommended to select while the unselectable area of the luminance specifying portion also contains a hue that is selectable but is not recommended to select.

Furthermore, according to yet another aspect of the present invention, the hue specifying portion includes a hue display bar and a hue specifying slider being movable along the hue display bar and specifying a hue in the hue display bar, wherein a hue specifying range having the center at a hue in the hue display bar specified by the hue specifying slider is set, and a hue within the hue specifying range is the hue of a color displayed in the color cell of the color palette, while the luminance specifying portion includes a luminance display bar and a luminance specifying slider being movable along the luminance display bar and specifying a luminance in the luminance display bar, wherein a luminance specifying range having the center at a luminance in the luminance display bar specified by the luminance specifying slider is set, and a luminance within the luminance specifying range is the luminance of a color displayed in the color cell of the color palette.

Furthermore, according to yet another aspect of the present invention, a color selector including the color palette and the hue, luminance, saturation, and transparency specifying portions is displayed at the same time for each element of the designated component.

According to yet another aspect of the present invention, the unselectable color and the color selectable but not recommended to select with respect to an element of the selected component are colors determined by a calculation of whether or not these colors can be distinguished from a color of other element adjacent to the relevant element.

Furthermore, according to yet another aspect of the present invention, the saturation specifying portion is arranged above the color palette while below the saturation specifying portion the color cells are arranged in a matrix shape with an axis of hue and an axis of luminance.

According to the present invention, a desired component in a content screen can be designated as a target for color customization, and for each of the elements constituting this component in a color customization operation screen, the color of the "element" can be customized into a desired color in a state where a user can easily view, by the operation of a color selector.

BRIEF DESCRIPTION OF THE DRAWINGS

FIG 1 is a view showing a portion of one specific example of a content.

FIG 2 is a view showing the types of components in a content and their elements, and the elements when a component is selected and when the component is not selected (non-active).

FIG 3 is a flowchart showing a series of procedures of a first embodiment of a method of color customization of a content screen according to the present invention.

FIG 4 is a view showing one specific example of a content screen displayed in step S100 of FIG. 3 .

FIG 5 is a view showing one specific example of a selection screen when a "color customization setting" button of the content screen shown in FIG 4 is operated.

FIG 6 is a view showing one specific example of the content screen when an "OK" button is selected with the "color customization setting" button shown in FIG 5.

FIG 7 is a view showing one specific example of a selected component area when one component is selected in the content screen shown in FIG 6.

FIG 8 is a view showing one specific example of a color customization operation screen displayed after moving the selected component area shown in FIG 7.

FIG 9 shows one specific example of the color customization operation screen when a color selector selected in the color customization operation screen shown in FIG 8 is opened.

FIG 10A is a view showing one specific example of a "color" tab in FIG 9.

FIG 10B is a view showing one specific example of a "gradation" tab in FIG 9.

FIG 11A is a view showing unselectable colors in the "color" tab shown in FIG 10.

FIG 11B is a view showing colors not recommended to select in the "gradation" tab shown in FIG 10.

FIG 12 is a view showing how a color customization operation of a text of an operation button is performed in the color customization operation screen shown in FIG 9.

FIG 13 is a view showing how a color customization operation of a frame line of the operation button is performed in the color customization operation screen shown in FIG 9.

FIG. 14 is a view showing how a color customization operation of the background of a layout is performed in the color customization operation screen shown in FIG 9.

FIG 15 is a view showing one operation example of the color selector of the background of the layout in the color customization operation screen shown in FIG 9.

FIG 16A is a view showing a gradation operation of the background of the layout in the color customization operation screen shown in FIG 9.

FIG 16B is a view showing a gradation operation following the operation shown in FIG 16A.

FIG 17 is a view showing an operation to change a target for color customization in the color customization operation screen shown in FIG 9.

FIG 18 is a view showing one specific example of the operation when the color customization operation is completed in the color customization operation screen shown in FIG 9.

FIG 19 is a view showing one specific example of the selection screen displayed by the operation shown in FIG 18.

FIG 20 is a view showing one specific example of the operation to select a plurality of "components" in the content screen shown in FIG 6.

FIG 21 is a view showing one specific example of the color customization operation screen displayed by the operation shown in FIG 20.

FIG 22 is a view showing one specific example of a color selector expanded in a color customization operation screen in a second embodiment of the method of color customization of a content screen according to the present invention.

FIGS. 23A, 23B are views showing one specific example of the display state of a setting color display portion 21a of a "selection color display" column 21 in FIG 22.

FIG 24 is a view showing another specific example of the color selector expanded in the color customization operation screen in the second embodiment of the method of color customization of a content screen according to the present invention.

FIGS. 25A, 25B are views showing one specific example of a method of operating a hue specifying portion 44 and a luminance specifying portion 45 in FIG 24.

FIG 26 is a view showing one specific example of a display state of a "COLOR" tab 29 in a color selector 40 shown in FIG 22 when a color customizing processing in the second embodiment of the method of color customization of a content screen according to the present invention has not been performed yet.

FIG 27 is a view showing one specific example of a default display state of the "COLOR" tab 29 in the color selector 40 shown in FIG 22 when the color of an object element in the second embodiment of the method of color customization of a content screen according to the present invention is being subjected to color customization into a gray.

FIG 28A is a view showing one specific example of the operation state in the hue specifying portion 44 of the color selector 40 shown in FIG 22.

FIG 28B is a view showing one specific example of the state when a luminance specifying slider 45a of a luminance specifying portion 45c is moved to the upper end side of a luminance display bar 45c in the color selector 40d shown in FIG 28A.

FIG 29 is a view showing one specific example of the state of the color palette in the color selector of each element of one component in the second embodiment of the method of color customization of a content screen according to the present invention.

FIG 30 is a view showing one specific example of an instruction screen that is displayed when an "OK" button as shown in FIG 18 is depressed in the color customization operation screen including color selectors 40C, 40B, and 40F as shown in FIG 29.

FIG 31 is a view showing one alternative embodiment of the color selector shown in FIG 22, FIG 23, and FIG 26 to FIG 30.

FIGS. 32A, 32B are views showing changes in the state of the color selectors 40C, 40B when one of "clear" buttons 23 of the color selectors 40C, 40B in FIG 9 having the configuration shown in FIG 31 is operated.

FIG 33 is a view showing a state when a "gradation" tab 30 is selected with the color selector 40 shown in FIG 22.

FIGS. 34A, 34B are views illustrating the operation of a branch point increment/decrement portion 63 of a gradation branch point setting portion 61 in the color selector 40 shown in FIG 33.

FIGS. 35A, 35B are views illustrating the operation of an intermediate portion indicator 67I in the color selector 40 shown in FIG 33.

FIG 36 is a view showing one specific example of the color selector expanded in the color customization operation screen as shown in FIG 8 in a third embodiment of the method of color customization of a content screen according to the present invention.

## DETAILED DESCRIPTION OF THE INVENTION

First, the concept of the present invention is described.

A content displayed in a display screen of a terminal device, such as a personal computer, comprises each component, and each component comprises its constituent elements.

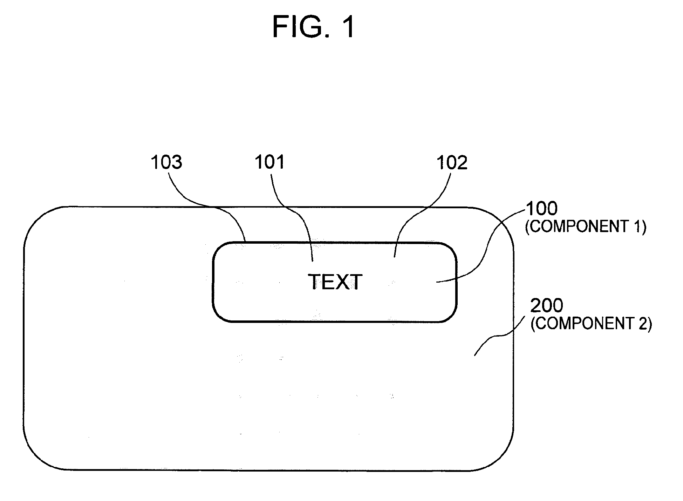

FIG 1 shows a portion of one specific example of such a content, wherein reference numeral 100 represents an operation button, 101 represents a letter, 102 represents a background of the button, 103 represents a frame line of the button, and 200 represents a background.

In this view, this portion of this content comprises the operation button 100 and the background 200 of an area other than the operation button 100. Here, the operation button 100 and the background 200 are components, and this portion of the content comprises the operation button 100 component and the background 200 component. Here, the operation button 100 is referred to as a "component 1" and the backgrounds 200 referred to as a "component 2".

Moreover, the operation button 100 as the component 1 comprises the frame line 103 representing a contour of the operation button 100, the button background 102 serving as an internal area of the button frame line 103, and the letter 101 forming a text. These letter 101, button background 102, and frame line 103 serve as elements constituting the component 1.

The embodiment described below is provided in a terminal device and enables a user to customize (change) colors so that the user easily views such components of the content, the respective components, and the respective elements of the component.

In order for a user to be able to clearly distinguish components or the elements of the component, the luminance contrast ratio (difference in density) between such a component or element and other component or element in contact thereto (hereinafter, referred to as "adjacent thereto") needs to be sufficiently high.

Here, according to WCAG (Web Content Accessibility Guidelines) Recommendation of W3C (World Wide Web Consortium), the luminance contrast ratio is given by Formula (1),

$$(L1+0.05)/(L2+0.05), \qquad (1)$$

where L1 represents a relative luminance L of the color of a brighter one among adjacent components or elements and L2 represents a relative luminance L of the color of a darker one among the adjacent components or elements.

The relative luminance of a color is defined as

$$L=0.2126 \cdot R+0.7152 \cdot G+0.0722 \cdot B,$$

in the sRGB color space of IEC (International Electrotechnical Commission) Standard, where, with respect to the R (red) component, G (green) component, and B (blue) component in such a relative luminance of a color, if we put the R component in the sRGB color space as RsRGB, similarly the G component as GsRGB, and similarly the B component as BsRGB, then R, G and B are defined as:

| if $RsRGB \leq 0.03928$, | then $R=RsRGB/12.92$ |
| else, | $R=((RsRGB+0.055)/1.055)^2.4$; |
| if $GSRGB \leq 0.03928$, | then $G=GsRGB/12.92$ |
| else, | $G=((GsRGB+0.055)/1.055)^2.4$; |
| if $BsRGB \leq 50.03928$, | then $B=BsRGB/12.92$ |
| else, | $B=((BsRGB+0.055)/1.055^2.4$; |

where the "^" symbol is the exponentiation operator, and RsRGB, GsRGB, and BsRGB are respectively defined as:

$$RsRGB=R_{8bit}/255$$

$$GsRGB=G_{8bit}/255$$

$$BsRGB=B_{8bit}/255$$

Note that $R_{8bit}$, $G_{8bit}$, and $B_{8bit}$ are values expressed in 8-bit, respectively.

As described above, the luminance contrast ratio is expressed with Formula (1), however,

(1) because content authors can not control over user settings as to how a text is rendered (imaging from numeric data: for example, font smoothing or anti-aliasing), the luminance contrast ratio for a text can be evaluated under the situation anti-aliasing (processing to eliminate jags appearing in a line or the like to be displayed) is turned off. (2) When there is a border around the text, the border can add contrast and would be used in calculating the contrast between the text and its background. However, a narrow border around the text would be used as the text. A wide border around the text that fills in the inner details of the texts acts as a halo would be considered as a background color.

(3) WCAG conformance should be evaluated for color pairs specified in the content that an author would expect to appear adjacent in typical presentation. Authors need not consider unusual presentations, such as changes in colors made by the user agent, except where caused by authors' source code.

Note that, if dithering (combining displayable colors to present their intermediate color) occurs, then the source color value is used. For colors that are dithered at the source, the average values of the used colors should be used (average R, average G, and average B).

The method according to the embodiment described hereinafter can control the colors of the components of a content and the colors of their elements based on the above luminance contrast ratio and customize the color of any component or element in accordance with a user.

Here, the control over colors refers to: disenabling a color from being selected in a text and its background (background on which this text is overlaid and displayed), when a luminance contrast ratio of the color is caused to be less than 4.5:1; and enabling selecting a color that causes the luminance contrast ratio between an element other than a text and its background, or between an element other than a text and an element adjacent thereto (e.g., between the background color of a button and the frame line color of this button, or between the frame line color of a button and the color of the background on which this button is placed, etc.) to be equal to or greater than 1.7:1.

Note that, in the following, embodiments will be described with the specified luminance contrast ratios of 4.5: 1 and 1.7:1 as described above, but the present invention is not limited thereto, and other luminance contrast ratios that make a user to easily view each "element" can be defined. However, the luminance contrast ratio specified between a text and an "element" adjacent thereto shall be greater than the contrast ratio specified between "elements" other than the text.

Moreover, in the following embodiments, all the elements (the letter 101 of the component 1, the background 102 of the component 1, the frame line 103 of the component 1, and the component 2 in FIG 1) adjacent to one another shall be individually customized. In the case of a gradation (continuous changes in a color or a gray), the minimum luminance contrast ratios (4.5:1 and 1.7:1 described above) are determined with severest colors.

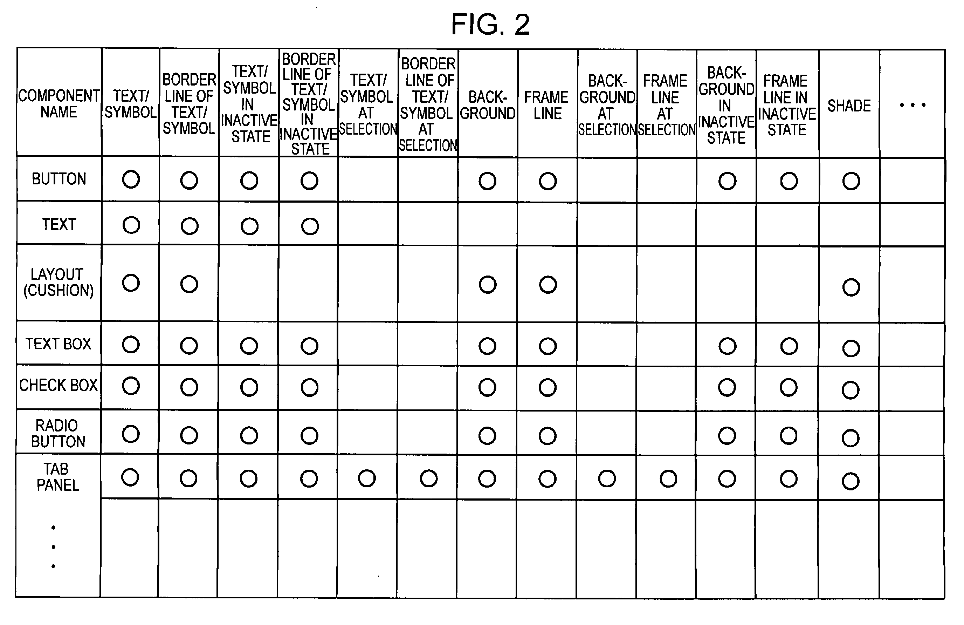

FIG 2 is a view showing a list of types of components and their elements.

In this view, as the components, there are enumerated a "button", a "text", a "layout" serving as a background in which these "button" and "text" are arranged, a "text box" for inputting a text, a "check box" provided for every two or more items and enabling a user to select either one of these items, a "radio button" provided for every two or more items and enabling a user to select only one of these items, and a "tab panel" used for displaying a plurality of types of information within a limited certain area, and there are enumerated elements with respect to these items. Such elements include a "text/symbol", a "border of a text/symbol", a "background", a "frame line", a "shade", and the like. Here, the attributes of the elements "text/symbol", "border of a text/symbol", "background", and "frame line" include an element capable of being "depressed" (functioning by a depression operation) and an "inactive" element possibly capable of being "depressed" but not capable of being "depressed" at this instance (not functioning even if depressed), wherein with respect to the element capable of being "depressed", taking the "text/symbol" as an example, there are the "text/symbol" and the "inactive text/symbol". Moreover, a state indicating that a relevant component is selected upon "depression" is referred to as "at selection". For example, taking the "text/symbol" as an example, there are a "text/symbol" indicative of a state prior to depression and capable of being depressed, a "text/symbol in an inactive state" indicative of a state prior to depression and incapable of being depressed, and a "text/symbol at selection" indicative of a state after being depressed. For each of the components, a circle mark is attached to a relevant attribute of the respective elements.

According to FIG 2, while the component "button", "layout", "text box", "check box", "radio button", or "tab panel" comprises the elements "text/symbol", "border of a text/symbol", "background", "frame line", and "shade", these elements all have an "inactive" state. While the component "layout" comprises the elements " text/symbol", "border of a text/ symbol", "background", "frame line", and "shade", these elements have neither an inactive state nor a selected state because these are not depressed. Although the component "text" comprises the elements "text/symbol" and "border of a text/symbol", these elements have an inactive state. Moreover, while the component "tab panel" comprises the elements "text/symbol", "border of a text/symbol", "background", "frame line", and "shade", these elements have both an "inactive" state and a "selectable" state.

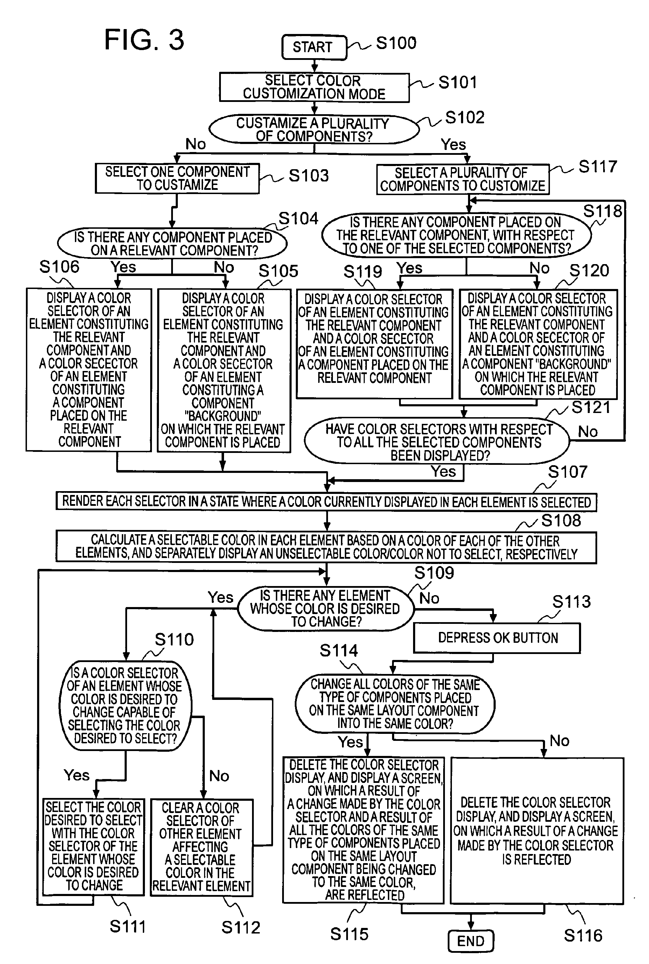

On the basis of the above, hereinafter, a first embodiment of the present invention will be described with reference to FIG 3 to FIG 21. FIG 3 is a flowchart showing a series of procedures of one embodiment of the method of color customization of a content screen according to the present invention, and the embodiment will be described based on FIG 3.

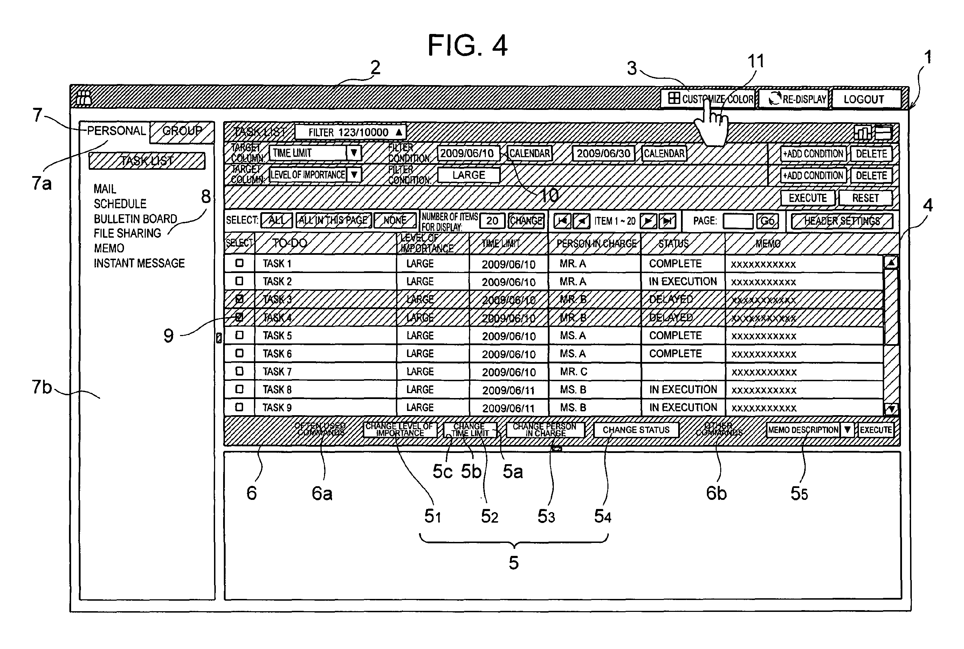

First, when content data is downloaded with a non-illustrated terminal device, a content screen based on this content data shown in FIG 4 is displayed in a display screen (Step S100 of FIG. 3).

In FIG 4, reference numeral 1 represents a display screen, 2 represents a content screen, 3 represents a "color customization mode setting" button, 4 represents a content data display area, 5 and $5_1$-$5_4$, represent operation buttons, $5_5$ represents an operation portion (here, a pull down menu) for selecting a function that is executed when an "execute" button provided on the right hand thereof is depressed, 5a represents a text of a button, 5b represents a button's background, 5c represents a button's frame line, 6 represents a background, 6a and 6b each represent a text, 7 represents a tab panel, 7a represents a text of the tab panel, 7b represents a background of the tab panel, 8 represents a text, 9 represents a check box, 10 represents a text box, and 11 represents a cursor.

In this view, in the content screen 2 displayed in the display screen 1, there are displayed the content display area 4 for displaying a downloaded content, e.g., the "CHANGE LEVEL OF IMPORTANCE" button $5_1$ for processing a content displayed in the content display area 4, the "CHANGE TIME LIMIT" button $5_2$, the "CHANGE PERSON IN CHARGE" button $5_3$, the "CHANGE STATUS" button $5_4$ (hereinafter, referred to as an operation button 5 when collectively or generically referred to), the operation portion $5_5$ for function selection, the layout (background) 6 on which these operation button 5 and operation portion $5_5$ are overlaid and displayed, the tab panel 7, the text 8 displayed in the tab panel 7, the check box 9 provided for each content data displayed in the content display area 4, the text box 10, and the like. These are the "components" constituting the content screen 2.

In the content display area 4, here, a list of tasks comprising the items "IMPORTANCE", "PERIOD", "PERSON IN CHARGE", "STATUS", "MEMO", and the like are displayed, and for each of the tasks, the check box 9 for enabling a processing of each task is provided. When all the tasks in the content display area 4 are not checked in their check boxes 9 and can be processed, all the components "CHANGE LEVEL OF IMPORTANCE" button $5_1$, "CHANGE TIME LIMIT" button $5_2$, "CHANGE PERSON IN CHARGE" button $5_3$, and "CHANGE STATUS" button $5_4$, and operation portion $5_5$ are in the inactive state and will not function even if being depressed. If at least one task in the content display area 4 is checked in its check box 9 and becomes capable of processing, then all these buttons becomes capable of being "depressed".

For example, as shown in the view, when tasks 3, 4 are selected and becomes capable of processing, then by selecting the "CHANGE LEVEL OF IMPORTANCE" button $5_1$ with respect to these tasks 3, 4, the content of the item "IMPORTANCE" can be changed, by selecting the "CHANGE TIME LIMIT" button $5_2$ the content of the item "PERIOD" can be changed, and by selecting the "CHANGE PERSON IN CHARGE" button $5_3$ the content of the item "PERSON IN CHARGE" can be changed, and furthermore, by selecting the "CHANGE STATUS" button $5_4$ the content of the item "STATUS" can be changed. Moreover, in the operation portion $5_5$, as shown in the view, when the "EXECUTE" button is depressed while an item "MEMO DESCRIPTION" is selected, the content of an item "MEMO" of the respective tasks 3, 4 can be changed. Note that, in the operation portion 55, a list of functions is displayed by depressing a relevant button, and then when a desired function of these functions is depressed and the "EXECUTE" button is depressed, this function is executed with respect to the tasks 3, 4.

In the following, as a target for color customization, although the operation button 5 will be described as a representative example, the "MEMO DESCRIPTION" change operation portion $5_5$ or the "components" other than this (i.e., the tab panel 7, the text 8, the check box 9, the text box 10, or the like) is the same as the operation button 5.

The operation button 5 as a component comprises a text 5a, a background 5b, and a frame line 5c, which are the "elements" constituting the operation button 5. The texts as such elements are "change level of importance" in the "CHANGE LEVEL OF IMPORTANCE" button $5_1$, "CHANGE TIME LIMIT" in the "CHANGE TIME LIMIT" button $5_2$, "change person in charge" in the "CHANGE PERSON IN CHARGE" button $5_3$, and "change status" in the "CHANGE STATUS" button $5_4$. Similarly, in the layout 6 as a component, the texts 6a and 6b indicative of the title of the layout 6 are displayed, wherein the texts 6a, 6b and the background of the layout 6 are the elements constituting the layout 6. Note that, when the text 6a is used for designating a command for the "CHANGE LEVEL OF IMPORTANCE" button $5_1$, the "CHANGE TIME LIMIT" button $5_2$, the "CHANGE PERSON IN CHARGE" button $5_3$, the "CHANGE STATUS" button $5_4$, or the like as the component overlaid and displayed on the layout 6, the text 6a is presented as a title (text) like "OFTEN USED COMMAND", for example.

The text 8 displayed in the tab panel 7 is content data and also a component. In contrast, the text 7a "PERSONAL" displayed in the tab panel 7 is for indicating a title of the tab panel 7 and is also an element constituting the tab panel 7. Note that, the tab panel 7 comprises such a text 7a as an element and the background 7b as an element, wherein the text 8 as a component is overlaid and displayed on the background 8b. Here, there is also a tab panel titled as "GROUP", which is the same as the tab panel 7.

In the content display area 4, a list of tasks is displayed as shown in the view, and here the check box 9 as a component is provided for each of the tasks.

Furthermore, in the content screen 2, mode selection buttons, such as a "CUSTOMIZE COLOR" button 3, are displayed on its upper side, and by designating and clicking either of these buttons with a cursor 11 (hereinafter, such an operation is referred to as a depression operation), a mode relevant thereto is set. The "CUSTOMIZE COLOR" button 3 is for setting a mode to customize the color of a component or its element in the content screen 2.

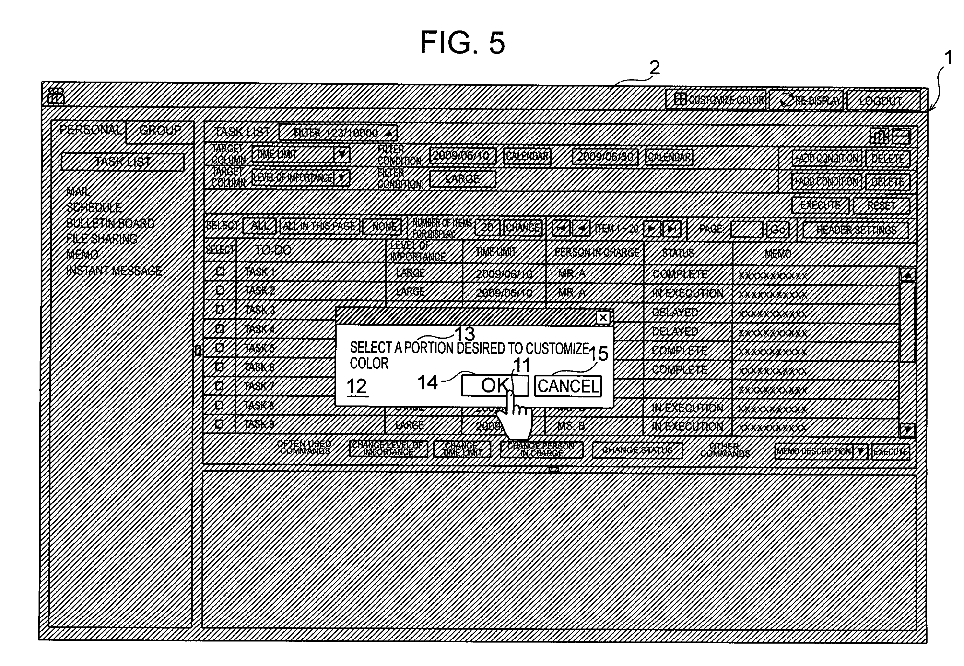

When the "CUSTOMIZE COLOR" button 3 is depressed by operating the cursor 11 (Step S101 of FIG 3) while the content screen 2 is displayed (Step S100 of FIG 3), a selection screen shown in FIG 5 is displayed.

In FIG 5, reference numeral 12 represents the selection screen, 13 represents a text, 14 represents an "OK" button, and 15 represents a "CANCEL" button.

In this view, the selection screen 12 is overlaid on the content screen 2 and displayed at its center portion, and in this case the content screen 2 is see-through. However, here, only the selection screen 12 may be displayed.

In the selection screen 12, for example, the text 13 such as "SELECT A PORTION DESIRED TO CUSTOMIZE COLOR" is displayed, and the "OK" button 14 for customizing the color of a component and the "CANCEL" button 15 for canceling the color customization mode are displayed. When the "CANCEL" button 15 is depressed by operating the cursor 11, the color customization mode is canceled and the screen returns to the display state of only the content screen 2 shown in FIG 4.

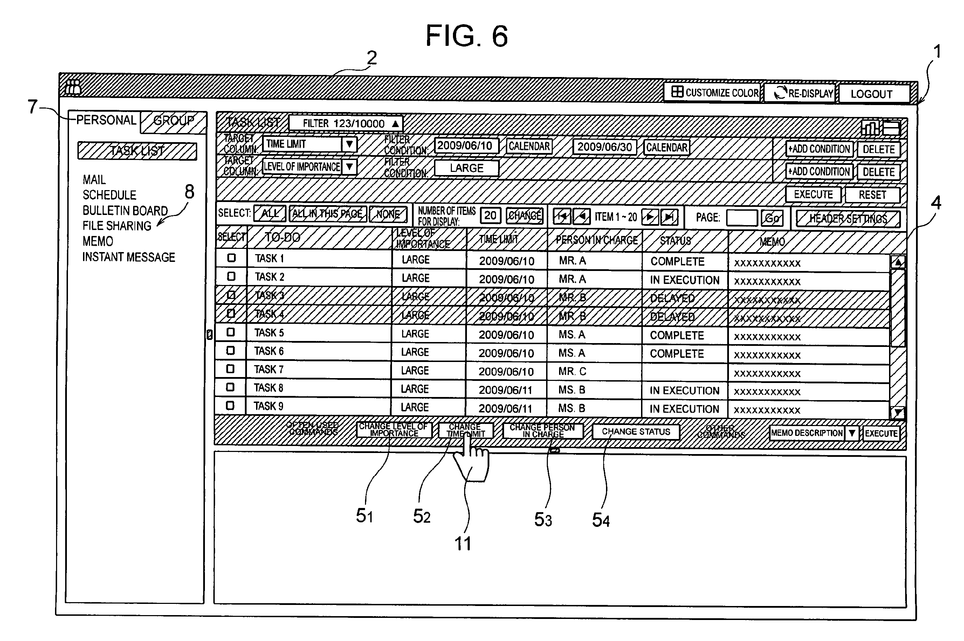

Upon depression of the "OK" button 14, the color customization mode is set and the screen becomes in a display state of the content screen 2 shown in FIG 6 (in FIG 6, the same reference numerals are given to portions corresponding to those of FIG 4 to omit the duplicated description), Here, when one desired component, e.g., the "CHANGE TIME LIMIT" button $5_2$, is depressed by operating the cursor 11, this component has been depressed (Steps S 102, S 103 of FIG 3).

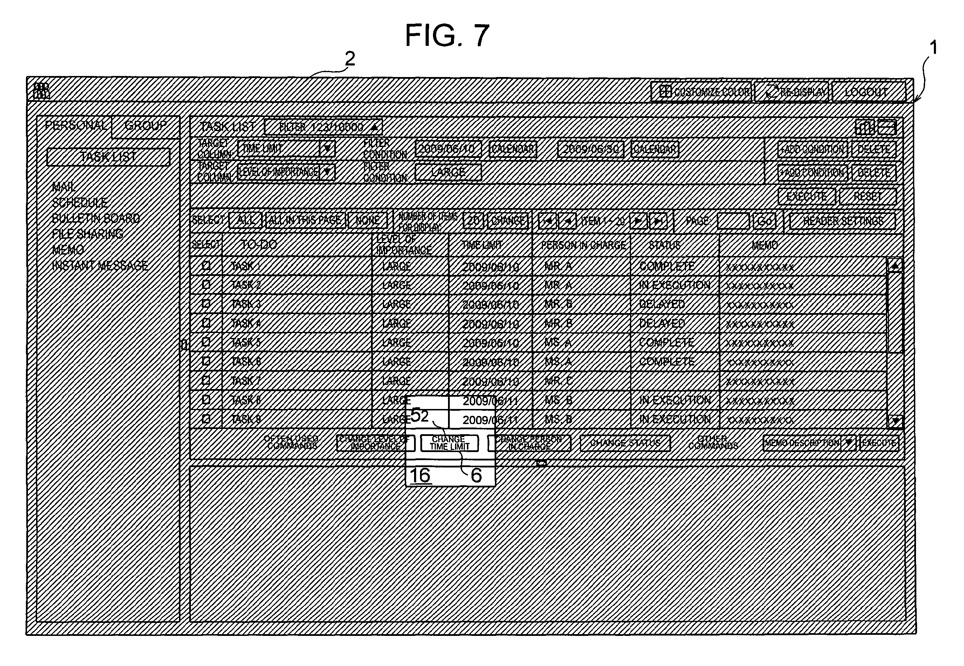

At the same time, in this case, the depressed component is the "CHANGE TIME LIMIT" buttons $5_2$, and there is no other component overlaid on this component ("No" in Step S 104 of FIG 3). Here, as shown in FIG 7 (in FIG 7, reference numeral 16 represent a depressed-component area, where the same reference numerals are given to the portions corresponding to those of the above drawings to omit the duplicated description), the depressed-component area 16 is clearly indicated, which completely contains the "CHANGE TIME LIMIT" button $5_2$, i.e., the relevant component in the content screen 2, and also contains a portion of other component (here, the layout 6) adjacent thereto, and excludes the other components as much as possible, where other areas of the content screen 2 are see-through.

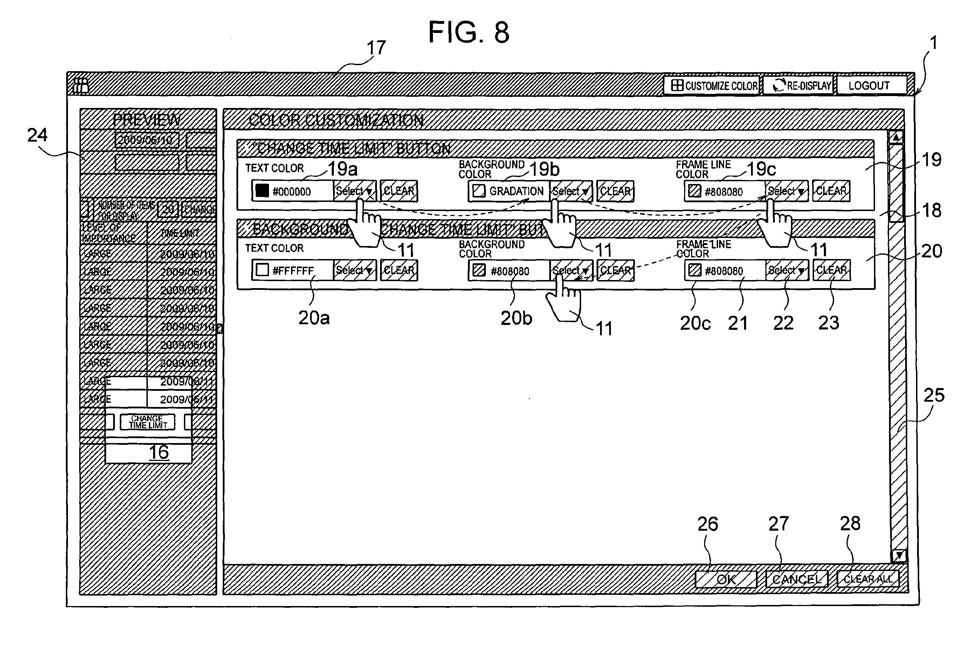

Then, the whole content screen 2 shown in FIG 6 moves, for example, to the left, and such a depressed-component area 16 moves accordingly and the color customization operation screen shown in FIG 8 is displayed (Step S105 of FIG. 3).

In FIG 8, reference numeral 17 represents a color customization operation screen, 18 represents a color selector display screen, 19 represents the color selector display area of a "button", 9a-19c each represent a color selector, 20 represents the color selector display area of a "layout", 20a-20c each represent a color selector, 21 represents a "selection color display" column, 22 represent a "display selection color candidate" button, 23 represent a "CLEAR" button, 24 represents a preview area, 25 represents a scroll operation portion, 26 represents an "OK" button, 27 represents a "CANCEL" button, and 28 represents a "CLEAR ALL" button.

In this view, the color customization operation screen 17 comprises the color selector display screen 18 made by modifying the content data display area 4 in the content screen 2 shown in FIG 4 and the preview area 24 made by modifying the display area of the tab panel 7. Here, as described above, as the whole content screen 2 shown in FIG 6 is moved until the depressed-component area 16 is positioned within the preview area 24, only portion contained in the preview area 24 of the content screen 2 will be displayed in the preview area 24. However, within the preview area 24, only a portion of the depressed-component area 16 is clearly indicated and the other portions are see-through. Accordingly, the component depressed in the content screen 2 of FIG. 6 (in this case, the "CHANGE TIME LIMIT" button $5_2$) is clearly indicated and this fact can be confirmed easily.

Moreover, in the color selector display screen 18, a color selector display area is set for each of the depressed component in the content screen 2 of FIG 6 and other component, on which this depressed component is overlaid and displayed, clearly indicated in the depressed-component area 16. In the above example, the color selector display area 19 of the selected "CHANGE TIME LIMIT" button $5_2$ and the color selector display area (the color selector display area of the layout 6) 20 with respect to the layout 6, on which the "CHANGE TIME LIMIT" button $5_2$ is overlaid, are set. Then, for each of the color selector display areas 19, 20 a color selector for allowing a user to select, for each of the elements of a relevant component, its color is displayed. In this example, in the color selector display area 19, a color selector 19a is set with respect to the text 5a (FIG 4) of the button that is the "element" of the "CHANGE TIME LIMIT" button $5_2$ as a component, a color selector 19b is set with respect to its background 5b, and a color selector 19c is set with respect to its frame line 5c, respectively. Moreover, in the color selector display area 20 of the layout 6, a color selector 20a is set with respect to the text 6a (FIG 4) of the layout 6 that is the "element" of the layout 6 as a "component", a color selector 20b is set with respect to its background, and a color selector 20c is set with respect to its frame line, respectively.

Taking the color selector 20c as an example, each color selector comprises a "selection color display" column 21, a "display selection color candidate" button 22, and a "clear" button 23. In the "selection color display" column 21, a current color of the "element" (the frame line of the layout 6, in this case) relevant to the color selector 20c is displayed so that users can confirm the current display color of this "element". Moreover, the "display selection color candidate" button 22 is for displaying a means for customizing (changing) a color, as described later, and the "clear" button 23 is for canceling the selected color, as described later, and is also for canceling the limitation on selection of a color.

Moreover, even when one component selected in the content screen 2 shown in FIG 6 (Step S103 of FIG. 3) has other component (e.g., the operation button 5) overlaid thereon ("Yes" in Step S104 of FIG. 3) as with the layout 6 for example, the color customization operation screen 17, in which the color selector display area 19 of this selected component and the color selector display area 20 of other component overlaid on this component are set, is displayed as shown in FIG 8. However, if this depressed component is the layout 6, the components overlaid on the layout 6 are a plurality of operation buttons 5, and in this case, the color selector display area 20 will be set and displayed for each of the operation buttons 5 (Step S106 of FIG. 3). Note that, when the depressed component is the tab panel 7, the component overlaid on this is the text 8, and therefore, in this case, the color customization operation screen 17 is displayed (Step S106 of FIG. 3), in which the color selector display area 19 of the selected tab panel 7 and the color selector display area 20 of the text 8 overlaid on this are set.

The color customization operation screen 17 includes the scroll operation portion 25 for scrolling up and down the color selector display screen 18, the "OK" button 26 for determining an operation result of color customization described later, the "CANCEL" button 27 for canceling the operation of color customization described later, and the "CLEAR ALL" button 28 having a function similar to a function to simultaneously operate all the "CLEAR" buttons 23 of the color selectors 19a-19c and 20a-20c displayed in the color selector display screen 18.

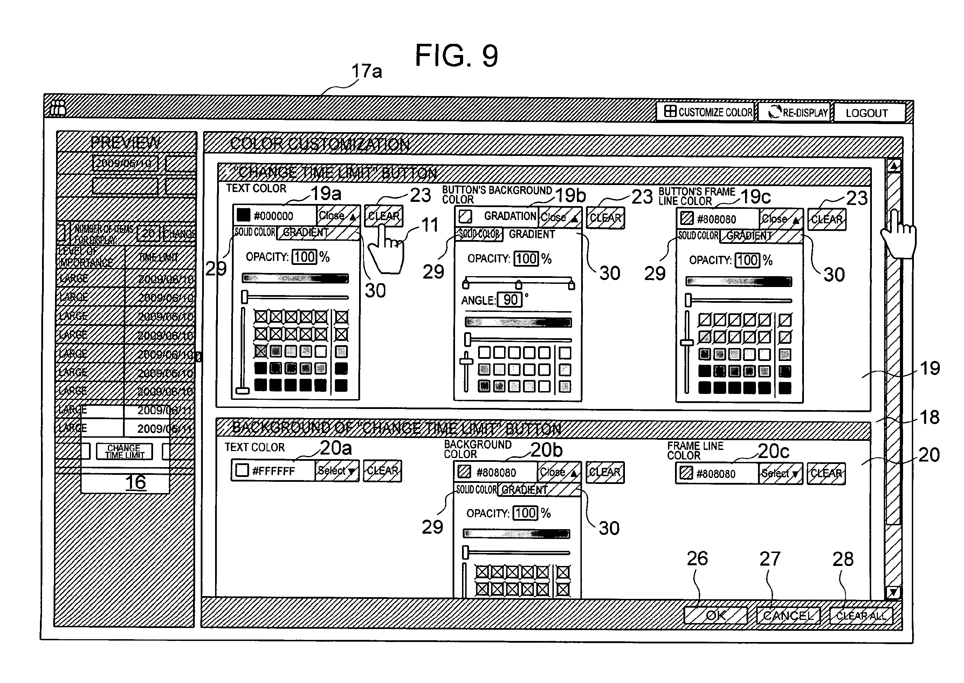

When the "display selection color candidate" button 22 of the color selector of a desired "element" is depressed with the cursor 11 in the color customization operation screen 17 shown in FIG 8, the color selector selected by depressing the "display selection color candidate" button 22 is expanded and becomes in a state allowing customization of the color of this "element", as shown in FIG 9.

In FIG 9, reference numeral 17a represents a color customization operation screen, 29 represents a "COLOR" tab, and 30 represents a "GRADATION" tab, and the same reference numerals are given to portions corresponding to those of FIG 8 to omit the duplicated description.

Now, when the "display selection color candidate" button 22 of the color selectors 19a-19c is depressed in the color selector display area 19 of the "CHANGE TIME LIMIT" button $5_2$ in the color customization operation screen 17 shown in FIG 8 and also the "display selection color candidate" button 22 of the color selector 20b is depressed in the color selector display area 20 of the layout 6, respectively, these color selectors 19a-19c, and 20b are selected and expanded. That is, here, the color selector 19a for setting the text color of the element "text" 5a of the "CHANGE TIME LIMIT" button $5_2$, the color selector 19b for setting the background color of the element "BUTTON' S BACKGROUND" 5b, the color selector 19c for setting the frame line color of the element "BUTTON' S FRAME LINE" 5c, and the color selector 20b for setting the background color of the element "background" of the layout 6 will expand.

These color selectors 19/20 (the generic name of the color selectors 19a-19c and 20a-20c) comprise the "COLOR" tab 29 for determining a color and the "GRADATION" tab 30 for determining a gradation, wherein either of these tabs has been selected by the operation of the cursor 11. The example shown in FIG 9 shows a state that the "COLOR" tab 29 has been selected in the color selector 19a of the "BUTTON'S TEXT COLOR" with respect to the element "text" 5a of the "CHANGE TIME LIMIT" button $5_2$, in the color selector 19c of the "BUTTON'S FRAME LINE COLOR" with respect to the element "BUTTON'S FRAME LINE" 5c, and in the color selector 20b of the "BACKGROUND COLOR" with respect to the element "background" of the layout 6, respectively, while the "GRADATION" tab 30 has been selected in the color selector 19b of the "BUTTON'S BACKGROUND COLOR" with respect to the element "BUTTON'S BACKGROUND" 5b of the "CHANGE TIME LIMIT" button $5_2$.

These "COLOR" tab 29 and "GRADATION" tab 30 are in the sate where a color (i.e., the color in the "selection color display" column 21), with which the relevant "element" is represented, is selected (Step S107 of FIG. 3).

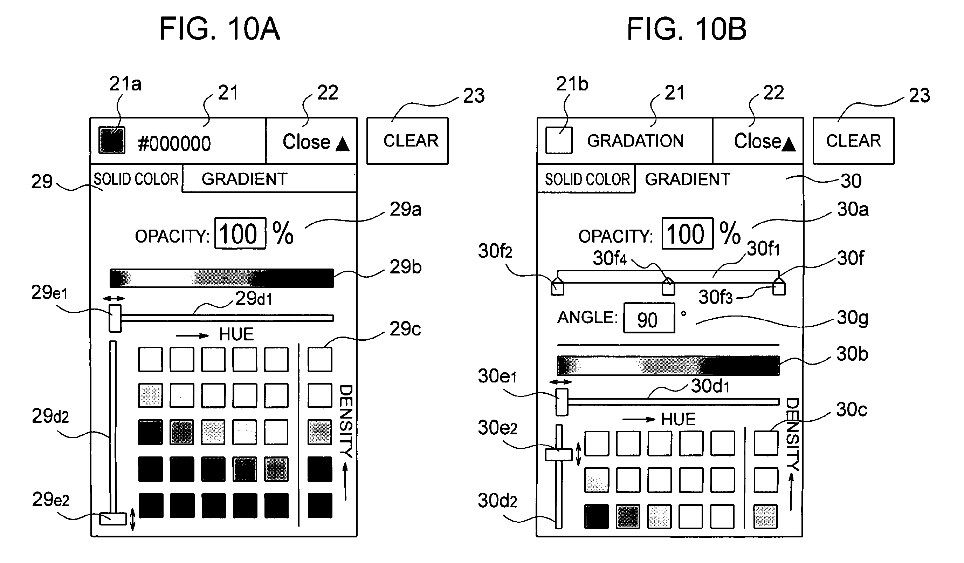

FIG 10A is a view showing one specific example of the "COLOR" tab 29 in FIG 9, wherein reference numeral 21a represents a setting color display portion, 29a represents an opacity specifying portion, 29b represents a hue display column, 29c represents a color palette, $29d_1$ represents a hue specifying portion, $29d_2$ represents a density specifying portion, and $29e_1$ and $29e_2$ each represent a slider.

In FIG 10A, the "COLOR" tab 29 comprises the opacity specifying portion 29a indicative of the opacity of a color currently set in an "element" (e.g., "element" of the "CHANGE TIME LIMIT" button $5_2$), the color palette 29c for color selection, the color palette 29c showing a list of colors at various configurable densities, and the hue display column 29b indicative of the types of colors contained in the color palette 29c.

In the color palette 29c, with the horizontal axis as the hue (types of colors) coordinate axis, the colors of various kinds of hues are arranged along the hue coordinate axis while with the vertical axis as the density coordinate axis, the colors of the same hue are arranged at different densities along this density coordinate axis. By selecting a desired color in the color palette 29c by the operation of the cursor 11, the color of an "element" relevant to the "COLOR" tab 29 is set to this selected color. At the same time, the color displayed in the setting color display portion 21a of the "selection color display" column 21 (FIG 8) is also changed to this selected color.

On the upper side of the color palette 29c, the hue specifying portion $29d_1$ for changing the hue to be selected is provided, and the slider $29e_1$ for selecting a hue is provided in the hue specifying portion $29d_1$. By moving the slider $29e_1$ in the horizontal direction along the hue coordinate axis, the color with a hue facing the slider $29e_1$ can be selected. Moreover, on the left side of the color palette 29c, the density specifying portion $29d_2$ for changing the density of a color is provided, and the slider $29e_2$ for selecting the density is provided in the density specifying portion $29d_2$. By moving the slider $29e_2$ in the vertical direction along the density coordinate axis, a color with a density facing the slider $29e_2$ can be selected. When the slider $29e_1$ is moved in the horizontal direction, the hue to be selected varies accordingly and at the same time the color to be displayed in the setting color display portion 21a of the "selection color display" column 21 changes, while when the slider $29e_2$ is moved in the vertical direction, the density of a hue selected by the slider $29e_1$ varies accordingly and at the same time the density of a color displayed in the setting color display portion 21a of the "selection color display" column 21 varies.

Accordingly, when the slider $29e_1$ is set at a position facing a desired hue and the slider $29e_2$ is set at a position facing a desired density, a color with a desired hue and a desired density is selected and such a color with a desired hue and a desired density is displayed in the setting color display portion 21a of the "selection color display" column 21.

FIG 10B is a view showing one specific example of the "GRADATION" tab 30 in FIG 9, wherein reference numeral 21b represents a setting gradation display portion, 30a represents an opacity specifying portion, 30b represents a hue display column, 30c represents a color palette, $30d_1$ represents a hue specifying portion, $30d_2$ represents a density specifying portion, $30e_1$ and $30e_2$ each represent a slider, 30f represents a gradation setting portion, $30f_1$ represents a gradation bar, $30f_2$ and $30f_3$ each represent an end mark, $30f_4$ represents a hue/density specifying mark, and 30g represents a gradation direction setting column.

In this view, the "gradation" tab 30 is provided with the opacity specifying portion 30a, the hue display column 30b, and the color palette 30c, as with the "color" tab 29, and is furthermore provided with the gradation setting portion 30f and the gradation direction setting column 30g. Here, the color palette 30c is for selection of a color in setting the gradation.

The gradation direction specifying column 30g makes it possible to arbitrarily switch the direction of a gradation (the direction of changes in a color or density), wherein a color or its density is successively changed in the horizontal direction when this direction is at an angle 0°, a color or its density is successively changed in the vertical direction when this direction is at an angle 90°, and a color or its density is successively changed in an oblique direction when this direction is at an angle 45°. For example, when the direction of a gradation is set in the background 5b (FIG 4) in the "CHANGE TIME LIMIT" button $5_2$, as shown in FIG 9 the "GRADATION" tab 30 is selected with the color selector 19b of the "BUTTON'S BACKGROUND COLOR" and then the gradation direction setting column 30g in the "GRADATION" tab 30 (FIG 10B) may be operated so as to set an angle corresponding to this direction. Here, when the direction of a gradation is specified to the angle 0°, the color and its density of the background 5b within the "CHANGE TIME LIMIT" button $5_2$ change in the horizontal direction and is displayed, and when the direction of gradation is specified to the angle 90°, the color and its density of the background 5b in the "CHANGE TIME LIMIT" button $5_2$ changes in the vertical direction and is displayed, and when the direction of gradation is specified to the angle 45°, the color and its density of the background 5b in the "CHANGE TIME LIMIT" button $5_2$ changes in an oblique direction and is displayed,

The gradation setting portion 30f comprises the gradation bar $30f_1$ indicative of a gradation, the end marks $30f_2$ and $30f_3$ each indicative of the end of the gradation bar $30f_1$, and the hue/density specifying mark $30f_4$ for specifying a color or a density between the ends of the gradation bar $30f_1$. The hue/density specifying mark $30f_4$ can change its position along the gradation bar $30f_1$ and also can be deleted, and furthermore the deleted hue/density specifying mark $30f_4$ can be added again.

At a position indicated by the end marks $30f_2$, $30f_3$ or hue/density specifying mark $30f_4$ in the gradation bar $30f_1$, a color can be specified using an operation method similar to the color specification method in the "COLOR" tab 29. That is, one of the end mark $30f_2$ and $30f_3$ is designated (by touching the cursor 11) and then a hue with a desired density is selected using the color palette 30c, and thereby a color with this selected density is set at the end on the end mark $30f_2$ or $30f_3$ side of the gradation bar $30f_1$ and further, the other one of the end mark $30f_2$ or $30f_3$ is designated and then a hue with a desired density is selected with the color palette 30c, and thereby a color with this selected density is set at the end on the end mark $30f_2$ or $30f_3$ side of the gradation bar $30f_1$. Accordingly, a gradation from a color with a density set at one end to a color with a density set at the other end is set in the gradation bar $30f_1$. At the same time, this color gradation is displayed in the setting gradation display portion 21b of the "COLOR" display column 21.

Note that, with regard to the color gradation set in the gradation bar $30f_1$, here, on the color palette 30c, a color gradation comprising a sequence of colors along a line connecting a color specified with respect to one end of the gradation bar $30f_1$ (e.g., the end on the end mark $30f_2$ side) and a color specified with respect to the other end (e.g., the end on the end mark $30f_3$ side) is displayed. Accordingly, when these two specified colors are colors present on one line parallel to the density coordinate axis of the color palette 30c, a color gradation where the density of the same color changes is obtained in the gradation bar $30f_1$, while when these two specified colors are colors present on one line not parallel to the density coordinate axis, a color gradation where at least the color changes is obtained.

Here, if the angle of the gradation direction specifying column 30g is 90° and the direction of the gradation in an "element", such as the layout 6, is the vertical direction (lengthwise direction), then a color with the density and hue set at the end on the end mark $30f_1$ side of the gradation bar $30f_1$ indicates a color at the lower end of this "element", while a color with the density and hue set at the end on the other end mark $30f_3$ side of the gradation bar $30f_1$ indicates a color at the upper end of this "element". As a result, a gradation between the colors with these densities and hues are represented in the gradation bar $30f_1$, and with this gradation, this "element" is displayed in the gradation of hue/density. Moreover, if the angle of the gradation direction specifying column 30g is 0° and the direction of gradation in an "element", such as the layout 6, is the horizontal direction (lateral direction), then a color with the density and hue set at the end on the end mark $30f_1$ side of the gradation bar $30f_1$ indicates a color at the left end of this "element", while a color with the density and hue set at the end on the other end mark $30f_3$ side of the gradation bar $30f_1$ indicates a color at the right end of this "element". That is, a gradation between the colors with these densities and hues is represented in the gradation bar $30f_1$, and with this gradation, this "element" is displayed in the gradation of hue/density. If the angle of the gradation direction specifying column 30g is other than 0° or 90° and the direction of a gradation in an "element", such as the layout 6, is a diagonal direction, then a color with the density and hue set at the end on the end mark $30f_2$ side of the gradation bar $30f_1$ indicates a color on the lower left corner side of this "element", while a color with the density and hue set at the end on the other end mark $30f_3$ side of the gradation bar $30f_1$ indicates a color on the upper right corner side of this "element". That is, a gradation between the colors with these densities and hues are represented in the gradation bar $30f_1$, and with this gradation, this "element" is displayed in the gradation of hue/ density.

The hue/density specifying mark $30f_4$ makes it possible to specify a color with a desired density and hue in the gradation bar $30f_1$. The hue/density specifying mark 30f4 is designated and a color with a desired density and hue is selected with the color palette 30c and thereby the color with the selected density and hue is set at a position of the hue/ density specifying mark $30f_4$ of the gradation bar $30f_1$. In this case, between the end on one end mark $30f_2$ side of the gradation bar $30f_1$ and a position facing the hue/density specifying mark $30f_4$, a gradation between the colors set to these densities and hue is set. Furthermore, between a position facing the hue/density specifying mark $30f_4$ and the end on the other end mark $30f_2$ side of the gradation bar $30f_1$, a gradation between colors set to these densities and hue is set. For example, if a first color C and a second color C each having different densities D1 and D2 and the same hue are set by the end marks $30f_2$, $30f_3$, and a third color C having the same hue as the first and second colors C and a strong density D3 (>D1, D2) is set by the hue/density specifying mark $30f_4$, then in the gradation bar $30f_1$, a gradation wherein from the left side, the density varies from D1 to D3 and furthermore varies from D3 to D2 is set. Then, this gradation is set to the relevant "element".

FIGS. 10A and 10B described above show a configuration of the "COLOR" tab 29 and the "GRADATION" tab 30, respectively. In these "COLOR" tab 29 and "GRADATION" tab 30, an unselectable color (hereinafter, when referring to a "color", the "color" shall comprise a hue and a density) and a color not recommended to select are set in these color palettes 29c and 30c based on the luminance contrast ratio described above.

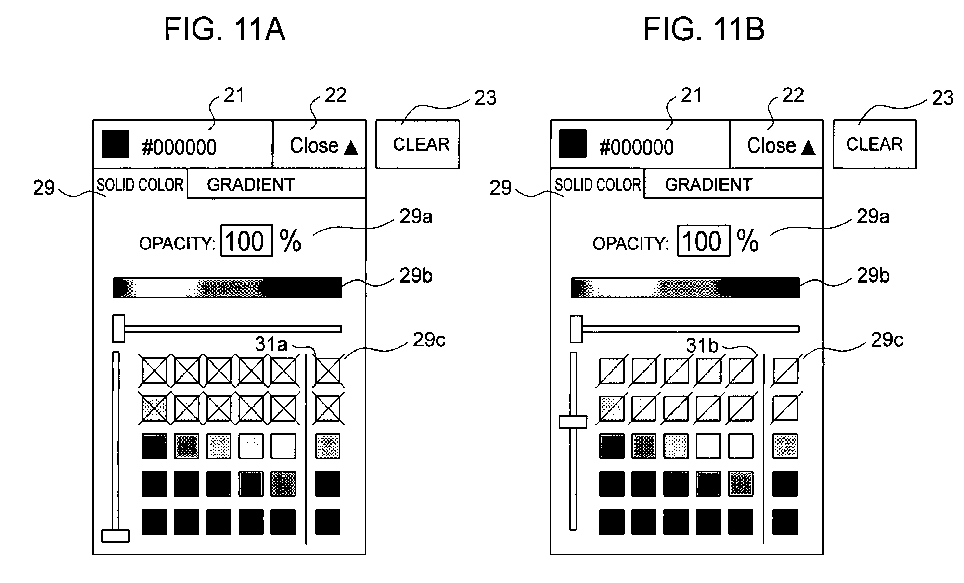

FIG 11 is a view showing a display example in the color palette of such a "COLOR" tab 29, wherein reference numeral 31a represents a "x" mark and 31b represents a "/" mark, and the same reference numerals are given to portions corresponding to those of FIG 10 to omit the duplicated description.

As described above, there is the specification that says the luminance contrast ratio shall be at least 4.5:1 between an element "text/symbol" and other element adjacent thereto while between elements other than the element "text/symbol", the luminance contrast ratio shall be at least 1.7:1. In the first embodiment, a color not satisfying this specification is displayed in the color palette of the "COLOR" tab 29 or "GRADATION" tab 30.

FIG 11A is a view showing one specific example of the display state of the color palette 29c with respect to the element "text/symbol" and other element adjacent thereto, taking the "COLOR" tab 29 as an example. Here, the "X" mark 31a is attached to the color whose luminance contrast ratio is less than 4.5:1 between these "elements" so as to disenable this color from being selected.

In the color customization operation screen 17a shown in FIG 9, in the color selector 19a of the text 5a of the button (FIG 4) in the selected "CHANGE TIME LIMIT" button $5_2$ (FIG. 6), colors attached with the "X" mark 31a in the color palette 29c of the "COLOR" tab 29 are shown. That is, in the "CHANGE TIME LIMIT" button $5_2$, in the text 5a and in the background 5b of this text on which this text is overlaid and displayed, the "X" mark 31a is attached to the color of the text 5a whose luminance contrast ratio becomes less than 4.5:1 with respect to the color of the background 5b of this text. Accordingly, in the color customization operation screen 17a shown in FIG 9, colors attached with the "X" mark 31a cannot be selected in the color palette 29c. By selecting a color not attached with the "X" mark 31a in the color palette 29c, the text 5a is colored so that a user can clearly view the text 5a with respect to the color of the background 5b of this text, on which this text is overlaid and displayed, in the content screen 2 (FIG 4).

FIG 11B is a view showing one specific example of the display state of the color palette 29c with respect to two elements other than the "text/symbol", taking the "COLOR" tab 29 as an example. Here, the "/" mark 31b is attached to a color, whose luminance contrast ratio is less than 1.7:1 between these "elements" so that this color is not recommended (although it can be selected) because the luminance contrast ratio between these "elements" becomes less than 1.7:1 if this color is selected.

In the color customization operation screen 17a shown in FIG 9, in the color selector 19c of the frame line 5c of the button (FIG 4) in the selected "CHANGE TIME LIMIT button $5_2$ (FIG 6), colors attached with the "/" mark 31b in the color palette 29c of the "COLOR" tab 29 are shown. That is, in the "CHANGE TIME LIMIT" button $5_2$, in the frame line 5c and in the background 5b of a text displayed adjacent to the frame line 5c, the "/" mark 31b is attached to a color of the frame line 5c whose luminance contrast ratio becomes less than 1.7:1 with respect to the color of the background 5b of this text. Accordingly, in the color customization operation screen 17a shown in FIG 9, the colors attached with the "/" mark 31b in the color palette 29c of the color selector 19c of the button's frame line color are not recommended to select. By selecting a color not attached with the "/" mark 31b in this color palette 29c, the frame line 5c of the button is colored so that a user can clearly view the frame line 5c of the button with respect to the color of the background 5b of this text displayed adjacent thereto, in the content screen 2 (FIG 4).

Here, in the color customization operation screen 17a shown in FIG 9, the "CLEAR" button 23 is provided for each of the color selectors 19/20, wherein upon depression of the "CLEAR" button 23, the selection of a color or the selection of a gradation is canceled in the color selectors 19/20 in which the "CLEAR" button 23 is depressed. That is, this results in a sate where neither any color nor any gradation is selected. For example, in FIG 11A, upon depression of the "CLEAR" button 23, a color then being selected in the color selector 19a is canceled, so that the color of the text 5a of the button of the "CHANGE TIME LIMIT" button $5_2$ then being displayed will disappear and a color then being displayed in the "COLOR" column 21 will also disappear. Moreover, in FIG 11B, upon depression of the "CLEAR" button 23, a gradation then being set in the color selector 19b is canceled, so that a gradation in the background 5b of the button of the "CHANGE TIME LIMIT" button $5_2$ then being displayed will disappear and a gradation then being displayed in the "color" column 21 will also disappear.

At the same time, a color attached with the "X" mark 31a or the "/" mark 31b shown in FIG 11 will change because the selected color or gradation disappears. For example, in FIG 9, when the "CLEAR" button 23 is depressed in the color selector 19b with respect to the background 5b of the button of the "CHANGE TIME LIMIT" button $5_2$, and its gradation is canceled, then in the color selector 19a with respect to the text 5a of the button of the "CHANGE TIME LIMIT" button $5_2$, a color, which has been attached with the "X" mark 31a because it cannot be selected due to the gradation so far set in the color selector 19b, may become selectable, and with respect to such a color the "X" mark 31a is removed. Note that, in FIG 9, the "CLEAR" button 23 is depressed in the color selector 19a and a color then being selected in the text 5a of the button of the "CHANGE TIME LIMIT" button $5_2$ is canceled. Then, in the color selector 19a, when a gradation is set in the color selector 19b with respect to the background 5b of the button of the "CHANGE TIME LIMIT" button $5_2$ and when a color that cannot be selected with respect to this gradation is already attached with the "X" mark 31a there is a color whose "X" mark 31a is to be deleted and also a color whose "X" mark 31a remains set even if the "X" button 23 is depressed in the color selector 19a. Such colors in the color selector 19a are the colors that cannot be selected even if any of them is selected in the color selector 19b.

Note that, the above-described point is also true of the case where the "X" mark 31a is attached to a color in the color selector 19b due to color selection in the color selector 19a, and here a color attached with the "X" mark 31a may remain even if the "clear" button 23 is depressed in the color selector 19b. This is also true of a color attached with the "/" mark 31b.

In the color customization operation screen 17a shown in FIG 9, the color selector display area 20 of the layout 6 shows that only the color selector 20b of the backgrounds 6a and 6b of the layout 6 (FIG 4) has been expanded and the "X" mark 31a has been set in the color palette 29c (FIG. 11) of the "COLOR" tab 29. Here, although not expanded, with respect to a color in the color palette in the color selector 20a of the texts 6a and 6b of the layout 6, the "X" mark 31a is attached to a color whose luminance contrast ratio becomes less than 4.5:1.

Moreover, the frame line 5c of the "CHANGE TIME LIMIT" button $5_2$ is adjacent to the background of the layout 6. For this reason, these colors are also set so that the luminance contrast ratio thereof is at least 1.7:1. In this case, since the "CHANGE TIME LIMIT" button $5_2$ is the one specified as described above, the colors selectable in the layout 6 with respect to the frame line 5c are limited. That is, with respect to the colors not attached with the "/" mark 31a in the color palette 29c of the frame line 5c of the "CHANGE TIME LIMIT" button $5_2$, the "/" mark 31a is attached also to a color whose luminance contrast ratio becomes less than 1.7:1 in the color palette 29c in the color selector 20b of the background of the layout 6.

As described above, when the color selector of an "element" requiring the customization of a color in the color customization operation screen 17 shown in FIG 8 is designated, then the color customization operation screen 17a shown in FIG 9, which is the expansion of the color selector of the designated "element", will be displayed (Step S108 of FIG 3).

In this case, as described above, for each of a designated "component" and one or more other components adjacent thereto (i.e., other component on which this "component" is overlaid or which is overlaid on this "component"), the color selector of its "element" is expanded and with the use of the color palette of this color selector a color is selected or a gradation is selected. Thereby, the relevant "element" can be presented with the selected color or selected gradation. Moreover, in the respective color palettes, in order for the relevant "element" to have a required luminance contrast ratio with respect to an "element" adjacent thereto and be easily viewed, to a color the contrast ratio of which is less than this required luminance contrast ratio and which is not easily viewed, the "X" mark 31a or "/" mark 31b indicative of this fact is attached, so that this color cannot be selected or is disenabled to be selected.

When the content screen 2 (FIG 4) is displayed, if, as described above, a "component" is designated, and with respect to this "component" or other "component" adjacent thereto, color customization is performed using the color selector of an "element" of either of these components, then the state of the color palette of the color selector of the respective "elements" (the state where the "X" mark 31a or the "/" mark 31b is attached) is held as it is. Also when the same content screen 2 is displayed next time, the state of the color palette of the color selector of the respective "elements" will be held as it is. In this case, if the "CLEAR" buttons 23 of any of the color selectors is not depressed, the state of the color palette of this color selector of each "element" will not change.

However, if the "CLEAR" button 23 of the color selector of either of the "elements" is depressed, then in response to this, in the color palette of the color selector of other "element", a color, which is attached with the "X" mark 31a and is disenabled to be selected, or a color, which is attached with the "/" mark 31b and is not recommended to select, may change according to the luminance contrast ratio to be applied.

In the state where the color customization operation screen 17a shown in FIG 9 is displayed (Step S108 of FIG. 3), if there is an "element" desired to be subjected to color customization ("Yes" in Step S109 of FIG 3) but a color desired to customize of this "element" is selectable (when neither "X" mark 31a nor "/" mark 31b is attached to this element) in the color palette of the color selector of this "element" ("Yes" in Step S110 of FIG 3), then by selecting a desired color using this color palette as described above, this "element" is displayed with this color (Step S111 of FIG 3).

In contrast, when a desired color is unselectable (when the "X" mark 31b is attached) or is not recommended to select (when the "/" mark 31a is attached) ("No" in Step S110 of FIG. 3), then first, the "CLEAR" button is depressed in the color selector of other "element" adjacent to an "element" relevant to the color selector having this color palette and the color of this "element" is reset (Step S112 of FIG 3). Next, in such a state it is determined whether or not the desired color is selectable in this pallet (Step S110 of FIG. 3). Nevertheless, when the desired color is unselectable ("No" in Step S110 of FIG. 3), then in the color selector of yet other element adjacent to this other "element", the "CLEAR" button 23 is depressed (Step S112 of FIG. 3). When such processings are performed sequentially and the "X" mark 31a is canceled with respect to the desired color and the desired color becomes selectable ("Yes" in Step S110 of FIG 3), the desired color can be selected (Step S111 of FIG 3). Accordingly, the color of this "element" can be customized into the desired color (Step S111 of FIG 3).

Here, now, assume that the color of the "text" 5a (FIG 4), which is the "element" of the component "CHANGE TIME LIMIT" button $5_2$ (FIG 4) in the color customization operation screen 17a shown in FIG 9, is desired to customize but in the color palette 29c of the color selector 19a (FIG 10A) with respect to the "text" 5a, the "X" mark 31a disabling customization is attached to this color intended to customize. Then, by depressing the "CLEAR" button 23 of the color selector 19b of the "background" 5b of the "CHANGE TIME LIMIT" button $5_2$ adjacent to the "text" 5a of the "CHANGE TIME LIMIT" button $5_2$, the gradation set in the color selector 19b is canceled. Accordingly, if the color, which is desired to customize in the color selector 19a with respect to the "text" 5a of the "CHANGE TIME LIMIT" button $5_2$, becomes selectable due to the cancellation of the "X" mark 31a, then this color can be selected.

Then, by selecting the desired color from the color palette 29c by the operation of the cursor 11, the text 5a of the "CHANGE TIME LIMIT" button $5_2$ selected in the content screen 2 (FIG 6) will be displayed with this color. This results in a presentation in the depressed-component area 16 in the preview area 24, and the text 5a of the "CHANGE TIME LIMIT" button $5_2$ that is the relevant "element" in the component area 16 is presented with this selected color.

At this time, for example, the preceding color of the "background" 5b that is the "element" of the "CHANGE TIME LIMIT" button $5_2$ may be attached with the "X" mark 31a in the color palette 29c in its color selector 19b. However, such a state will be kept as it is, and the fact the "X" mark 31a is attached to this color in the color palette 29c indicates that the currently set color is a color that does not satisfy the relative contrast ratio with respect to the "text" 5a of the "CHANGE TIME LIMIT" button $5_2$.

Note that, if with respect to a certain element, for example, the "background" 5b of the "CHANGE TIME LIMIT" button $5_2$, the "CLEAR" button 23 is depressed as described above and thereafter as a result of selecting a desired color, the color currently set in the "text" 5a of the "CHANGE TIME LIMIT" button $5_2$ is attached with the "X" mark 31a and becomes an unselectable color, then such a state will be kept as it is unless the above-described processing is performed. Also in this case, since the "X" mark 31a is attached to this color in the color palette of the color selector 19a, it can be confirmed that this color is an unselectable color. Note that, when the "CLEAR ALL" button 28 is designated in the color customization operation screen 17a shown in FIG 9, the currently set colors are canceled in all the color selectors 19/20 (here, all the color selectors 19a-19c and 20a-20c) displayed in the color customization operation screen 17a, and the colors of the "CHANGE TIME LIMIT" button $5_2$ and layout 6 corresponding thereto are deleted (accordingly, no color is displayed in the "color display" column 21 (FIG 10)) and at the same time neither "X" mark 31a nor "/" mark 31b is attached in their color palettes.

In such a state, for example, if the text color of the "text of a button" is selected in the color palette 29c of the color selector 19a, then the color of the "text" 5a of the "CHANGE TIME LIMIT" button $5_2$ is set and at the same time, the "X" mark 31a is attached to an unselectable color and the "/" mark 31b is attached to a color not recommended to select, respectively, in the color palettes 29c and 30c in the other color selectors 19b, 19c, 20a-20c, as described above. Accordingly, the above colors can be designated in the respective color palettes 29c and 30c ("Yes" in Step S110 of FIG. 3).

Here, if a color of the "text of a button" 5a that is one element of the component "CHANGE TIME LIMIT" button $5_2$ is set, the "X" mark 31a is attached to an unselectable color and the "/" mark 31b is attached to a color not recommended to select, respectively, in the color palettes of all the color selectors currently displayed in the color customization operation screen 17a. That is, if the color of the "text of a button" 5b is set, an unselectable color with respect to the "BUTTON'S BACKGROUND" 5b adjacent thereto can be calculated and therefore the "X" mark 31a is attached to the target color. When a selectable color with respect to the "text of a button" 5b is determined, a color not recommended to select with respect to the "BUTTON'S FRAME LINE" 5c adjacent thereto can be calculated and therefore the "/" mark 31b is attached to the target color. In this manner, if one color is set by sequentially performing calculation in the order of the "elements" adjacent thereto, the "X" mark 31a and the "/" mark 31b can be attached, respectively, in all the color palettes. Here, for example, depending on which color is selected among the selectable colors with respect to the "BUTTON'S BACKGROUND" 5b, a color not recommended to select in the "BUTTON'S FRAME LINE" 5c may change. In the first embodiment, whenever any color is selected in the "BUTTON'S BACKGROUND" 5b, the "/" mark 31b indicating not to recommend to select shall be attached only to the color cell relevant to a "color not recommended to select" as the color of the "BUTTON'S FRAME LINE" 5c.

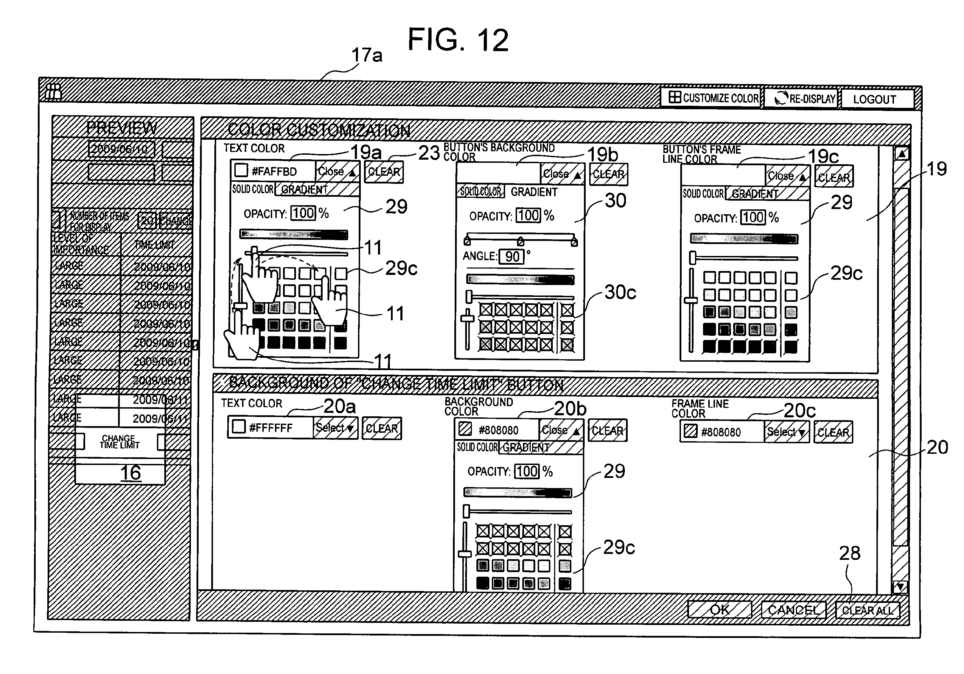

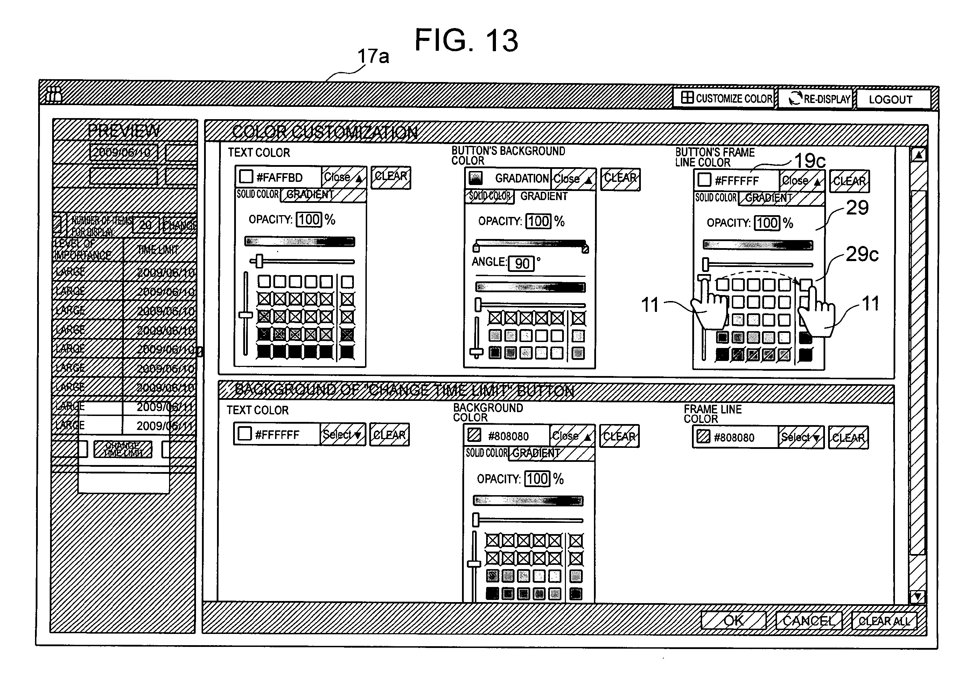

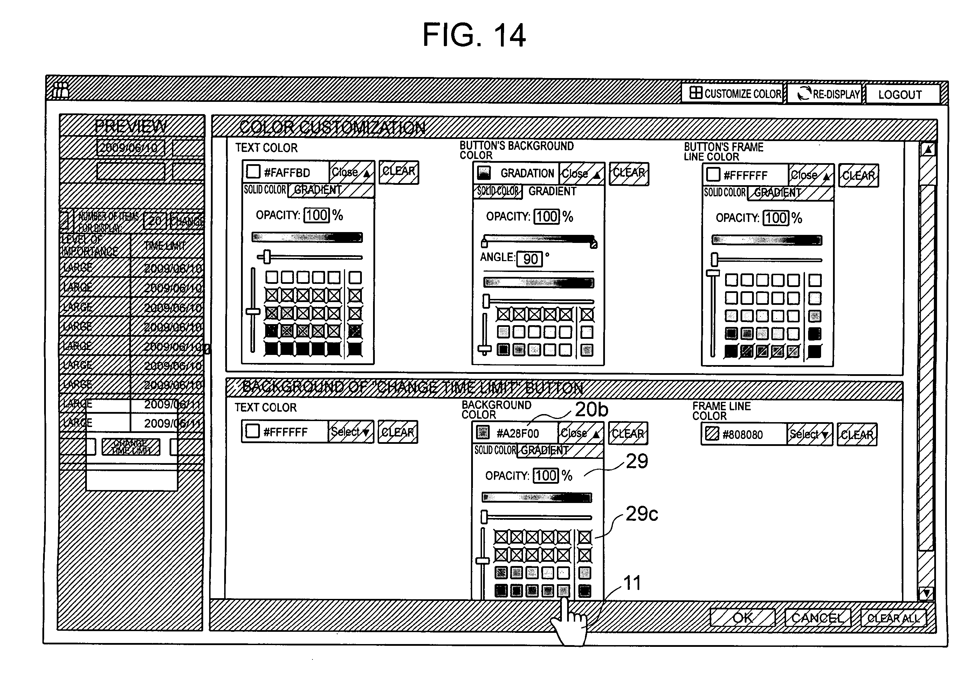

FIG 12 shows an operation to set a color of the "text" 5a of the "CHANGE TIME LIMIT" button $5_2$ with the use of the "COLOR" tab 29, FIG 13 shows an operation to set a color of the "FRAME LINE" 5c of the "CHANGE TIME LIMIT" button $5_2$ in the color selector 19c in which the "color" tab 29 is selected, and FIG 14 shows an operation to set a color of the "BACKGROUND" 6a of the layout 6 in the color selector 20b in which the "COLOR" tab 29 is selected. In any of these views, as with the above-described operation to set a color of the "text" 5a of the "CHANGE TIME LIMIT" button $5_2$, the color of its "element" can be determined by performing a color selection operation in the color palette 29c of the "COLOR" tab 29. Then, the "element" that has been subjected to color customization in this manner is colored with a relevant color in the depressed-component area 16 of the preview area 24.

Note that, in FIG 13 and FIG 14, the same reference numerals are given to portions corresponding to those of FIG. 12 to omit the duplicated description, while in any of these views, reference numerals are given only to portions to be described.

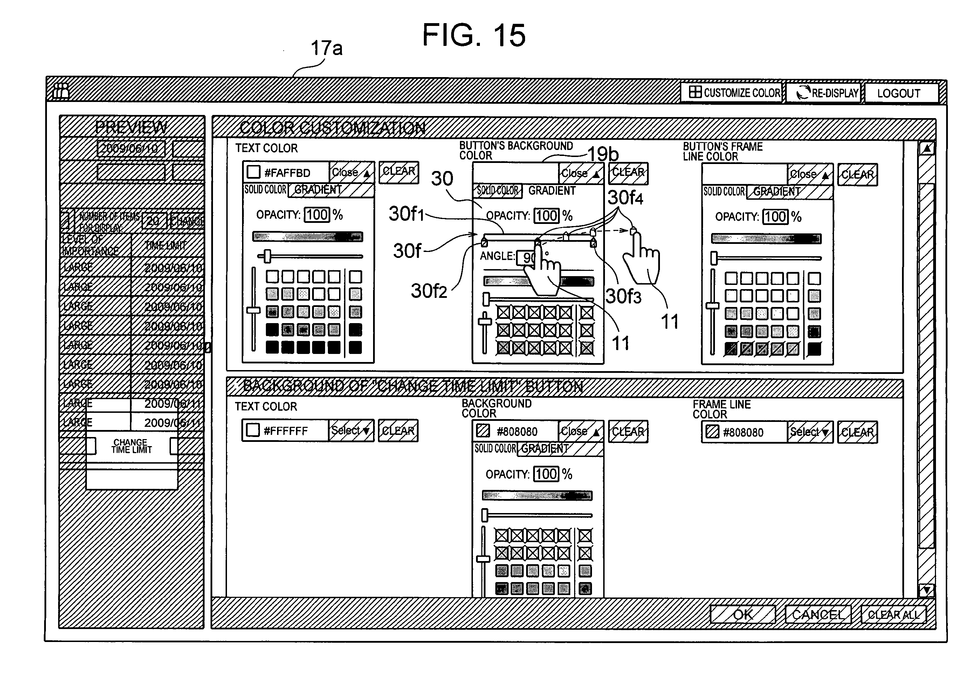

FIG 15 is a view showing an example of the adjustment operation of the gradation setting portion in the color customization operation screen 17a, where the same reference numerals are given to portions corresponding to those of the above-described views to omit the duplicated description. In FIG 15, reference numerals are given only to portions required in description.

In this view, the hue/density specifying mark $30f_4$ in the gradation setting portion 30f in the "GRADATION" tab 30 can be removed. In order to do this, the hue/density specifying mark $30f_4$ may be designated by the cursor 11 and dragged and dropped to the outside of the area of the color selector and thereby the hue/density specifying mark $30f_4$ will be placed at a position outside the gradation setting portion 30f. In this state, the hue/density specifying mark $30f_4$ cannot function with respect to the gradation setting portion 30f, and does not function with respect to the gradation setting portion 30f at this time. Accordingly, in the gradation bar $30f_1$, a gradation from a color on the end mark 30f2 side to a color on the end mark $30f_3$ side is displayed.

When the removed hue/density specifying mark $30f_4$ is added and used again, by double-clicking near the gradation bar $30f_1$ of the gradation setting portion 30f the hue/density specifying mark $30f_4$ will be newly added at a position on the lower side of the gradation bar $30f_1$ and nearest to the clicked point.

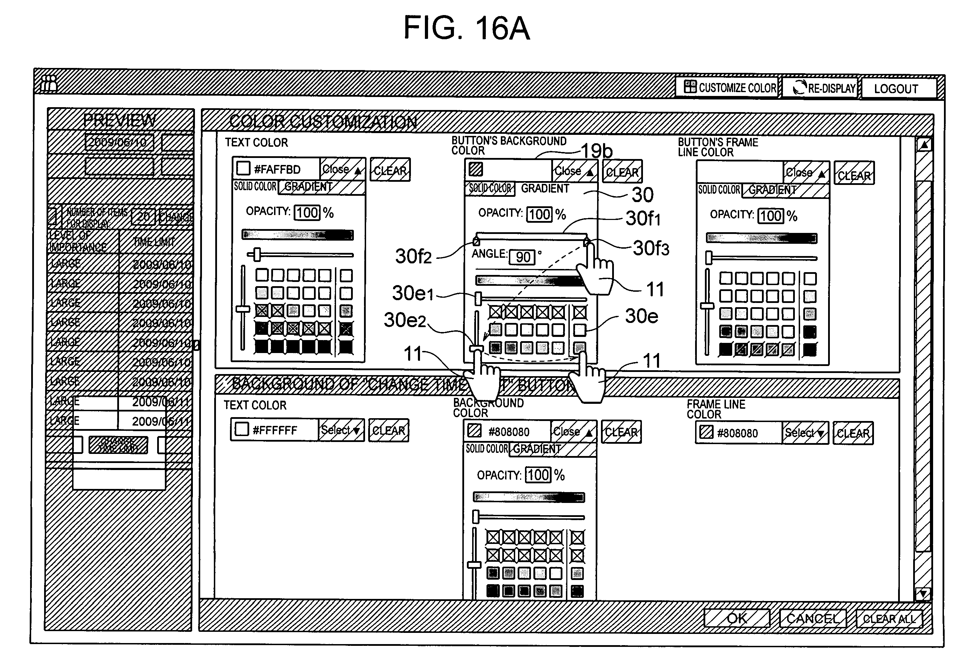

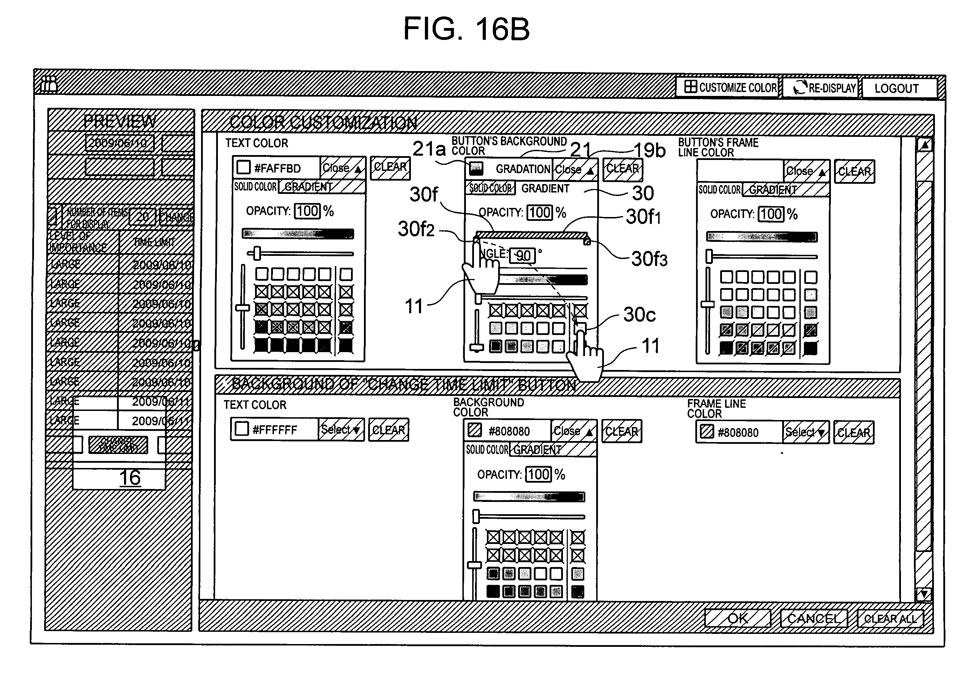

FIGS. 16A and 16B are views showing one specific example of the gradation operation in the color customization operation screen 17a shown in FIG 15, wherein FIG 16A shows the color setting operation on one end side of the gradation bar $30f_1$ while FIG 16B shows the color setting operation on the other end side of the gradation bar $30f_1$. Here, the same reference numerals are given to portions corresponding to those of the above-described views to omit the duplicated description. In FIG 15, reference numerals are given only to portions required in description.

In FIG 16A, when the end mark $30f_3$ on one end side of the gradation bar $30f_1$ in the gradation setting portion 30f in the "gradation" tab 30 is clicked with the cursor 11 and next, a desired color is designated with the color palette 30c, then the color of the end on the end mark $30f_3$ side of the gradation bar $30f_1$ is set.

Next, in FIG 16B, when the end mark $30f_2$ on the other end side of the gradation bar $30f_1$ in the gradation setting portion 30f is clicked with the cursor 11 and next, a desired color is designated with the color palette 30c, then the color of the end on the end mark $30f_2$ side of the gradation bar $30f_1$ is set.

As a result, a gradation from a color set at one end in the gradation bar $30f_1$ to a color set at the other end is set. At the same time, this set gradation is displayed in the setting color display portion 21a of the "selection color display" column 21 in the color selector 19b.

Note that, the above-described setting of a color or gradation in the "COLOR" tab 29 or "GRADATION" tab 30 is performed in Step S111 in FIG 3.

Incidentally, in the color customization operation screen 17a shown in FIG 9, the depressed-component area 16 for presenting a "component" that is subjected to color customization by an operation of the color selector display screen 18 (FIG 8) is displayed in the preview area 24, as described above, and the "component" displayed in the depressed-component area 16 is the target component for color customization.

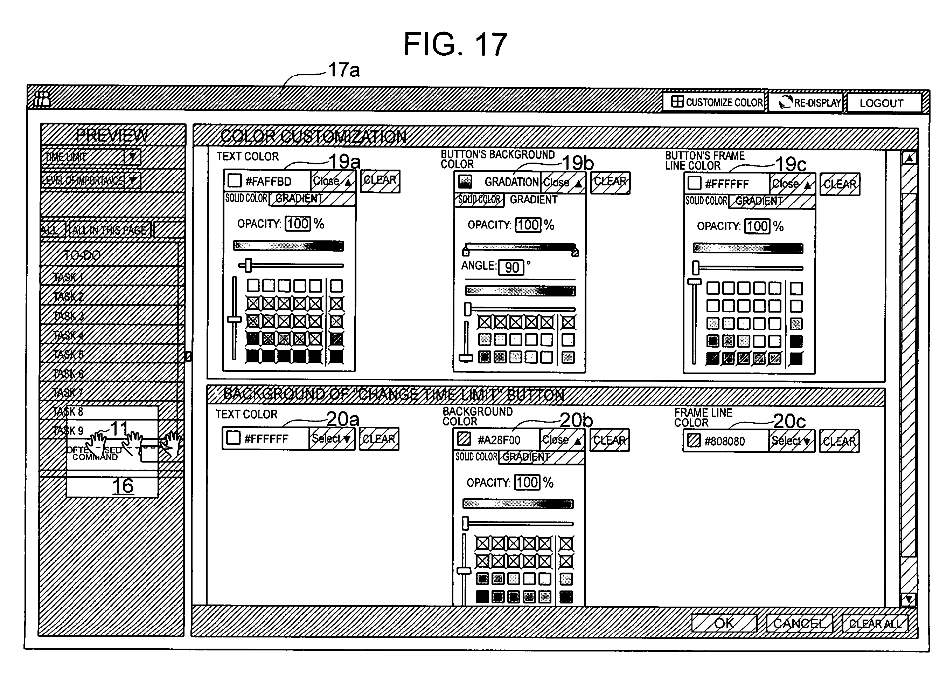

In such a color customization operation screen 17a shown in FIG 9, if the cursor 11 is moved within the depressed-component area 16 in the preview area 24 and as shown in FIG 17 (note that, in FIG 17, the same reference numerals are given to portions corresponding to those of FIG. 9 to omit the duplicated description. In FIG 17 reference numerals are given only to the required portions) and the cursor 11 is dragged and moved in a predetermined direction by using a non-illustrated mouse, then the content screen 2 (FIG 4) displayed in the review area 24 will move in this direction. At this time, the position of the depressed-component area 16 is fixed. For this reason, the area displayed within the depressed-component area 16 in the content screen 2 (the portion previewed within the depressed-component area 16 in the content screen 2) changes. Thereby, the area previewed in the depressed-component area 16 in the content screen 2 can be changed and the display content in the area other than the "component" serving as the target for color customization can be viewed.

Note that, the content screen 2 can be also moved by focusing any position in the preview area 24 with a keyboard and operating a cross key of the keyboard, and thereby an area positioned in the depressed-component area 16 in the content screen 2 can be also changed. Also with this, the area previewed in the depressed-component area 16 in the content screen 2 can be changed as with the above described example.

Moreover, as described above, the function of the cursor 11 to change the area previewed in the content screen 2 is performed when the cursor 11 is present in the preview area 24, and once the cursor 11 is moved to the outside of the preview area 24, the content screen 2 in the preview area 24 will not move any more by the drag operation. Accordingly, in order to largely move the content screen 2 and cause other "component" far away in the content screen 2 to be a target to be previewed, the following operations may be repeated: (1) the cursor 11 is largely moved within the preview area 24; (2) thereafter the cursor 11 is returned to the original position within the depressed-component area 16; and (3) the cursor 11 is dragged and moved in the same direction again.

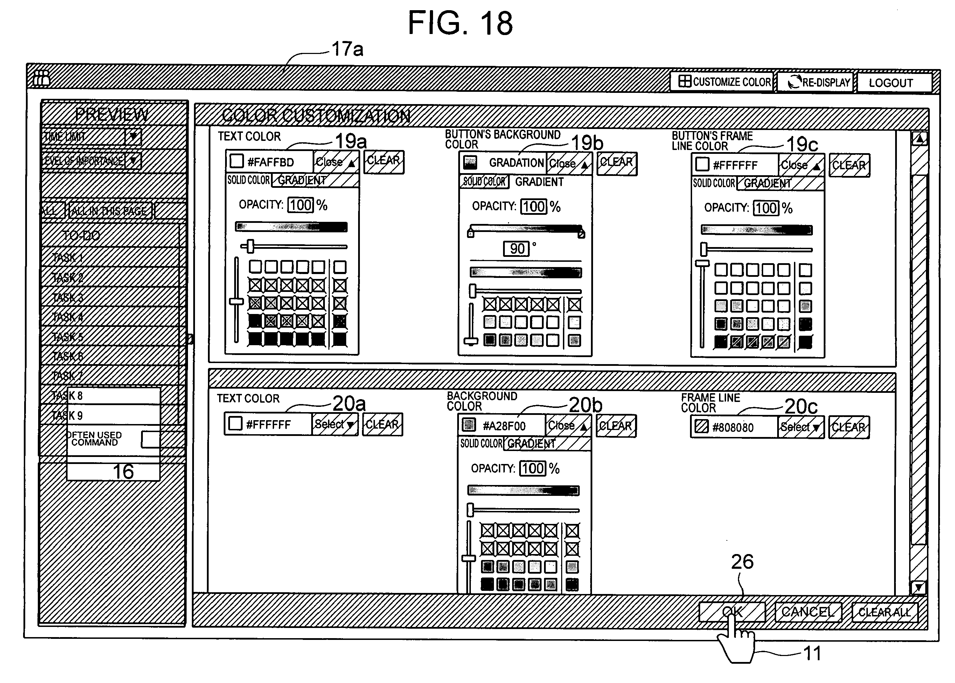

When the color customization operation of all the "elements" requiring color customization in the color customization operation screen 17a shown in FIG 9 is completed and there is no "element" requiring the color customization operation and the result of the color customization is confirmed with the "CHANGE TIME LIMIT" button $5_2$ that is the depressed component in the depressed-component area 16 in the preview area 24 ("No" in Step S109 of FIG 3), and the "OK" button 26 is depressed in the color customization operation screen 17a as shown in FIG 18 (Step S113 of FIG 3), then a selection screen for selecting a "component" that is overlaid on the original content screen 2 and serves as the target for color customization is displayed.

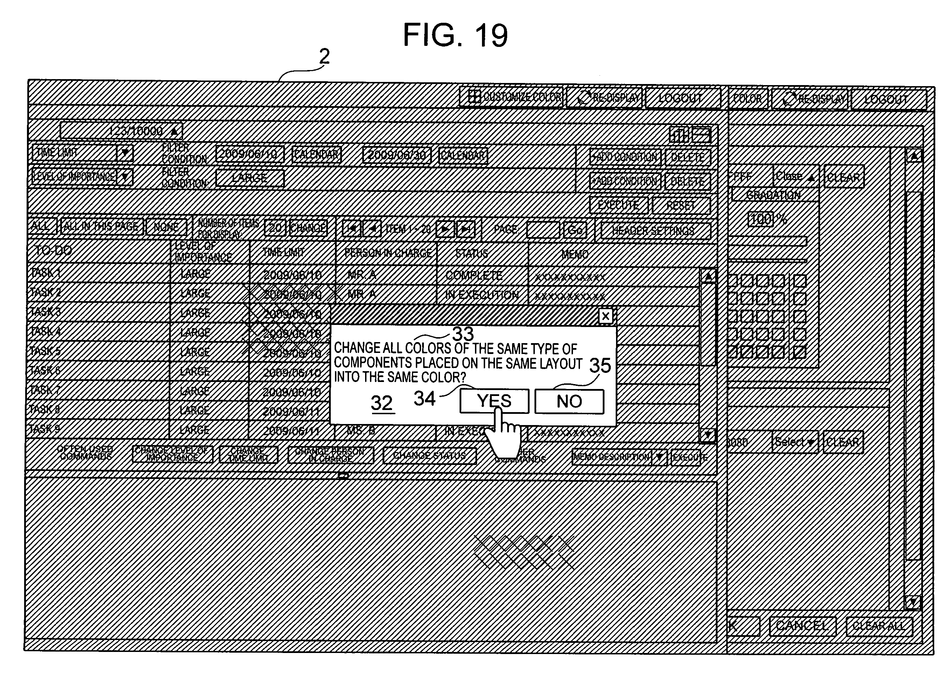

FIG 19 is a view showing one specific example of such a selection screen, wherein reference numeral 32 represents the selection screen, 33 represents a text, 34 represents a "YES" button, and 35 represents a "NO" BUTTON.

In this view, the content screen 2 is displayed in a see-through state, and the selection screen 32 is overlaid and displayed on the see-through content screen 2.

In the selection screen 32, the text 33 indicative of an instruction "COLOR ALL THE SAME TYPE OF COMPONENTS OVERLAID ON THE SAME LAYOUT COMPONENT WITH THE SAME COLOR?" is displayed for example, and the "YES" BUTTON 34 that is operated when following this instruction and the "NO" BUTTON 35 that is operated when not following this instruction, are provided.

When the "YES" button 34 is depressed ("Yes" in Step S114 of FIG. 3), the "component" (in this case, the "CHANGE TIME LIMIT" button $5_2$) selected by the cursor 11 in the content screen 2 shown in FIG 6 and the component adjacent thereto (here, the layout 6) as well as each "element" of the "component" (in this case, the "CHANGE LEVEL OF IMPORTANCE" button $5_1$, the "CHANGE PERSON IN CHARGE" button $5_3$, the "CHANGE STATUS" button $5_4$, or the like) of the same type as that of this selected "component" overlaid on other "component" (i.e., the layout 6) adjacent to the layout 6 are subjected to color customization into the same color as that of an "element" of the designated "component" (Step S115 of FIG 3). Then, the color customization processing is completed.

Moreover, when the "NO" BUTTON 35 is depressed ("No" in Step S114 of FIG 3), a "component" (i.e., the "CHANGE TIME LIMIT" button $5_2$) selected with the cursor 11 in the content screen 2 shown in FIG 6 and a component (here, the layout 6) adjacent thereto are subjected to color customization (Step S116 of FIG 3). Thereafter, the color customization processing is completed.

Note that, the text 33 displayed in the selection screen 32 shown in FIG 19 is not limited to the above-described one. For example, the text 33, e.g., "CHANGE COLORS OF ALL THE SAME TYPE OF COMPONENTS INTO THE SAME COLOR?", is displayed, so that when the "YES" button 34 is depressed ("Yes" in Step S114 of FIG. 3), a "component" (i.e., the "CHANGE TIME LIMIT" button $5_2$) selected with the cursor 11 in the content screen 2 shown in FIG 6 and components (i.e., all of the operation buttons) of the same type as that of this one can be subjected to color customization into the same color. Alternatively, the text 33, e.g., "CHANGE COLORS OF ALL THE SAME TYPE OF COMPONENTS PLACED ON A LAYOUT COMPONENT OF THE SAME TYPE AND THE SAME COLOR INTO THE SAME COLOR?" may be displayed so that when the "YES" button 34 is depressed ("Yes" in Step S114 of FIG. 3), the components satisfying this instruction are subjected to color customization into the same color set. In this manner, components to be subjected to color customization can be suitably determined.

As described above, as shown in FIG 6, the color of any "component" can be customized into a desired color by setting the color customization mode and selecting a "component" desired to be subjected to color customization. However, when a component, such as the layout 6, is related to a plurality of components by overlapping with or being adjacent to many "components", there may be a "component" whose color to be customized is limited according to these related "components".

That is, upon depression of the "NO" button 35 in the selection screen 32 shown in FIG 19, the designated operation button 5 described above, i.e., the "CHANGE TIME LIMIT" button $5_2$ in the above example, and the layout 6, on which the operation button 5 is overlaid, are customized into the designated colors, respectively. Furthermore, when other operation button 5, e.g., the "CHANGE PERSON IN CHARGE" button $5_3$, is subjected to color customization, the color customization operation screen 17 shown in FIG 8 is similarly displayed with respect to the "CHANGE PERSON IN CHARGE" button $5_3$, however, by selecting only the color selectors 19a-19c relevant to the "CHANGE PERSON IN CHARGE" button $5_3$, only the "CHANGE PERSON IN CHARGE" button $5_3$ can be subjected to color customization without erroneously changing the color of the layout 6 that has already been subjected to color customization. However, in this case, in such a color customization operation screen 17a as shown in FIG 9 where the color selectors 19a-19c are expanded with respect to the "CHANGE PERSON IN CHARGE" button 53 (the color selectors 20a-20c of the layout 6 are not expanded in this case), there are colors attached with the "/" mark 31b or the "X" mark 31a in the color palette of the color selectors 19a-19c due to the influence of the layout 6 that has already been subjected to color customization, thus placing limits on the colors to be used.

Incidentally, in the foregoing, when the "COLOR CUSTOMIZATION MODE SETTING" button 3 is depressed in the content screen 2 shown in FIG 4 and the color customization mode is set, one "component" (here, the "CHANGE TIME LIMIT" button $5_2$) is selected as a target for color customization in the content screen 2. However, in the first embodiment, a plurality of components may be selected as the target for color customization. Hereinafter, this point is described.

As described earlier, when the "color customization mode setting" button 3 is depressed in the content screen 2 shown in FIG 4 and the color customization mode is designated (Step S101 of FIG. 3), then the selection screen 12 shown in FIG 5 is displayed in the see-through content screen 2. When the "OK" button 14 is depressed in the selection screen 12, the content screen 2 shown in FIG 6 is displayed. The cursor operation in the content screen 2 can simultaneously designate a plurality of components as the target for color customization.

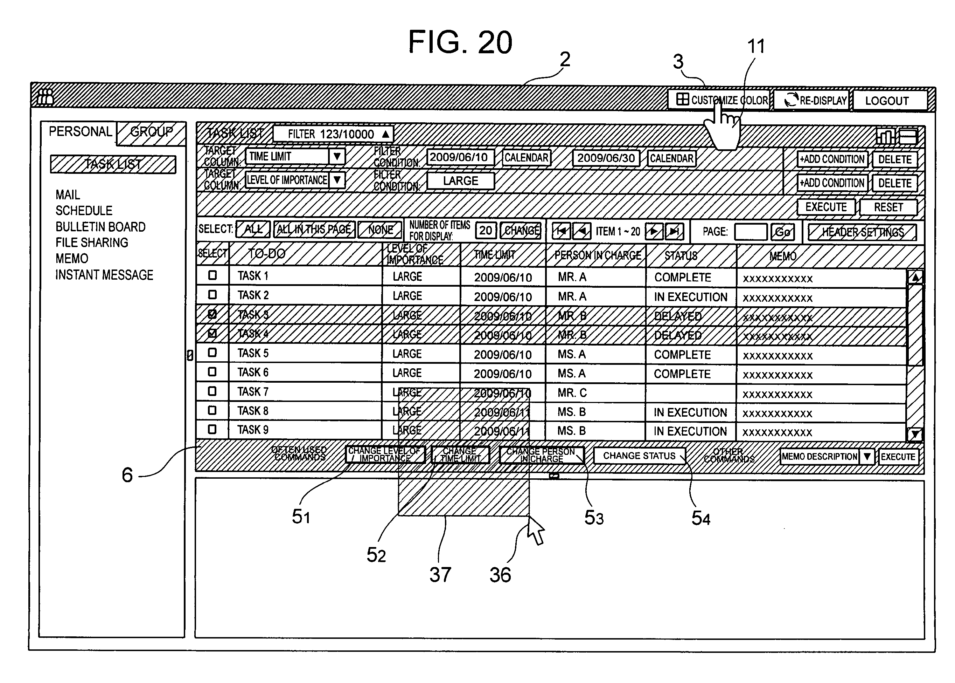

FIG 20 is a view showing an operation for simultaneously causing a plurality of components in the content screen 2 to be subjected to color customization, wherein reference numeral 36 represents a cursor and 37 represents a drag area. Here, the same reference numerals are given to portions corresponding to those of the above-described views to omit the duplicated description. In FIG 20, reference numerals are given only to portions required in description.

In the content screen 2 shown in FIG 6 that is displayed upon depression of the "OK" button 14 in the selection screen 12 shown in FIG 5, when the cursor 11 is moved to a position near a "component" desired to be subjected to color customization and a click operation is performed at this position, then, as shown in FIG 20, the hand-shaped cursor 11 turns into an arrow-like cursor 36. When the cursor 36 is dragged from this position, then with this position as the starting point, a rectangular drag area 37 having two opposing corner portions, i.e., this starting point and the current position of the cursor 36, is formed.

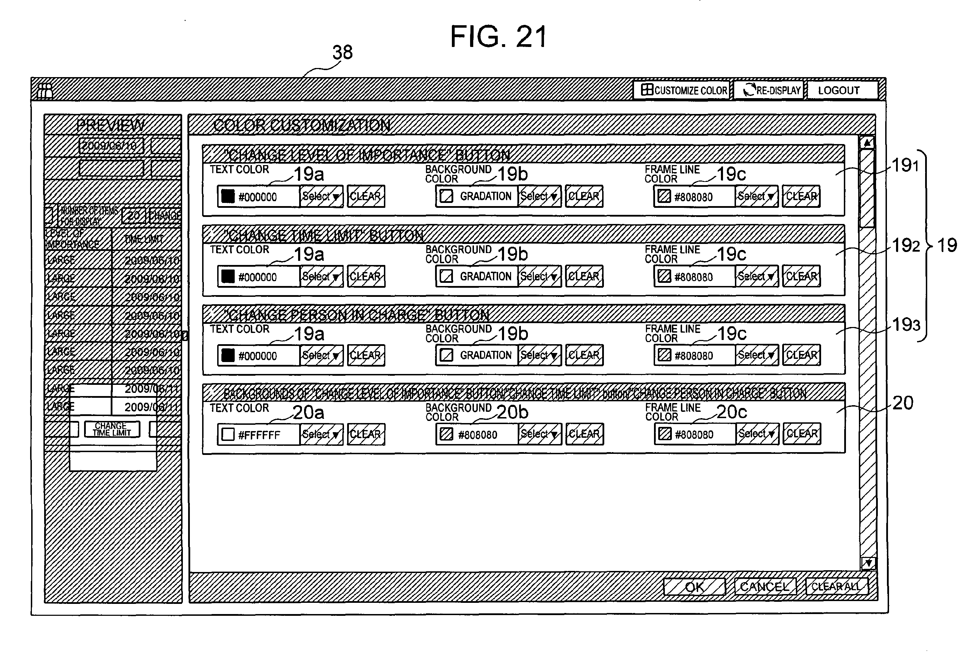

The cursor 37 is dragged so that the drag area 37 contains a plurality of "components" desired to be subjected to color customization in the content screen 2 (Steps S102, S117 of FIG. 3). Then, when the drag operation is completed and the drag area 37 is determined, the color customization operation screen is displayed. At the same time, it is determined for each of the "components" contained in the drag area 37 whether or not other "component" is overlaid on the relevant "component" (Step S118 of FIG. 3). When other "component" is overlaid on the relevant "component" ("Yes" in Step S118 of FIG. 3), the color selector of each "element" of the relevant "component" and the color selector of each "element" of other "component" overlaid on the relevant "component" are displayed in this color customization operation screen (Step S119 of FIG. 3), while when other "component" is not overlaid on the relevant "component" ("No" in Step S118 of FIG. 3), the color selector of each "element" of the relevant "component" and the color selector of each "element" of other "component" placed beneath the relevant "component" are displayed in this color customization operation screen (Step S120 of FIG. 3). When such processings are sequentially carried out for each of the "components" within the drag area 37 ("No" in Step S121 of FIG 3) and such processings are performed on all the "components" within the drag area 37 ("Yes" in Step S121 of FIG. 3), then as shown in FIG 21, with respect to all the "components" within the drag area 37, a color customization operation screen 38 is displayed in which the color selectors of its "elements" are provided.

In FIG 21, reference numerals $19_1$-$19_3$ are color selector display areas, wherein the same reference numerals are given to portions corresponding to those of the above-described views to omit the duplicated description. In FIG 21, reference numerals are given only the portions required in description and the reference numerals of other portions are omitted.

Here, in the content screen 2 shown in FIG 20, the "components" contained in the drag area 37 are the "CHANGE LEVEL OF IMPORTANCE" button $5_1$, the "CHANGE TIME LIMIT" button $5_2$, the "CHANGE PERSON IN CHARGE" button $5_3$, and the layout 6 on which these components are overlaid and displayed, while in the color customization operation screen 38 shown in FIG 21, the color selector display areas 19/20 are provided for each of these components".

In the color selector display area $19_1$, there are provided the color selector 19a with respect to a text color of the element "text" of the component "CHANGE LEVEL OF IMPORTANCE" button $5_1$ in FIG 20, the color selector 19b with respect to the background color of the element "BACKGROUND", and the color selector 19c with respect to the frame line color of the element "FRAME LINE". In the color selector display area $19_2$, there are provided the color selector 19a with respect to a text color of the element "TEXT" of the component "CHANGE TIME LIMIT" button $5_2$ in FIG 20, the color selector 19b with respect to the background color of the element "BACKGROUND", and the color selector 19c with respect to the frame line color of the element "FRAME LINE". In the color selector display area $19_3$, there are provided the color selector 19a with respect to the text color of the element "TEXT" of the component "CHANGE PERSON IN CHARGE" button $5_3$ in FIG 20, the color selector 19b with respect to the background color of the element "BACKGROUND", and the color selector 19c with respect to the frame line color of the element "FRAME LINE".

These color selectors 19a-19c have the same function as that of the color selectors 19a-19c in FIG 8. Moreover, in each selector display area 19, the color selector of an "element" which a "component" does not have is not displayed. For example, in the component "CHANGE PERSON IN CHARGE" button $5_3$ (FIG 20), if there is no frame line, the color selector 19c with respect to the frame line color is not provided in the color selector display area 193.

Moreover, in the color selector display area 20, there are provided the color selector 20a with respect to the text color of the element "text" of the layout 6 which is a "components" in FIG 20, the color selector 20b with respect to the background color of the element "BACKGROUND", and the color selector 20c with respect to the frame line color of the element "FRAME LINE". These color selectors 20a-20c have the same function as that of the color selectors 20a-20c in FIG 8. Also in the color selector display area 20, the color selector of an "element" which the layout 6 does not include is not displayed. For example, in the layout 3 (FIG 20), if there is no text, the color selector 20a with respect to the text color is not provided in the color selector display area 20.

Note that, since the layout 6 in FIG 20 is common to the operation buttons $5_1$-$5_3$, in other words, since these operation buttons $5_1$-$5_3$ are overlaid and displayed on the same layout 6, in the color customization operation screen 38 shown in FIG 21 there is one color selector display area 20 of the layout 6 and the color selector display area 20 is arranged and provided behind the color selectors 19a-19c of these operation buttons $5_1$-$5_3$.

In contrast, when the layouts with respect to the operation buttons $5_1$-$5_3$ differ from each other, the color selector display area 20 of these layouts respectively is arranged immediately behind the "component" (here, the operation button) related thereto. For example, if the "CHANGE LEVEL OF IMPORTANCE" button $5_1$ and the "CHANGE TIME LIMIT" button $5_2$ are overlaid and displayed on the same layout $6_1$ and the "CHANGE PERSON IN CHARGE" button $5_3$ is overlaid and displayed on other layout $6_2$, then in the color customization operation screen 38 shown in FIG 21, a color selector display area $20_1$ of the layout $6_1$ is arranged next to the color selector display areas $19_1$ and $19_2$ of the "CHANGE LEVEL OF IMPORTANCE" button $5_1$ and the "CHANGE TIME LIMIT" button $5_2$, and a color selector display area $20_2$ of the layout $6_2$ is arranged next to the color selector display area $19_3$ of the "CHANGE PERSON IN CHARGE" button $5_3$.

Because an arrangement relation between the color selector display areas 19 and 20 of a plurality of "components" and other component on which these components are overlaid and displayed is set in this manner, the relation in the content screen 2 between these "components" and other "component" on which these components are overlaid and displayed can be confirmed also in the color customization operation screen 38, thus facilitating the selection of colors to be customized of these "components".

In the color customization operation screen 38 shown in FIG 21, by selecting either of the color selectors 19a-19c as the "elements" in the color selector display areas $19_1$-$19_3$ or either of the color selectors 20a-20c as the "elements" in the color selector display area 20, the processings in the steps S107 to S116 of FIG 3 are performed and the color customization of a selected "element" in each "component" is performed, as with the color customization operation screen 17 shown in FIG 8.

As described above, a plurality of "components" can be simultaneously designated as the targets for color customization, and in the same color customization operation screen the colors of the "elements" of the respective "components" can be customized into the desired colors so that users can easily view.

Next, a second embodiment of the method of color customization of a content screen according to the present invention is described.

Also in the second embodiment, in the color customization operation screen 8 shown in FIG 8 obtained as in the first embodiment, when the "display selection color candidate" button 22 of the predetermined color selectors 19/20 among the color selectors 19a-19c and 20a-20c is depressed with the cursor 11, the color selectors 19/20 in which the "display selection color candidate" button 22 is depressed are expanded, as shown in FIG 9. However, the color selectors in the second embodiment differ from the color selectors 19/20 in the first embodiment in their configurations.

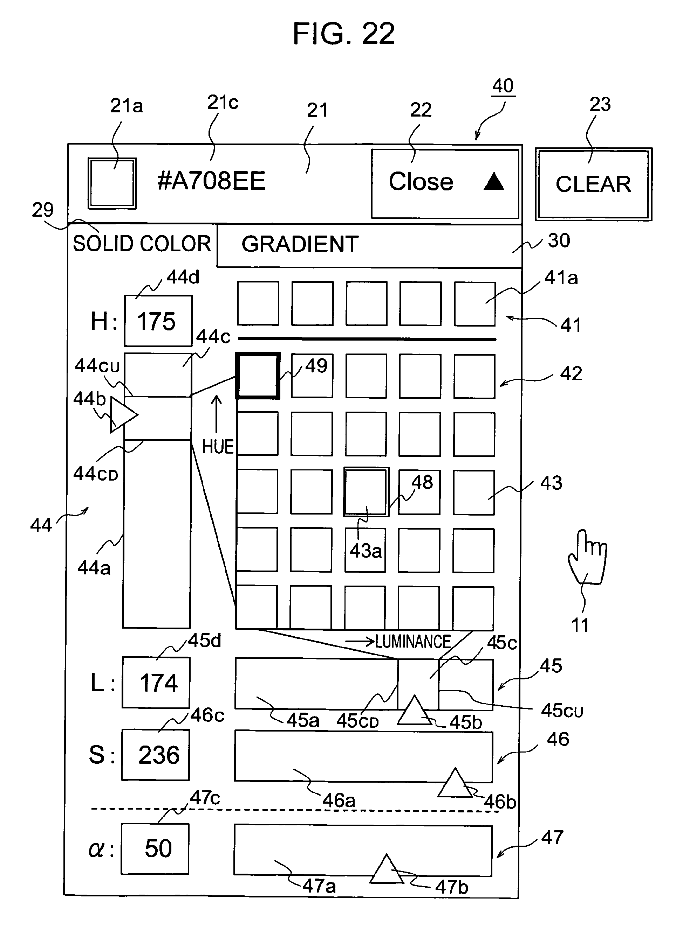

FIG 22 is a view showing one specific example of the color selector expanded in the color customization operation screen as shown in FIG 8 in the second embodiment of the method of color customization of a content screen according to the present invention, wherein reference numeral 21c represents a hue name, 40 represents a color selector, 41 represents a gray scale, 41a represents a gray cell, 42 represents a color palette, 43 represents a color cell, 43a represents a center position color cell, 44 represents a hue specifying portion, 44a represents a hue display bar, 44b represents a hue specifying slider, 44c represents a hue specifying range, $44c_U$ represents an upper border line, $44c_D$ represents a lower border line, 44d represents a selected-hue value display box, 45 represents a luminance specifying portion, 45a represents a luminance display bar, 45b represents a luminance specifying slider, 45c represents a luminance specifying range, $45c_U$ represents an upper border line, $45c_D$ represents a lower border line, 45d represents a selected-luminance value display box, 46 represents a saturation specifying portion, 46a represents a saturation display portion, 46b represents a saturation specifying slider, 46c represents a selected- saturation value display box, 47 represents a transparency specifying portion, 47a represents a transparency display bar, 47b represents a transparency specification slider, 47c represents a selected-transparency display box, 48 represents a center cell frame, and 49 represents a selection cell frame. Here, portions corresponding to those of FIG 10 are given the same reference numerals to omit the duplicated description.

In this view, assume the expanded color selector 40 includes the "color" tab 29 and the "gradation" tab 30, and here the "color" tab 29 is selected.

In the "COLOR" tab 29, there are provided the gray scale 41, the color palette 42 for displaying a display color of an element of a component, and the hue specifying portion 44 for specifying a hue in the color palette 42, the luminance specifying portion 45 for specifying a luminance (or brightness although luminance is used here) in the color palette 42, the saturation specifying portion 46 for specifying a saturation in the color palette 42, and the transparency specifying portion 47 for specifying a transparency of an element of a component.

The gray scale 41 is for displaying an element of a component in a gray and comprises five gray cells 41a, each indicative of a gray with a different density, arranged in the horizontal direction, for example. Here, the density of a gray displayed in the gray cells 41a becomes stronger sequentially from one end (e.g., the left end) of such an arrangement of the gray cells 41a, thereby presenting the gray scale. When the desired gray cell 41a is designated in such a gray scale 41 using the cursor 11, then an element 52 of a component relevant to the color selector 40, e.g., the element "text" 5a of the "CHANGE TIME LIMIT" button in the content screen 2 shown in FIG 4, will be displayed in a gray represented with the gray cell 41a selected in the gray scale 41. Note that the gray cell 41a designated by means of the cursor 11 is attached with a selection cell frame 49 so as to surround this cell.

The color palette 42 comprises five color cells 43 arranged in each of the vertical and horizontal directions in a matrix, as with the color palette 29c of the first embodiment shown in FIG 10, wherein with the vertical axis as the hue axis, five color cells 43 in the same row represent colors of the same hue and the colors displayed sequentially from the upper row differ in hue. Moreover, with the horizontal axis as the luminance axis, five color cells 43 in the same column represent colors of the same luminance and the colors displayed sequentially from the left column differ in luminance.

The hue specifying portion 44 allows a user to specify the color with a desired hue by changing the hue of a color represented in the color cell 43 of the color palette 42. The hue specifying portion 44 comprises the hue display bar 44a whose position indicates the value of hue (hue value H) in the vertical direction and the hue specifying slider 44b for specifying a hue in the hue display bar 44a, wherein the hue of a color displayed in the color cell 43 in the color palette 42 can be changed by moving the hue specifying slider 44b along the hue display bar 44a with the operation of the cursor 11.

In the hue display bar 44a, the hue specifying range 44c having an equal width above and below an indicating point (the vertex position on the hue display bar 44a when the hue specifying slider 44b has a triangular shape as shown in the view) of the hue specifying slider 44b as a center point is set, and colors with hues of five hue values H at equal intervals within the hue specifying range 44c are displayed in the color cells 43 in a column of the color palette 42, respectively. That is, a color with a hue of the hue value H of the upper boundary line $44c_U$ of the hue specifying range 44c is displayed in the color cell 43 of the uppermost row of the color palette 42, while a color with a hue of the hue value H of the lower border line $44c_D$ of the hue specifying range 44c is displayed in the color cell 43 of the lowermost row of the color palette 42. In the color cells 43 of three rows between the rows of these uppermost and lowermost color cells 43, colors with hues of the sequential hue values H between the upper boundary line $44c_U$ and the lower border line $44c_D$ of the hue specifying range 44c are displayed.

A hue is represented with a numerical value (hue value H), wherein assume a hue takes an integral value between "0" to "255", and the hue value H at the lower end of the hue display bar 44a is "0" and the hue value H at the upper end is "255". In the hue specifying range 44c, the lower border line $44c_D$ is set at a position of the hue value H having a value smaller than the hue value H at the indicating point of the hue specifying slider 44b by "20", for example, while the upper border line $44c_U$ is set at a position of the hue value H having a value larger than the hue value H at the indicating point of the hue specifying slider 44b by "20", for example. As the hue specifying slider 44b moves along the hue display bar 44a, the lower border line $44c_D$ and upper boundary line $44c_U$ move similarly and the hue specifying range 44c moves around the indicating point of the hue specifying slider 44b as the center point while keeping constant the interval between the lower border line $44c_D$ and the upper boundary line $44c_U$.

In a row of five color cells 43 in the color palette 42, colors with five hues whose hue values H within the hue specifying range 44c in the hue display bar 44a differ from each other by "10" are set. For example, if a color with a hue whose hue value H is "195" is displayed in the row of the uppermost color cell 43, then in four rows of the color cells 43 sequentially arranged thereunder, colors with hues whose hue values H are "185", "175", "165", and "155" are displayed, respectively.

Note that, a color cell 43a positioned at the center position (i.e., the center position color cell) of the color palette 42 representes a color with a hue of the hue value H (the hue value H at the vertex position on the hue display bar 44a when the hue specifying slider 44b has a triangular shape as shown in the view) that is specified by the hue specifying slider 44b in the hue display bar 44a. For this reason, in the center position color cell 43a, a center cell frame 48 is provided so as to surround this cell.

Moreover, on the upper side of the hue display bar 44a, there is provided the selected-hue value display box 44d, where the value (i.e., the value of the hue H displayed in the center position color cell 43a of the color palette 42: here, a value of "175") of the hue H that is specified by the hue specifying slider 44b in the hue display bar 44a is displayed.

From the above, as the hue specifying slider 44b is moved up and down on the hue display bar 44a in the hue specifying portion 44 by the operation of the cursor 11, the hue will change in such a manner that the hue value H varies by "1" by "1" along with this movement in each row of the color cells 43 in the color palette 42. At the same time, the hue value H shown in the selected-hue value display box 44d will also vary by "1" by "1".

The luminance specifying portion 45 allows a user to specify a color or gray with a desired luminance by changing the color represented in the color cell 43 of the color palette 42 or changing the luminance of a gray represented in the gray cell 41a of the gray scale 41. The luminance specifying portion 45 comprises the luminance display bar 45a whose position indicates the value of luminance (luminance value L) in the horizontal direction and the luminance specifying slider 45b for specifying the luminance value L of a color in the luminance display bar 45a, wherein the luminance of a color displayed in the color cell 43 in the color palette 42 can be changed by moving the luminance specifying slider 45b along the luminance display bar 45a by the operation of the cursor 11. At the same time, the luminance (density) of a gray displayed in the gray cell in the gray scale 41 will also change.

In the luminance display bar 45a, the luminance specifying range 45c having an equal width on the left and right of an indicating point (the vertex position on the luminance display bar 45a when the luminance specifying slider 45b has a triangular shape as shown in the view) of the luminance specifying slider 45b as the center point is set, and luminance's of five luminance values L at equal intervals within the luminance specifying range 45c are set for the color cells 43 in a row of the color palette 42, respectively. That is, a luminance of the luminance value L on the right border line $45c_U$ side of the luminance specifying range 45c is set to the color cell 43 of the rightmost column of the color palette 42, while a luminance of the luminance value L on the left border line $44c_D$ side of the luminance specifying range 45c is set to the color cell of the leftmost column of the color palette 42, wherein luminance's of the sequential luminance values L between the right border line 45cu and left border line $45c_D$ of the luminance specifying range 45c are set to three columns of color cells 43 between the columns of these rightmost and leftmost color cells 43.

A luminance is represented with a numerical value (luminance value L) assuming that a luminance takes an integral value between "0" to "255", and the luminance value L at the left end of the luminance display bar 45a is set "0" and the luminance value L at the right end is set "255". In the luminance specifying range 45c, the left border line $45c_D$ is set at a position of the luminance value L having a value smaller than the luminance value L at the indicating point of the luminance specifying slider 45b by "20" for example, while the right border line $45c_U$ is set at a position of the luminance value L having a value larger than the luminance value L at the indicating point of the luminance specifying slider 45b by "20", for example. As the luminance specifying slider 45b moves along the luminance display bar 45a, the left border line $45c_D$ and right border line $45c_U$ moves similarly and the luminance specifying range 45c moves around the indicating point of the luminance specifying slider 45b as the center point while keeping constant the interval between the left border line $45c_D$ and the right border line $45c_U$.

In the column of five color cells 43 in the color palette 42, five luminance's whose luminance values within the luminance specifying range 45c in the luminance display bar 45a differ from each other by "10" are set. For example, if a color with a luminance of the luminance value L of "194" is displayed in the column of the rightmost color cell 43, then in the columns of four color cells 43 sequentially arranged on the left thereof, the colors with luminance's of the luminance values L of "184", "174", "164", and "155" are displayed, respectively.

Note that, the center position color cell 43a attached with the center cell frame 48 of the color palette 42 represents a color with a luminance of the luminance value L (the luminance value L at the vertex position on the luminance display bar 45a when the luminance specifying slider 45b has a triangular shape as shown in the view) that is specified by the luminance specifying slider 45b in the luminance display bar 45a.

Moreover, on the left of the luminance display bar 45a, there is provided the selected-luminance value display box 45d, where the luminance value L (i.e., the luminance value L displayed at the center position color cell 43a of the color palette 42: here, a value of "174") specified by the luminance specifying slider 45b in the luminance display bar 45a is displayed.

From the above, as the luminance specifying slider 45b is moved to left or right on the luminance display bar 45a in the luminance specifying portion 45 by the operation of the cursor 11, the luminance will change in such a manner that the luminance value L varies by "1" by "1" along with this movement in each column of the color cell 43 in the color palette 42. At the same time, the luminance value L displayed in the selected-luminance value display box 45d varies by "1" by "1".

Note that, the hue value H displayed in the selected-hue value display box 44d and the luminance value L displayed in the selected-luminance value display box 45d also represent the hue value H and the luminance value L of the center position color cell 43a attached with the center cell frame 48 in the color palette 42.

The saturation specifying portion 46 can allow a user to specify a desired saturation by varying the saturation of a color shown in the color cell 43 of the color palette 42. The saturation specifying portion 46 comprises the saturation display bar 46a whose position indicates the value of saturation (saturation value S) in the horizontal direction, and the saturation specifying slider 46b for specifying the saturation value S in the saturation display bar 46a, wherein the saturation of a color displayed in the color cell 43 in the color palette 42 can be varied by moving the saturation specifying slider 46b along the saturation display bar 46a by the operation of the cursor 11.

When the saturation specifying slider 46b has a triangular shape as shown in the view, the saturation value S at the vertex position on the saturation display bar 46a is the saturation specified by the saturation specifying slider 46b, and the saturation of a color displayed in all the color cells 43 of the color palette 42 is the saturation of the specified saturation value S.

A saturation is represented with a numerical value (saturation value S), wherein assume a saturation takes a value between 0-255, and the saturation S at the left end of the saturation display bar 46a is the value "0" and the saturation S at the right end is the value "255". The saturation of a color displayed in all the color cells 43 in the color palette 42 is the saturation of the saturation value S specified by the saturation specifying slider 46b.

Moreover, on the left of the saturation display bar 46a, there is provided the selected-saturation value display box 46c, where the saturation value S specified by the saturation specifying slider 46b in the saturation display bar 46a is displayed. Here, assuming the saturation value S of a value "236" is specified by the saturation specifying slider 46b in the saturation display bar 46a, then the saturation value S of this value "236" is displayed in the selected-saturation value display box 46c.

From the above, as the saturation specifying slider 46b is moved to left or right on the saturation display bar 46a in the saturation specifying portion 46 by the operation of the cursor 11, in all the color cells 43 in the color palette 42 the saturation simultaneously changes in such a manner the saturation value S varies by "1" by "1" along with this movement. At the same time, the saturation value S displayed in the selected-saturation value display box 46c varies by "1" by "1".

Either one of the gray cells 41a of the gray scale 41 or the color cells 43 of the color palette 42 can be selected by a depression operation of the cursor 11, and the selection cell frame 49 is attached to the selected gray cell 41a or color cell 43. At the same time, a gray displayed in the selected gray cell 41a or a color with a hue, a luminance, and a saturation displayed in the selected color cell 43 is displayed in the setting color display portion 21a of the "selection color display" column 21. A color (including gray as well) attached to an element of a component relevant to the color selector 40 can be confirmed with the display of the gray cell 41a or color cell 43 attached with the selection cell frame 49 as well as with the display in the setting color display portion 21a.

The transparency specifying portion 47 allows a user to specify the transparency $\alpha$ (%) of a color of an element of a component. The transparency specifying portion 47 comprises the transparency display bar 47a whose position indicates the transparency $\alpha$ in the horizontal direction and the transparency specifying slider 47b for specifying the transparency $\alpha$ in the transparency display bar 47a, wherein the transparency $\alpha$ can be varied by moving the transparency specifying slider 47b along the transparency display bar 47a by the operation of the cursor 11.

When the transparency specifying slider 47b has a triangular shape as shown in the view, the transparency $\alpha$ at the vertex position on the transparency display bar 47a is the transparency $\alpha$ specified by the transparency specifying slider 47b, and the transparency $\alpha$ of this color appears in a color displayed in the setting color display portion 21a of the "selection color display" column 21.

The transparency $\alpha$ is represented with a numerical value, assuming that the transparency $\alpha$ takes a value between 0 and 100 (%), and the transparency $\alpha$ at the left end of the transparency display bar 47a is "0 (%)" and the

transparency $\alpha$ at the right end is "100 (%)". The transparency $\alpha$ of a color displayed in the setting color display portion 21a is a value in the transparency display bar 47a specified by the transparency specifying slider 47b. Here, the transparency $\alpha$=0% refers to a completely non-transparent state and the transparency $\alpha$=100% refers to a maximum transparent state.

Moreover, on the left of the transparency display bar 47a, there is provided the selected-transparency display box 47c, where the value of the transparency $\alpha$ specified by the transparency specifying slider 47b in the transparency display bar 47a is displayed. Here, assuming the transparency $\alpha$ of a value "50 (%)" is specified by the transparency specifying slider 47b in the transparency display bar 47a, then this value "50 (%)" is displayed in the selected-transparency display box 47c.

From the above, as the transparency specifying slider 47b is moved to left or right on the transparency display bar 47a in the transparency specifying portion 47 by the operation of the cursor 11, the transparency $\alpha$ will change in such a manner that the value of the transparency $\alpha$ of a color, which is selected by the color palette 42 and displayed in the setting color display portion 21a of the "selection color display" column 21, varies by "1 (%)" by "1 (%)". At the same time, the value of the transparency $\alpha$ displayed in the selected-transparency display box 47c will also vary by "1 (%)" by "1 (%)".

Note that, a user knows the type of a color (hue) desired to be displayed in an element of a relevant component, and when a user inputs this name (e.g., "808080") with a keyboard, then the color name 21c in the "selection color display" column 21 is changed from the current "#A708EE" to the input color name "#808080", and at the same time, the hue specifying slider 44b moves along the hue display bar 44a in the hue specifying portion 44 so that a color with the hue value H of the color name "#808080" is displayed in the color palette 42, and accordingly the color in the setting color display portion 21a of the "selection color display" column 21 is changed to the color of the input color name. In this case, the luminance value L, the saturation value S, and the transparency $\alpha$ will not be changed.

According to the above color selector 40, with respect to the color to be displayed in an element of a component, a plurality of colors corresponding to a plurality of hues within the hue specifying range 44c corresponding to positions of the hue specifying slider 44b in the hue display bar 44a of the hue specifying portion 44, and a plurality of luminance's within the luminance specifying range 44c corresponding to positions of the luminance specifying slider 45b in the luminance display bar 45a of the luminance specifying portion 45, are specified, and are displayed as the color palette 42, and a color with a desired hue and luminance can be selected among these colors. Therefore, as compared with a method comprising the steps of selecting a hue from the hue display bar 44a using the hue specifying slider 44b, selecting a luminance from the luminance display bar 45a using the luminance specifying slider 45b, and selecting the color of an element of a component, a color with a desired hue and luminance can be selected appropriately, simply, and quickly.

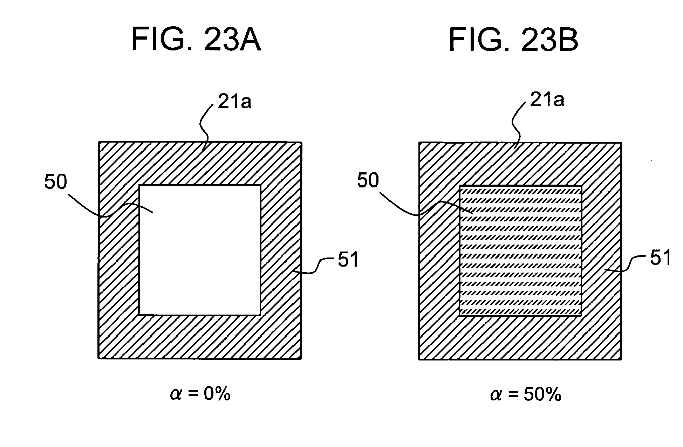

FIGS. 23A and 23B are views showing one specific example of the display state of the setting color display portion 21a of the "selection color display" column 21, wherein reference numeral 50 represents an object element color display area, and 51 represents a background color display area.

In this view, in the setting color display portion 21a, with an element of a component relevant to the color selector 40 as an object element, the background color display area 51, where the color (background color) of the background of this object element is displayed, is provided in the periphery portion, while inside the background color display area 51, an object element color area 50 displaying the color (object element color) of the object element is provided. If there is a pattern such a text, a symbol, or the like in a portion of the background on which object elements are overlaid, the color of such a pattern is overlaid on the object element color area 50.

FIG 23A shows a display state of the setting color display portion 21a when the transparency $\alpha$=0% is specified (selected) by the transparency specifying portion 47. In this case, the color displayed in the object element color area 50 is not transparent. Here, only the object element color (including gray as well) selected in the gray scale 41 or the color palette 42 is displayed while the background color (hereinafter, including the color of the above-described pattern as well) is not displayed.

FIG 23B shows a display state of the setting color display portion 21a when the transparency $\alpha$=50% is specified (selected) by the transparency specifying portion 47. In this case, the object element color displayed in the object element color area 50 is transparent. Here, in the object element color area 50 the background color can be seen through the object element color at a degree corresponding to the transparency $\alpha$ of this object element color. For this reason, with respect to the color displayed in the object element color area 50, a color different from the color (including gray) selected by means of the gray scale 41 or the color selector 42, i.e., the color corresponding to this selected color (including gray) and the background color at a degree corresponding to the transparency $\alpha$, will be displayed. Moreover, when a pattern such as a text, a symbol, or the like, is drawn on a background having a background color in the background color display area 51, such a pattern will be also displayed in the object element color area 50 at an intensity (density) corresponding to the transparency $\alpha$.

In this manner, the transparency $\alpha$ of a color (including gray as well) of an element of a relevant component can be varied by the operation of the transparency specifying slider 47b in the transparency display bar 47a with the use of the transparency specifying portion 47, and the setting state of such a transparency $\alpha$ can be confirmed with the object element color area 50. Accordingly, without returning an element of such a component to the content screen 2 shown in FIG 4 in which this element is directly displayed, the display state corresponding to the transparency of such an element can be confirmed and a desired transparency can be set easily and reliably.

Moreover, even if a color (including gray as well) of an object element is selected by means of the gray scale 41 or the color palette 42, this selection is not made by comparison with the background, and instead a relation with the background may be preferably taken into consideration. For example, a display state may be required, in which a background, on which a pattern as described above is drawn, is also see-through. In such a case, in this specific example, with the operation of the transparency specifying portion 47 the transparency $\alpha$ of a color of an object element in the object element color area 50 can be varied so as to make the background of such an object element see-through. Accordingly, a user can vary the transparency of an element while confirming the transparency, and can set a desired transparency reliably and easily. In addition, in the setting color display portion 21a, since the background color display area 51 is provided and the background color of an object element is also displayed at the same time, it is easy to set the transparency $\alpha$ at such a degree that prevents the object element from becoming difficult to be recognized as contrasted to such a background color.

With regard to each element of a component, when a color is set by means of the color selector 40 shown in FIG 22 and the "OK" button 26 is depressed as shown in FIG 18 and the selection screen 32 in FIG 19, which is accordingly displayed, is operated, then the color customization process is completed and the content screen 2 returns to the display state shown in FIG 4. However, when the color customization operation screen 17 shown in FIG 8 is displayed and the color selector 40 shown in FIG 22 of an element of a desired component is expanded in the color sector display area 18 in order to subject an element of a component of the content screen 2 shown in FIG 4 to a color customization processing again, if a color is already set (selected) in this element, the state when the previous color customization processing was performed is set as default to the gray scale 41, the color palette 42, the hue specifying portion 44, the luminance specifying portion 45, the saturation specifying portion 46, and the transparency specifying portion 47. Therefore, in the color palette 42, 5X5 color cells 43 including the color cells 43 with a previously set hue and luminance are displayed, and the color cell 43 of this set color is attached with the selection cell frame 49, and the previously set color of the object element is set in the setting color display portion 21a of the "selection color display" column 21.

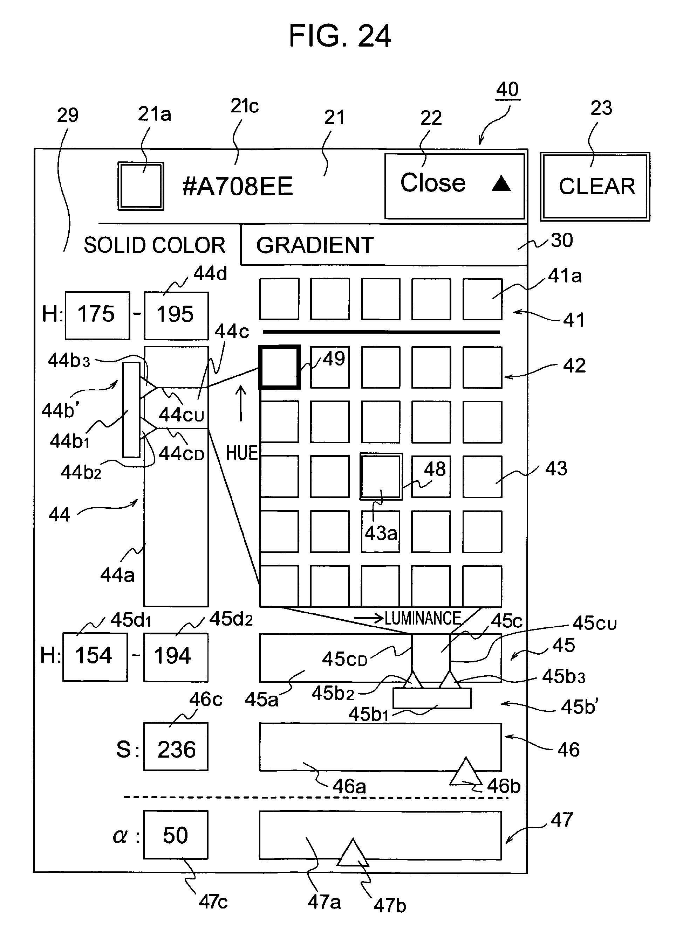

FIG 24 is a view showing another specific example of the color selector expanded in the color customization operation screen in the second embodiment of the method of color customization of a content screen according to the present invention, wherein reference numeral 40a represents a color selector, 44b' represents a hue specifying slider, $44b_1$ represents a base slider, $44b_2$ represents a lower boundary changing slider, $44b_3$ represents an upper boundary changing slider, $44d_1$ represents a lower boundary selection hue value display box, $44d_2$ represents an upper boundary selection hue value display box, 45b' represents a luminance specifying slider, $45b_1$ represents a base slider, $45b_2$ represents a lower (left) boundary changing slider, $45b_3$ represents an upper (right) boundary changing slider, $45d_1$ represents a lower (left) boundary selection luminance value display box, and $45d_2$ represents an upper (right) boundary selection luminance value display box. Here, the same reference numerals are given to portions corresponding to those of FIG 23 to omit the duplicated description.

In this view, the color selector 40a as this specific example differs from the color selector 40 shown in FIG 22 in the hue specifying portion 44 and the luminance specifying portion 45. Those other than these portions are the same as those of the color selector 40 shown in FIG 22.

In the hue specifying portion 44, the hue specifying slider 44b' comprising three slider portions, i.e., the base slider $44b_1$, the lower boundary changing slider $44b_2$, and the upper boundary changing slider $44b_3$, is used in place of the hue specifying slider 44b of the hue display bar 44a of the color selector 40 shown in FIG 22, the hue specifying slider 44b indicating one point. In the hue specifying slider 44b', the lower boundary changing slider $44b_2$ sets the lower border line $44c_D$ of the hue specifying range 44c in the hue display bar 44a while the upper boundary changing slider $44b_3$ sets the upper border line $44c_U$ of the hue specifying range 44c, wherein these lower boundary changing sliders $44b_2$ and upper boundary changing slider $44b_3$ are provided in the base slider $44b_1$.

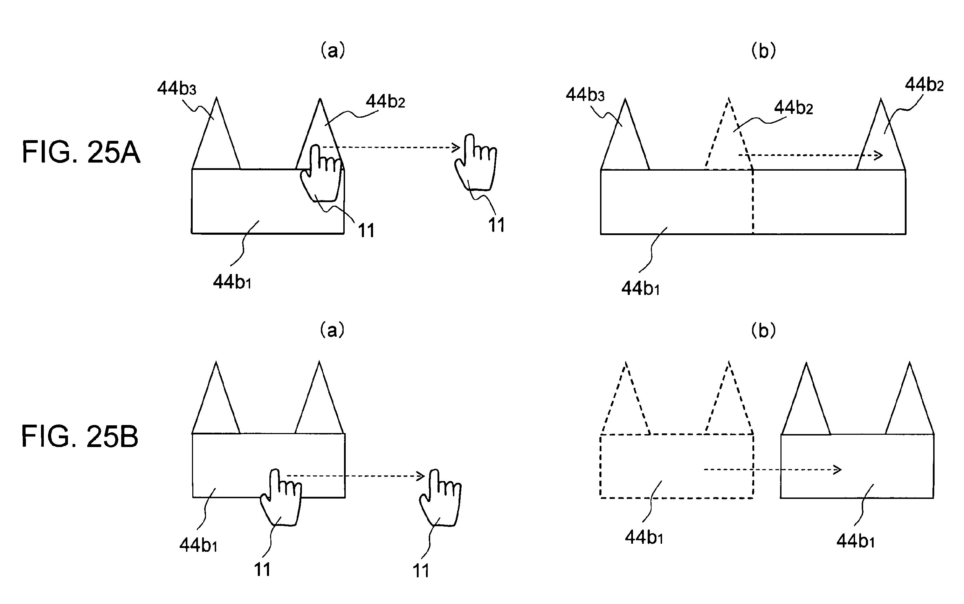

Then, as shown from a state shown in FIG 25A(a) to a state shown in FIG 25A(b), as the lower boundary changing slider $44b_2$ is moved in the vertical direction by an operation using the cursor 11, the lower border line $44c_D$ of the hue specifying range 44c moves and accordingly the hue specifying range 44c increases/decreases in the hue display bar 44a. Likewise, as the upper boundary changing slider $44b_3$ is moved in the vertical direction by an operation using the cursor 11, the upper border line $44c_U$ of the hue specifying range 44c moves and accordingly the hue specifying range 44c increases/decreases in the hue display bar 44a.

The base slider $44b_1$ holds these lower boundary changing sliders $44b_2$ and upper boundary changing slider $44b_3$ regardless of the movement of the lower boundary changing slider $44b_2$ or the upper boundary changing slider $44b_3$. The length of the base slider $44b_1$ increases/decreases with the movement of the lower boundary changing slider $44b_2$ or the upper boundary changing slider $44b_3$, i.e., with the increase/decrease of the hue specifying range 44c, as shown in FIG 25A(b).

Moreover, the base slider $44b_1$ can be moved in the vertical direction by an operation using the cursor 11. At this time, as shown in FIG 25B(a) and FIG 25B(b), these lower boundary changing sliders $44b_2$ and upper boundary changing slider $44b_3$ are held at the same position of the base slider $44b_1$, and the hue specifying range 44c moves up and down along the hue display bar 44a while keeping the length in the vertical direction constant.

Here, in the color palette 42, five rows of color cells 43 respectively relevant to five hue values H at equal intervals between the upper border line $44c_U$ and lower border line $44c_D$ of the hue specifying range 44c are set. In the row of the uppermost color cells 43, a hue of the hue value H of the upper border line $44c_U$ in the hue specifying range 44c is displayed while in the row of the lowermost color cells 43, a hue of the hue value H of the lower border line $44c_D$ in the hue specifying range 44c is displayed. In the respective three rows of color cells 43 between the uppermost row of color cells 43 and the lowermost row of color cells 43, a hue of a different hue value H is displayed at equal intervals between the hue value H of the upper border line $44c_U$ and the hue value H of the lower border line $44c_D$. When the hue value H of a hue of the upper border line $44c_U$ displayed in the uppermost row of color cells 43 is set to "195" and the hue value of a hue of the lower border line $44c_D$ displayed in the lowermost row of color cells 43 is set to "155", then the hue value H of a hue displayed in the second row of color cells 43 from the top is "185", the hue value H of a hue displayed in the third row of color cells 43 from the top is "175", and the hue value H of a hue displayed in the fourth row of color cells 43 from the top is "165".

Moreover, in this specific example, in place of the selected-hue value display box 44d in the hue specifying portion 44 of the color selector 40 shown in FIG 22, two boxes, i.e., the lower boundary selection hue value display box $44d_1$ and the upper boundary selection hue value display box $44d_2$, are provided, wherein in the lower boundary selection hue value display box $44d_1$, the hue value H of the upper border line $44c_U$ in the hue specifying range 44c ("155" in the above example) is displayed while in the upper boundary selection hue value display box $44d_2$, the hue value H of the lower border line $44c_D$ in the hue specifying range 44c ("195" in the above-described example) is displayed. This makes it possible to confirm the hue value H in the hue specifying range 44c and accordingly the hue value H of a hue displayed in the color palette 42.

This is true of the luminance specifying portion 45. Here, the luminance specifying slider 45b' comprising three slider portions, i.e., the base slider $45b_1$ and the lower (left) boundary changing slider $45b_2$, and the upper (right) boundary changing slider $45b_3$, is used in place of the luminance specifying slider 45b of the luminance display bar 45a of the color selector 40 shown in FIG 22, the luminance specifying slider 45b indicating one point. In the luminance specifying slider 45b', the lower boundary changing slider $45b_2$ sets the lower border line $45c_D$ of the luminance specifying range 45c in the luminance display bar 45a, while the upper boundary changing slider $45b_3$ sets the upper border line $45c_U$ of the luminance specifying range 45c. These lower boundary changing sliders $45b_2$ and upper boundary changing slider $45b_3$ are provided in the base slider $45b_1$.

Then, as with the hue specifying slider 44b', as shown from the state shown in FIG 25A(a) to the state shown in FIG 25A(b), as the lower boundary changing slider $45b_2$ is moved in the horizontal direction by an operation using the cursor 11, the lower border line $45c_D$ of the luminance specifying range 45c moves and accordingly the luminance specifying range 45c increases/decreases in the luminance display bar 45a. Likewise, as the upper boundary changing slider $45b_3$ is moved in the horizontal direction by an operation using the cursor 11, the upper border line $45c_U$ of the luminance specifying range 45c moves and accordingly the luminance specifying range 45c increases/decreases in the luminance display bar 45a.

The base slider $45b_1$ holds these lower boundary changing sliders $45b_2$ and upper boundary changing slider $45b_3$ regardless of the movement of the lower boundary changing slider $45b_2$ or the upper boundary changing slider $45b_3$. The length of the base slider $45b_1$ increases/decreases with the movement of the lower boundary changing slider $45b_2$ or the upper boundary changing slider $45b_3$, i.e., with the increase/decrease of the luminance specifying range 45c, as shown in FIG 25A(b).

Moreover, the base slider $45b_1$ can be moved in the horizontal direction by an operation using the cursor 11. In this case, as shown in FIG 25B(a) and FIG 25B(b), these lower boundary changing sliders $45b_2$ and upper boundary changing slider $45b_3$ are held at the same position of the base slider $45b_1$, and the luminance specifying range 45c moves along the luminance display bar 45a while keeping the length in the horizontal direction constant.

Here, in the color palette 42, five columns of color cells 43 respectively corresponding to five luminance values L at equal intervals between the upper border line $45c_U$ and the lower border line $45c_D$ of the luminance specifying range 45c are set. A luminance of the same luminance value is set in the color cells 43 of the same column (a hue of a different hue value H is displayed in the respective color cells 43). In the rightmost column of color cells 43, a luminance of the luminance value L of the upper border line $45c_U$ of the luminance specifying range 45c is set, while in the leftmost column of color cells 43, a luminance of the luminance value L of the lower border line $45c_D$ of the luminance specifying range 45c is displayed. In three columns of color cells 43 between the rightmost column of color cells 43 and the leftmost column of color cells 43, respectively, a luminance of a different luminance value L is displayed at equal intervals between the luminance value L of the upper border line $45c_U$ and the luminance value L of the lower border line $45c_D$. When the luminance value L of a luminance of the upper border line $45c_U$ displayed in the rightmost column of color cells 43 is set to "194" and the luminance value of a luminance of the lower border line $45c_D$ displayed in the leftmost column of color cells 43 is set to "154", then the luminance value L of a luminance displayed in the second column of color cell 43 from the top is "184", the luminance value L of and a luminance displayed in the third column of color cell 43 from the top is "174", and the luminance value L of a luminance displayed in the fourth column of color cell 43 from the top is "164".

Moreover, in this specific example, in place of the selected-luminance value display box 45d in the luminance specifying portion 45 of the color selector 40 shown in FIG 22, two boxes, i.e., the lower (left) boundary selected-luminance value display box $45d_1$ and the upper (right) boundary selected-luminance value display box $45d_2$, are provided, wherein in the lower boundary selected-luminance value display box $45d_1$, the luminance value L (" 154" in the above example) of the upper border line 45cu of the luminance specifying range 45c is displayed, while in the upper boundary selected-luminance value display box $45d_2$, the luminance value L (" 194" in the above example) of the lower border line $45c_D$ of the luminance specifying range 45c is displayed. This makes it possible to confirm the luminance value L in the luminance specifying range 45c and accordingly the luminance value L of the luminance displayed in the color palette 42.

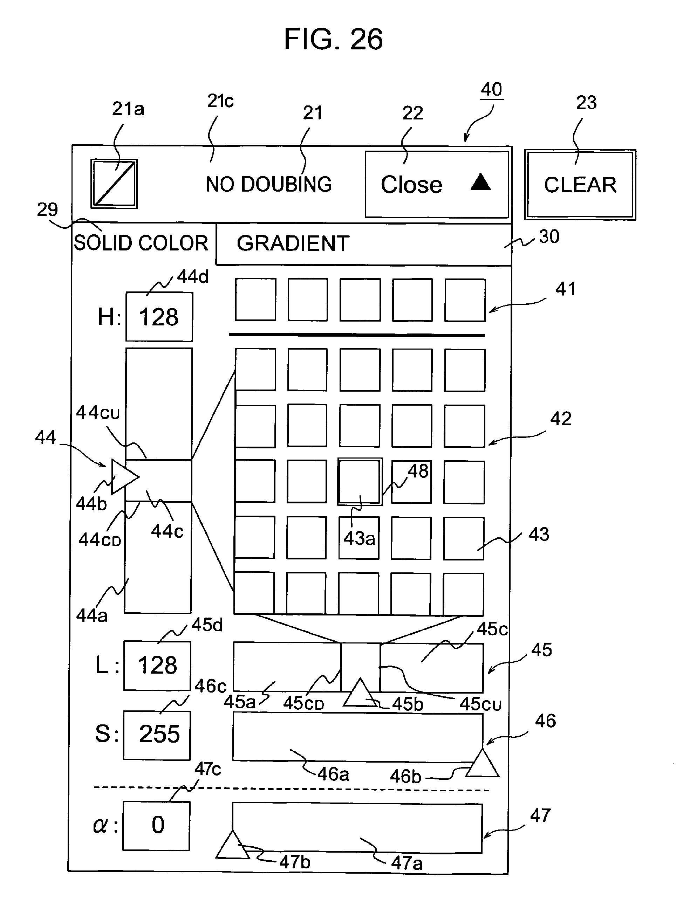

FIG 26 is a view showing one specific example of the display state of the "COLOR" tab 29 in the color selector 40 shown in FIG 22 when the color customization processing in the second embodiment of the method of color customization of a content screen according to the present invention is not performed yet, wherein reference numeral 21d represents a message and 40b represents a color selector. Here, the same reference numerals are given to portions corresponding to those of FIG 22 to omit the duplicated description.

In the color selector 40b with respect to an element (hereinafter, referred to as an object element) not subjected to coloring (including gray as well) in a component, the "COLOR" tab 29 is in a display state shown in FIG 26. Such a state is set, for example, by depressing the "CLEAR" button 23 and canceling the coloring (including gray as well) of the object element.

That is, in the "selection color display" column 21, a fact that the setting color display portion 21a is not displayed in a color, and instead, is attached with a "/" mark, which is a slash mark, and the relevant object element is not colored, and furthermore, in place of the color name 21c, a message 21d "NO DOUBING" is displayed, for example. Accordingly, when the color selector 40b is expanded, it can be confirmed according to a display content in the "selection color display" column 21 whether or not an object element relevant to the color selector 40b is colored (including gray as well). When colored, it can be also confirmed what kind of color (including gray as well) the object element is colored with because the color selector 40 shown in FIG 22 is displayed.

In the color selector 40b, in the hue specifying portion 44, the hue specifying slider 44b is set to a state indicating an intermediate hue value H (="128") of the hue display bar 44a, while in the color selector 42, a hue of this intermediate hue value H is displayed in the row of an intermediate color cell 43. In two rows of color cells 43 on the upper side thereof, hues of the hue values H each higher by "10" by "10" than this intermediate hue value H are displayed, while in two rows of color cells 43 on the lower side thereof, hues of the hue values H each lower by "10" by "10" than this intermediate hue value H are displayed. At the same time, a value "128" which is this intermediate hue value H is displayed in the selected-hue value display box 44d.

Moreover, also in the luminance specifying portion 45, the luminance specifying slider 45b is set to the state indicating an intermediate hue value H (="128") of the luminance display bar 45a. In the color selector 42, the luminance of this intermediate luminance value L is set in the intermediate column of the color cell 43 while in two columns of color cells 43 on the right thereof, luminance's of the luminance values L each higher by "10 " by "10" than this intermediate hue value H are set, and furthermore, in two columns of color cells 43 on the left thereof, luminance's of the luminance values L each lower by "10 " by "10 " than this intermediate hue value H are set. At the same time, a value "128" which is this intermediate luminance value L is displayed in the selected-luminance value display box 45d.

In such a state, by selecting the cell 41a or cell 43 of a desired color (including gray as well) in the gray scale 41 or the color palette 42, as with the color selector 40 shown in FIG 22, in the "selection color display" column 21, a color displayed in the selected cell 41a or cell 43 is displayed in the setting color display portion 21a, and the name 21c of this displayed color is displayed in place of the message 21d. Moreover, the hue or luminance of a color displayed in the color cell 43 of the color palette 42 can be changed by moving the hue specifying slider 44b in the hue specifying portion 44 or by moving the luminance specifying slider 45b in the luminance specifying portion 45.

The state described above is also the same in the color selector 40a shown in FIG 24. However, in the color selector 40a in such a state, the positions of the lower boundary changing slider $44b_2$ and upper boundary changing slider $44b_3$ with respect to the hue display bar 44a are set, so that in the hue specifying portion 44, the hue specifying range 44c becomes a predetermined length (the number of the hue values H from the upper border line $44c_U$ to the lower border line $44c_D$, e.g., a length equal to that of the hue specifying range 44c in the color selector 40 shown in FIG 22) centered around the hue value H at the center of the hue display bar 44a. This is true of the luminance specifying portion 45. Here, the positions of the lower boundary changing slider $45b_2$ and upper boundary changing slider $45b_3$ with respect to the luminance display bar 45a are set so that the luminance specifying range 45c becomes a predetermined length (the number of luminance values L from the upper border line $45c_U$ to the lower border line $45c_D$, e.g., a length equal to the luminance specifying range 45c in the color selector 40 shown in FIG 22) centered around the luminance value at the center of the luminance display bar 45a.

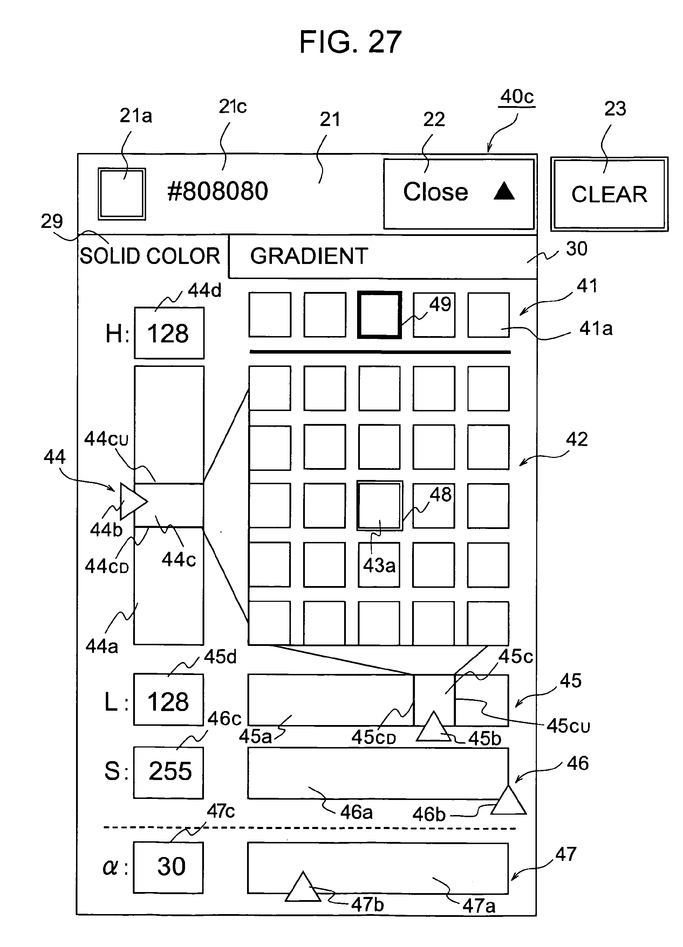

FIG 27 is a view showing one specific example of a default display state of the "COLOR" tab 29 in the color selector 40 shown in FIG 22 when an object element in the second embodiment of the method of color customization of a content screen according to the present invention is subjected to the color customization processing into gray, wherein reference numeral 40c represents a color selector, and the same reference numerals are given to portions corresponding to those of FIG 22 to omit the duplicated description.

When the color selector with respect to the object element, which has been already subjected to the color customization processing into gray in the color customization operation screen 17 shown in FIG 8, is expanded by depressing the "SELECT" button 22 using the cursor 11, then the color selector 40c in its default state shown in FIG 27 is displayed.

In the color selector 40c, in the "selection color display" column 21, a gray which is a color colored to the object element is displayed in the setting color display portion 21a and the name of this gray is displayed in the color name 21c.

Moreover, in the gray scale 41, with the gray cell 41a indicative of a gray displayed in the setting color display portion 21a of the "selection color display" column 21 as the gray cell at the center position, five gray cells 41a, two of which are respectively arranged on both sides of the gray cell 41a at the center position, are arranged. The gray cell 41a at the center position is attached with the selection cell frame 49, indicating that this gray cell 41a is being selected.

In the default state of such a color selector 40c, in the hue specifying portion 44, the hue specifying slider 44b and the hue specifying range 44c are set at the center position of the hue display bar 44a as with the hue specifying portion 44 in the color selector 40b shown in FIG 26, because hue has nothing to do with gray. In contrast, in the luminance specifying portion 45, the luminance specifying slider 45b is set at a position in the luminance display bar 45a corresponding to the luminance value L (e.g., a value of "170") of a gray displayed in the gray cell 41a attached with the selection cell frame 49 at the center of the gray scale 41, and at the same time the luminance specifying range 45c is set at a position corresponding to the position of the luminance specifying slider 45b in the luminance display bar 45a.

Accordingly, in the color palette 42, a color of the luminance value L corresponding to the luminance specifying range 45c positioned in the luminance specifying portion 45 is displayed in the color cell 43 with the hue value H corresponding to the hue specifying range 44c positioned in the hue specifying portion 44.

Here, in the luminance specifying portion 45, as the luminance specifying slider 45b is moved, the luminance value L of each color cell 43 in the color palette 42 varies by "1" by "1" and at the same time, also in the gray scale 41, the luminance value H of a gray in each gray cell 41a also varies by "1" by "1" and its density varies. However, if the selection operation of the cells 41a and 43 is not performed, then the position of the selection cell frame 49 changes and therefore the luminance (density) of the gray cell 43 attached with the selection cell frame 49 varies, and accordingly, also in the setting color display portion 21a of the "selection color display" column 21 indicative of a gray of the gray cell 43 attached with the selection cell frame 49, the luminance (density) of a gray displayed therein varies.

Moreover, in the saturation specifying portion 46, since saturation has nothing to do with a gray, the saturation specifying slider 46b is set at a position of the maximum saturation value S in the saturation display bar 46a, as with the saturation specifying portion 46 in the color selector 40b shown in FIG 26.

Furthermore, in the transparency specifying portion 47, the transparency specifying slider 47b is set at a position of the transparency α (e.g., "30%") of the transparency display bar 47a relevant to the transparency of a gray displayed in the setting color display portion 21a of the "selection color display" column 21.

In this manner, in the default state of the color selector 40c with respect to an object element colored to a gray, the luminance value L and transparency α corresponding to the gray are set in the luminance specifying portion 45 and transparency specifying portion 47 related to the gray, while in the hue specifying portion 44 or saturation specifying portion 46 having nothing to do with the gray, an initial state as described above is set.

Note that the default state of the color selector 40a shown in FIG 24 is also the same with respect to an object element colored to a gray as the above-described one.

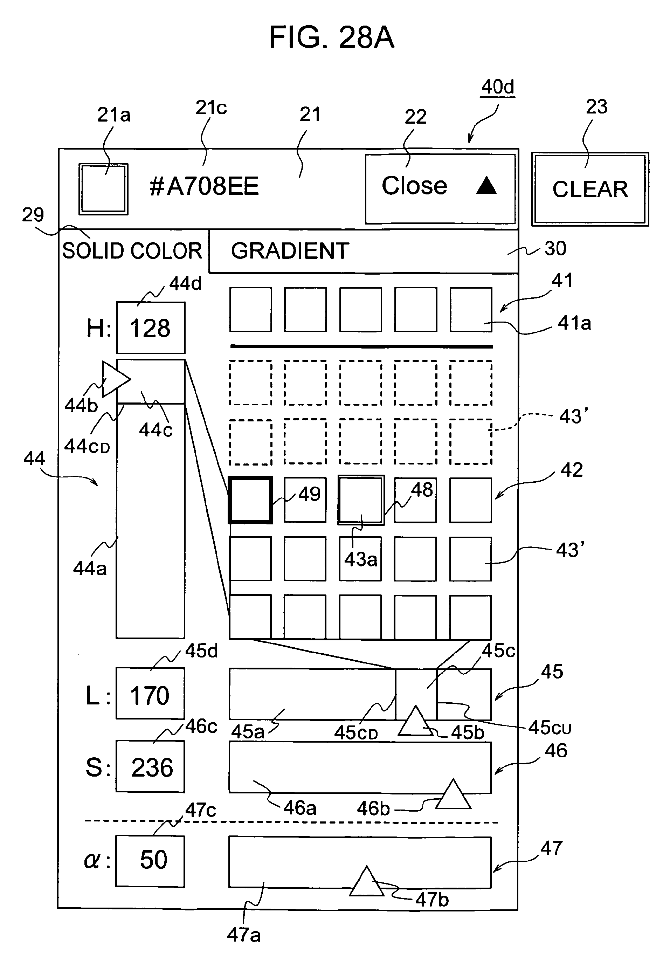

FIG 28A is a view showing one specific example of the operation state in the hue specifying portion 44 of the color selector 40 shown in FIG 22, wherein reference numeral 40d represents a color cell and 43' represents an inactive color cell. Here, the same reference numerals are given to portions corresponding to those of FIG 22 to omit the duplicated description.

In this view, the color selector 40d shows a state where a portion of the hue specifying range 44c protruding from the upper end of the hue display bar 44a when the hue specifying slider 44b is moved upward along the hue display bar 44a in the hue specifying portion 44. In this case, the color cells 43 in the rows corresponding to a portion protruding from the upper end of the hue display bar 44a of the hue specifying range 44c among the rows of color cells 43 in the color palette 42 are the inactive color cells 43'.

Here, since a state is assumed that the hue specifying slider 44b specifies a hue value H="247" of the hue display bar 44a, the hue specifying range 44c protrudes upward from the hue display bar 44a by 12 (=20-(255-247)) hue values. Assuming that there is a distance corresponding to 20 hue values H from the hue specifying slider 44b to the upper border line $44c_u$ of the hue specifying range 44c, and that the hue value H specified by the hue specifying slider 44b in the hue specifying range 44c and the hue values H at intervals of 10 therefrom are set in the rows of color cells 43 displayed in the color selector 42, then the hue values H at intervals of 10 to be displayed in the color selector 42 from the hue value H (="247") specified by the hue specifying slider 44b to the upper border line $44c_U$ are "257" and "267". However, since these hue values H cannot be displayed in the color palette 42 because these protrude from the upper end (hue value H="255") of the hue display bar 44a and do not exist, two rows of color cells 43 from the top corresponding to these hue values H="257" and "267" comprise the unselectable and inactive color cell 43'. In the inactive color cell 43' a color with a hue, a luminance, and a saturation will not be displayed, and for example, the inactive color cell 43' becomes a transparent color cell in which only its frame is displayed. Of course, such an inactive color cell 43' cannot be selected.

Note that, the hue specifying slider 44b is movable until it reaches the upper border line $44c_U$ of the hue display bar 44a, and when the hue specifying slider 44b is moved to this position, the hue value H at the upper border line $44c_U$ is specified. Therefore, although the state in the color palette 42 will not change, the uppermost row (i.e., the third from the bottom) of selectably activated color cells 43 displays a hue of the hue value H in the upper border line 44cu.

Similarly, when the hue specifying slider 44b is moved downward and a portion of the hue specifying range 44c protrudes from the lower end (hue value="0") of the hue display bar 44a, a row of inactive color cells 43' is present on the lower side of the color palette 42.

Note that, in the color selector 40a shown in FIG 24, since the lower boundary changing slider $44b_2$ and the upper boundary changing slider $44b_3$ move from the lower end to upper end of the hue display bar 44a, the row of unselectable and inactive color cells 43' as described above will not occur in the color palette 42.

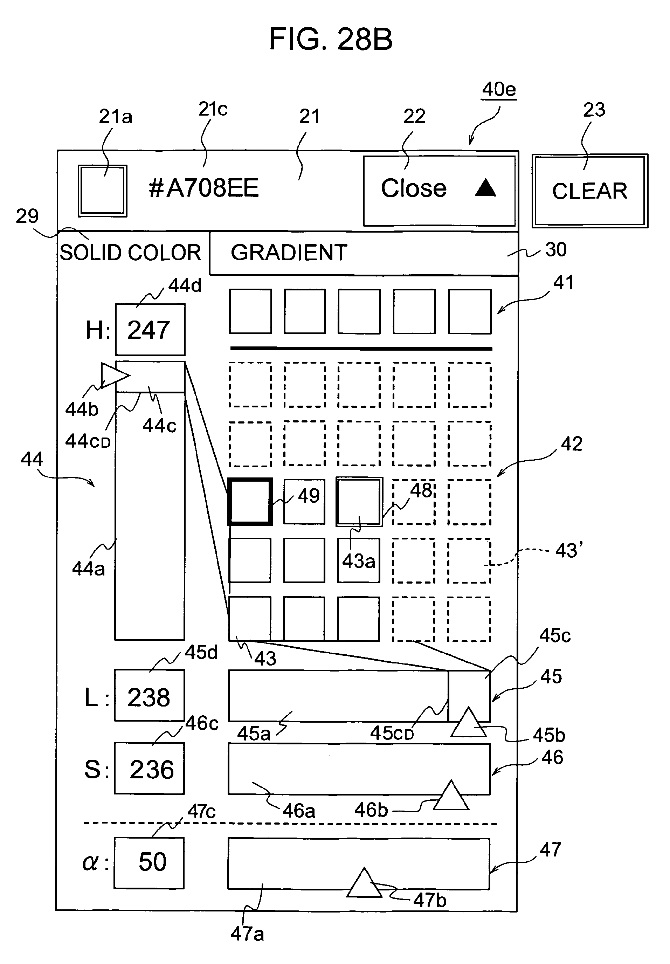

FIG 28B is a view showing one specific example of the state when the luminance specifying slider 45a of the luminance specifying portion 45c is moved to the upper end side of the luminance display bar 45c in the color selector 40d shown in an FIG 28A, wherein reference numeral 40e represents a color selector. Here, the same reference numerals are given to portions corresponding to those of FIG 28A to omit the duplicated description.

In the color selector 40d shown in FIG 28A, and furthermore, in the luminance specifying portion 45, when the luminance specifying slider 45b is moved rightward along the luminance display bar 45a to cause a portion of the luminance specifying range 45c to protrude from the right end of the luminance display bar 45a, the color selector 40e becomes in the state shown in FIG 28B. In this case, among the columns of color cells 43 in the color palette 42, the color cells 43 in columns corresponding to the portion protruding from the right end of the luminance display bar 45a of the luminance specifying range 45c are the inactive color cell 43'.

Here, assuming the luminance specifying slider 45b specifies the luminance value L="238" of the luminance display bar 45a, then the luminance specifying range 45c protrudes rightward from the luminance display bar 45a by 3 (=20-(255, 238)) luminance values. Assuming that there is a distance corresponding to 20 luminance values L from the luminance specifying slider 45b to the right border line $45c_U$ of the luminance specifying range 45c, and that the luminance value L specified by the luminance specifying slider 45b in the luminance specifying range 45c and the luminance values L at intervals of 10 therefrom are set in the columns of color cells 43 displayed in the color selector 42, then the luminance values L at intervals of 10 to be displayed in the color selector 42 from the luminance value L (="238") specified by the luminance specifying slider 45b to the upper border line $45c_U$ are "248" and "258". However, since the luminance value L of "258" exceeding the luminance value L="255" of the right border line $45c_U$ among these luminance values L protrudes from the right end (luminance value L="255") of the luminance display bar 45a and does not exist, it cannot be displayed in the color palette 42. Accordingly, one column of color cells 43 from the right corresponding to the luminance value L="258" comprises the unselectable and inactive color cell 43'. In the inactive color cell 43', a color with a hue, a luminance, and a saturation is not displayed, and for example, the inactive color cell 43' becomes a transparent color cell in which only its frame is displayed. Of course, such an inactive color cell 43' cannot be selected.

Note that, the luminance specifying slider 45b is movable until it reaches the upper border line $45c_U$ of the luminance display bar 45a, and when the luminance specifying slider 45b is moved to this position, the luminance value L at the upper border line $45c_U$ is specified. In this case, as with the case of the state of the hue specifying portion 44, two columns of color cells on the right side of the color selector 42 comprise the inactive color cell 43', and the rightmost (i.e., the third from the left) column of the selectably activated color cells 43 displays a luminance of the luminance value L at the right border line $45c_U$.

Similarly, when the luminance specifying slider 45b is moved to the left and a portion of the luminance specifying range 45c protrudes from the left end (the luminance value L="0") of the luminance display bar 45a, the column of inactive color cells 43' is present on the left side of the color palette 42.

Note that, in the color selector 40a shown in FIG 24, since the left boundary changing slider 45b2 and the right boundary changing slider 45b3 move from the left end to right end of the luminance display bar 45a, the column of unselectable and inactive color cells 43's as described above will not occur in the color palette 42.

Also in the color palette 40 of the second embodiment, as with the color palette in the first embodiment shown in FIG 11, the color cell 43 (including the gray cell 41 as well) whose luminance contrast ratio is less than 4.5:1 between the color (including gray as well) of an element "text/symbol" of a component and a color (including gray as well) of other element, such as a background, adjacent thereto is attached with the "X" mark 31a, and also the color cell 43 (including the gray cell 41 as well) whose luminance contrast ratio of colors (including grays as well) is less than 1.7:1 between adjacent elements other than the element "text/symbol" of a component is attached with the "/" mark 31b.

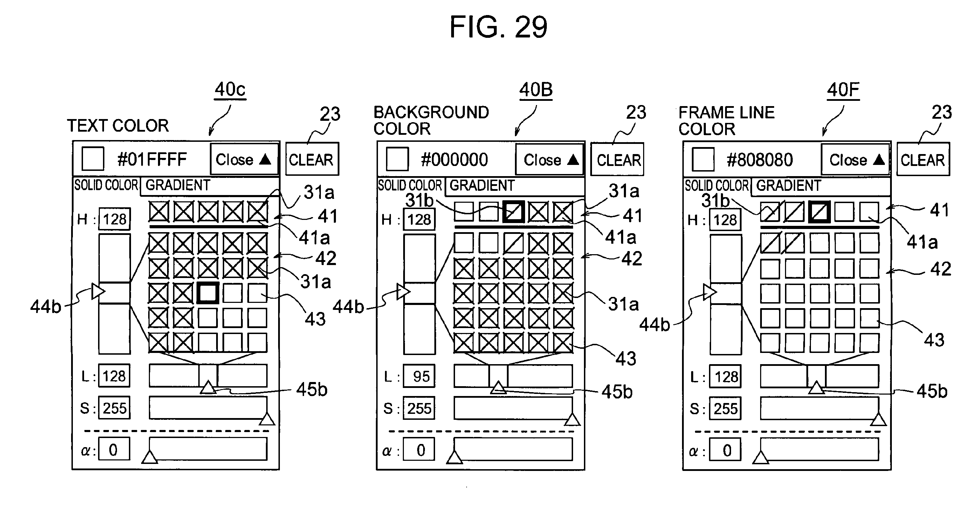

FIG 29 is a view showing one specific example of the state of the color palette in the color selector of each element of one component, wherein reference numeral 40C represents the color selector of an element "text", 40B represents the color selector of an element "background", and 40F represents the color selectors of an element "text". Here, the same reference numerals are given to portions corresponding to those of the above-described views to omit the duplicated description. Note that, in this view, reference numerals are given only to portions required in description.

In this view, in the gray scale 41 or color palette 42 of the color selector 40C of an element "text", the color cell 43 (including the gray cell 41a as well) whose luminance contrast ratio with respect to a color (including gray as well) displayed in the gray scale 41 or color palette 42 of the color selector 40B of an element "background" is less than 4.5:1 is attached with the "X" mark 31a so as not allow such a color cell 43 (including the gray cell 41 as well) to be selected. Similarly, in the gray scale 41 or color palette 42 of the color selector 40B of the element "background", the color cell 43 (including the gray cell 41a as well) whose luminance contrast ratio with respect to a color (including gray as well) displayed in the gray scale 41 or color palette 42 of the color selector 40C of the element "text" is less than 4.5:1 is attached with the "X" mark 31a so as not allow such a color cell 43 (including the gray cell 41 as well) to be selected.

Moreover, in the gray scale 41 or color palette 42 of the color selector 40B of the element "background", the color cell 43 (including the gray cell 41 as well) whose luminance contrast ratio is less than 1.7:1 with respect to a color (including gray as well) displayed in the gray scale 41 or color palette 42 of the color selector 40F of the element "text" is attached with the "/" mark 31b so as not recommend selection of such a color cell 43 (including the gray cell 41a as well). Also in the gray scale 41 or color palette 42 of the color selector 40F of the element "text", the color cell 43 (including the gray cell 41a as well) not recommended to select is attached with the "/" mark 31b similarly.

Although not illustrated here, even if there is the color cell 43 attached with the "X" mark 31a or "/" mark 31b in the color palette 42 as described above, the color cell 43 positioned in the center of the color palette 42, the color cell 43 displaying a color of a hue value specified by the hue specifying slider 44b and a luminance value specified by the luminance specifying slider 45b, is attached with the center cell frame 48 (FIG 22).

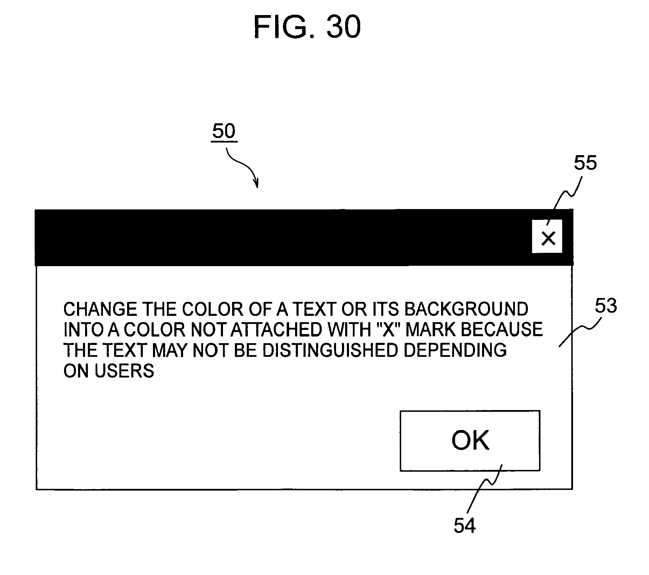

In the color selectors 40C, 40B, and 40F as shown in FIG 29, when the color cell 43 not attached with the "X" mark 31a in the gray scale 41 or the color packet 42 (including the gray cell 41a as well, and accordingly also including a color cell or gray cell attached with the "/" mark 31b) is selected by the operation of the cursor 11 and the "OK" button 26 is depressed as shown in FIG 18, then a display color of each element (the text, background, or frame line) of a component at this time is determined. However, when the color cell 43 (including the gray cell 41a as well) attached with the "X" mark 31a in at least one of the color selector 40C of the element "text" and the color selector 40B of the element "background" is designated by the operation of the cursor 11, and as shown in FIG 18, the "OK" button 26 is depressed, then an instruction screen shown in FIG 30 for prompting a user to select a color (including gray as well) again is displayed.

In FIG 30, reference numeral 50 represents the instruction screen, 53 represents a message, 54 represents an "OK" button, and 55 represents a "X" button.

In such an instruction screen 50, the message 53 indicative of the fact that the color cell 43 (including the gray cell 41a as well) attached with the "X" mark 31a in at least one of the color selector 40C of the element "text" and the color selector 40B of the element "background" is designated by an operation of the cursor 11, for example, the message 53 such as "CHANGE THE COLOR OF A TEXT OR ITS BACKGROUND INTO A COLOR NOT ATTACHED WITH THE "X" BECAUSE THE TEXT MAY NOT BE DISTINGUISHED DEPENDING ON USERS" is displayed, and the "OK" button 54 and the "X" button 55 are provided.

Then, if a user depresses the "OK" button 54 by operating the cursor 11 in response to such a message 53, then the instruction screen 50 is no longer displayed, and the color selector 40C of the element "text", color selector 40B of the element "background", and color selector 40F of the element "frame line" before the color selection is made in the color customization operation screen as shown in FIG 18 are displayed and another color selection is possible.

Note that, when the "X" button 55 is selected with the depression operation of the cursor 11 in such an instruction screen 50, then the instruction screen 50 is no longer displayed and the screen returns to the above-described color customization operation screen including the color selector 40C of the element "text", color selector 40B of the element "background", and color selector 40F of the element "frame line" that have been subjected to color selection. Of course, in the color selector 40C of the element "text", the color selector 40B of the element "background", and the color selector 40F of the element "frame line" in such a color customization operation screen, another color cell 43 (including the gray cell 41a as well) may be selected.

In this manner, even if the color cell 43 (including the gray cell 41a as well) attached with the "X" mark 31a is erroneously selected, the instruction screen 50 is displayed in response to this selection and another selection of the color cell 43 (including the gray cell 41a as well) is immediately allowed.

The points described in FIG 29 and FIG 30 are also the same in other specific examples shown in FIG 24 and FIG 25.

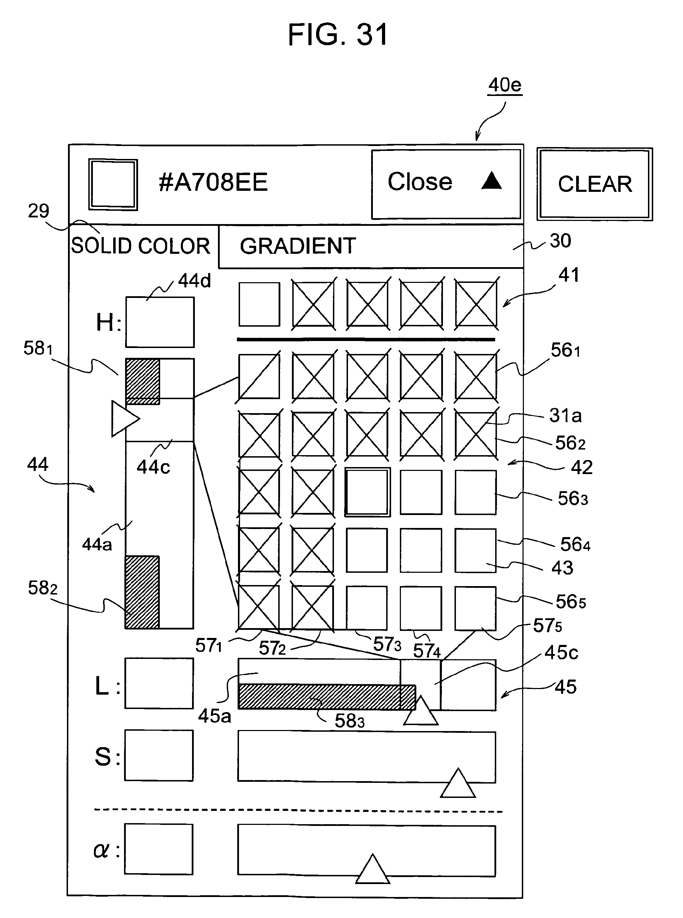

FIG 31 is a view showing an alternative embodiment of the color selector shown in FIG 22, FIG 23, and FIG 26 to FIG 30, wherein reference numeral 40' represents a color selector, $56_1$-$56_5$ represent rows of color cells, $57_1$-$57_5$ represent columns of color cells, and $58_1$-$58_3$ represent unselectable areas. Here, the same reference numerals are given to portions corresponding to those of the above-described views to omit the duplicated description.

In this view, in the color selector 40' as this alternative embodiment, in the color palette 42, the unselectable areas (here, unselectable areas $58_1$, $58_2$) are provided in the areas of the hue display bar 44a of the hue specifying portion 44 relevant to the hue value H displayed in the rows of color cells 43 attached with the "X" mark 31a, and similarly, the unselectable area (here, $58_3$) is provided in an area of the luminance display bar 45a of the luminance specifying portion 45 relevant to the luminance value displayed in a column of color cells 43 attached with the "X" mark 31a.

Here, in the color palette 42, assuming that the rows of color cells 43 are the rows of color cells $56_1$, $56_2$, $56_3$, $56_4$, and $56_5$ sequentially from the top, and the columns of color cells 43 are the rows of color cells $57_1$, $57_2$, $57_3$, $57_4$, and $57_5$ sequentially from the right. Now, in the hue display bar 44a of the hue specifying portion 44, for example, when an area from the upper end of the hue display bar 44a to the upper side within the current hue specifying range 44c is the unselectable area $58_1$, then in the color palette 42, for example, the color cells 43 attached with the "X" mark 31a are present in the first row of color cells $56_1$ and the second row of color cells $56_2$ from the top. Moreover, in the luminance display bar 45a of the luminance specifying portion 45, for example, when an area from the left end thereof to the left side within the current luminance specifying range 45c is the unselectable area $58_3$, then in the color palette 42, for example, the color cells 43 attached with the "X" mark 31a are present in the first row of color cells 571 and the second row of color cells 572 from the left.

In response to the color selection in other element of the same component, the color cell 43 to be attached with the "X" mark 31a in the color selector 40 will change and at the same time, the unselectable area 58 in the hue display bar 44 or luminance display bar 45a will change.

When a relevant element is subjected to color customization, the color cell 43 not attached with the "X" mark 31a is to be selected. However, if there are only unselectable color cells 43 in the color palette 42 and the color selection for color customization cannot be made, then in the specific example shown in FIG. 22, the hue specifying slider 44b or the luminance specifying slider 45b needs to be operated so as to display the color cell 43 of a hue or luminance not attached with the "X" mark 31a in the color palette 42, and such a color cell 43 may not be displayed for a long time depending on the moving directions of these sliders 44b and 45b. However, in the specific example shown in FIG 31, since a range of the hue value H or a range of the luminance value L where the "X" mark 31a is attached can be recognized from the unselectable area 58 at a glance in the hue display bar 44a or the luminance display bar 45a, the color cell 43 displayed in a color with a hue or luminance not attached with the "X" mark 31a can be displayed in the color palette 42 quickly and appropriately.

Note that the points described above are also the same in other specific examples shown in FIG 24 and FIG 25.

Although the unselectable areas $58_1$, $58_2$ have been described assuming these areas contain the hue value H of an unselectable color displayed in the color cell 43 attached with the "X" mark 31a, these areas may contain the hue value H of a color, which is selectable but not recommended to select, displayed in the color cell 43 attached with the "/" mark 31b. Likewise, although the unselectable area 583 has been described assuming this area contains the luminance value L of an unselectable color displayed in the color cell 43 attached with the "X" mark 31a, this area may contain the luminance value L of a color, which is selectable but not recommended to select, displayed in the color cell 43 attached with the "/" mark 31b.

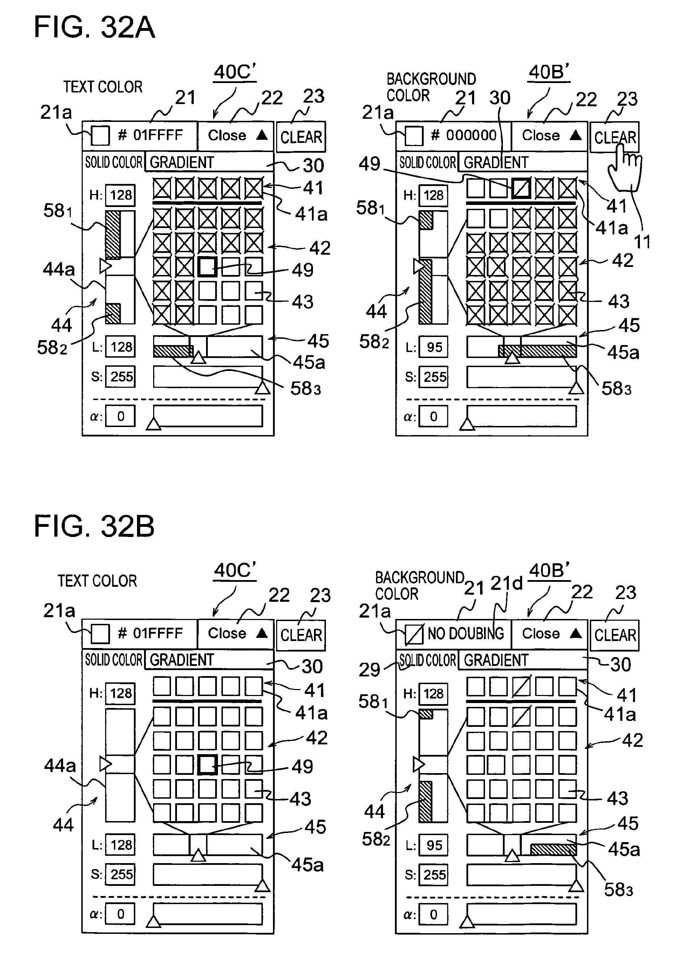

FIG 32A is a view showing a change in the state of the color selector 40C in FIG 9 with the configuration shown in FIG 3 when the "CLEAR" buttons 23 of the color selectors 40C is operated, and FIG 32B is a view showing a change in the state of the color selector 40B in FIG 9 with the configuration shown in FIG 3 when the "CLEAR" buttons 23 of the color selectors 40B is operated, wherein reference numeral 40C' represents a color selector of the element "text", and 40B' represents a color selector of the element "background". Here, the same reference numerals are given to portions corresponding to those of the above-described views to omit the duplicated description.

In FIG 32A, because the color selection has been made, in the color selector 40C' of the element "text" and the color selector 40B' of the element "background", the color cells 43 are attached with the "X" mark 49 and displayed in the color palette 42. Here, for simplicity of description, it is assumed that the color selector 40C' of the element "text" has the configuration shown in FIG 31 and is in the same state as the color selector 40C of the element "text" shown in FIG 29, wherein one color cell 43 in the color palette 42 is selected and attached with the selection cell frame 49, and that the color selector 40B' of the element "background" has the configuration shown in FIG 31 and is in the same state as the color selector 40B of the element "background" shown in FIG 29, wherein one gray cell 41a in the gray scale 41 is selected and attached with the selection cell frame 49.

In such a display state, now, if the "CLEAR" button 23 in the color selector 40B' of the element "background" is depressed with the cursor 11, then as shown in FIG 32B, in the color selector 40B' of the element "background", the selected state of a color is canceled and then in the gray cell 41a attached with the selection cell frame 49 in the gray scale 41, the selection cell frame 49 is excluded, and at the same time, in the "selection color display" column 21, the color of the setting color display portion 21a is canceled and the "/" mark is attached and also the message 21d is changed to " NO DOUBING".

Because the selection of the color of the element "background" is excluded, in the color selector 40C' of the element "text", as shown in an FIG 32B, the hues and luminance's with which the color selection has been disabled due to the color selection in the color selector 40B' of the element "background" become selectable, and the unselectable areas 581, 582, and 583 set in the hue display bar 44a of the hue specifying portion 44 and in the luminance display bar 45a of the luminance specifying portion 45 are excluded and at the same time the "X" mark 31a attached to the color cell 43 of the color palette 42 is excluded.

Accordingly, in the color selector 40C' of the element "text", only the color's selection state is held, and with respect to the currently selected hue or gray, the relevant color cell 43 in the color palette 42 or the relevant gray cell 41a in the gray scale 41 is attached with the selection cell frame 49, and a color (including gray as well) relevant to this is displayed, as it is, in the setting color display portion 21a of the "selection color display" column 21.

On the other hand, in the color selector 40B' of the element "background", the unselectable hue or luminance is determined according to the color (including gray as well) selected in the color selector 40C' of the element "text", and as a result, the unselectable areas 581, 582 change in the hue display bar 44a of the hue specifying portion 44 and the unselectable area $58_3$ changes in the luminance display bar 45a of the luminance specifying portion 45. Moreover, the color cell 43 or gray cell 41a attached with the "X" mark 31a in the color palette 42 or the gray scale 41 will change. In the gray scale 41 and the color palette 42 of the color selector 40C' of the element "text" shown in FIG 32B, a state is shown where all the "X" marks 31a are excluded from the gray scale 41 and the color palette 42.

In this manner, if the color selection in one color selector is canceled, then the color-selection disabled state in the other color selector is canceled and a desired color can be selected from all the colors, and also in the color selector, in which the color selection is canceled, the color-selection disabled state is changed.

Note that, in the above example, one of two color selectors is the color selector of the element "text", however, the points described above are also the same with respect to two color selectors other than the color selector of the element "text" and also with respect to the non-recommended color (including gray as well) indicated by the "/" mark 31b.

Moreover, the points described above are also the same with respect to the color selector having the configuration shown in FIG 24 and FIG 25.

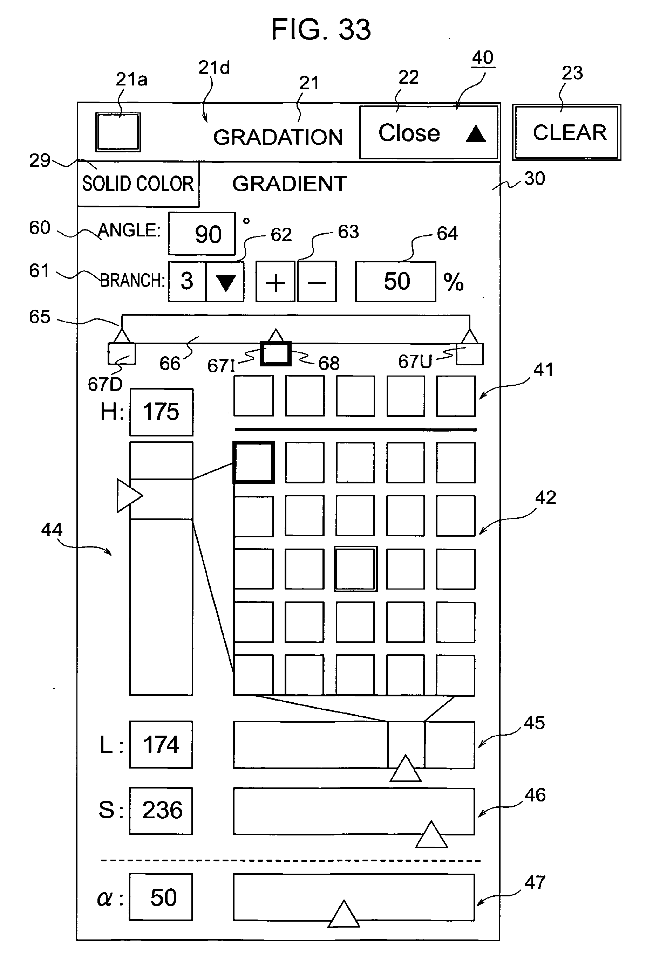

FIG 33 is a view showing a state when the "gradation" tab 30 is selected in the color selector 40 shown in FIG 22, wherein reference numeral 60 represents a gradation angle setting portion, 61 represents a gradation branch point setting portion, 62 represents a number-of branch points display portion, 63 represents a branch point increment/decrement portion, 64 represents a selection branch point position display portion, 65 represents a gradation display portion, 66 represents a gradation bar, 67L represents a left end indicator, 67R represents a right end indicator, 67I represents an intermediate portion indicator, and 68 represents a selection frame. Here, the same reference numerals are given to portions corresponding to those of the above-described views to omit the duplicated description.

In this view, the "gradation" tab 30 is for setting the gradation of a color or gray of the area of an element of a component, such as a "text", a "background", or a "frame line". The "GRADATION" tab 30 includes the gradation angle setting portion 60 for setting the direction (angle) of the gradation of a color or gray set in the display area of an element of a component, the gradation branch point setting portion 61, and the gradation display portion 65. The "GRADATION" tab 30 further includes the gray scale 41, the color scale 42, the hue specifying portion 44, the luminance specifying portion 45, the saturation specifying portion 46, and the transparency specifying portion 47. However, these are for specifying a color (including gray as well) in a gradation, and are the same as those of the "COLOR" tab 29 previously described, so the duplicated description is omitted.

First, the gradation display portion 65 is described. Here, the left end indicator 67L is set at the left end of the oblong gradation bar 66 and the right end indicator 67R is set at the right end, respectively, and one or more intermediate portion indicators 67I are set as needed between these left end indicator 67L and right end indicator 67R.

Here, in the respective left end indicator 67L, right end indicator 67R, and intermediate portion indicator 67I, at a position (the left end, the right end, or an intermediate position thereof) that is indicated by each of the indicators on the gradation bar 66 with the use of the gray scale 41 or the color palette 42, a selected color (including gray as well) can be displayed by selecting a desired color among the colors (including gray as well) displayed in the gray cell 41a of the gray scale 41 or in the color cell 43 of the color palette 42. The method of displaying the color comprises the steps of selecting the indicator 67 desired to color among the left end indicator 67L, the right end indicator 67R, and the intermediate portion indicator 67I (hereinafter, generally referred to as the indicator 67), and next, selecting the gray cell 41a or color cell 43 indicative of a desired color (including gray) (which is desired to be used in coloring) with the use of the gray scale cell 41 or color palette 42 so as to color a position indicated by the relevant indicator 67 in the gradation bar 66. When colored in this manner, the gradation of a color is set at positions between the left end indicator 67L and the intermediate portion indicator 67I in the gradation bar 66 (i.e., the gradation (changes in a color) from a setting color at the left end of the gradation bar 66 indicated by the left end indicator 67L to a setting color at the intermediate position of the gradation bar 66 indicated by the intermediate portion indicator 67I). Moreover, the gradation of a color is set at positions between the intermediate portion indicator 67I and the right end indicators 67R (i.e., the gradation from a setting color at the intermediate position of the gradation bar 66 indicated by the intermediate portion indicator 67I to a setting color at the right end of the gradation bar 66 indicated by the right end indicator 67R).

The left end of the gradation bar 66 indicated by the left end indicator 67L, the right end of the gradation bar 66 indicated by the right end indicator 67R, and the intermediate position of the gradation bar 66 indicated by the intermediate portion indicator 67I are the branch points. The gradation branch point setting portion 61 comprises: the number-of-branch points display portion 62 indicative of the number of branch points set in the gradation bar 66; the branch point increment/decrement portion 63 for incrementing/decrementing the number of these branch points (i.e., for adding or deleting the intermediate portion indicator 67I, and the like); and the selection branch point position display portion 64 displaying a branch point (i.e., a position on the gradation bar 66 of the selected indicator 67 among the left end indicator 67L, the right end indicator 67R, and the intermediate portion indicators 67I) in percent (%). Here, assuming the intermediate portion indicator 67I is the selected indicator 67 and the intermediate portion indicator 67I is at a position of 50% of the gradation bar 66, then "50%" is displayed in the selection branch point position display portion 64. Note that, in the selection branch point position display portion 64, as far as the same indicator 67 is selected, a percent (%) indicative of the position of the indicator 67 is displayed. In two or more indicators 67 in the gradation bar 66, any of them is selected and accordingly in the selection branch point position display portion 64, the position of the selected indicator 67 is always displayed.

The selected indicator 67 is attached with the selection frame 68 of a predetermined color (e.g., blue) so as to surround the selected indicator 67. Here, it is assumed that the intermediate portion indicator 67I has been selected.

The number of branch points is two at minimum and cannot be set to one nor zero, and a numerical value displayed in the number-of-branch points display portion 62 is at least "2". Moreover, in the number-of-branch points display portion 62, a pull down menu indicative of a series of numbers of branch points (i.e., indicators 67) is expanded by depressing a portion labeled with a "solid triangle" using the cursor 11 (not shown), and then by selecting one of them, the branch points (indicators 67) as many as this number are displayed along the gradation bar 66.

Moreover, any of the indicators 67 can be moved along the gradation bar 66 by an operation using the cursor 11, and even in this case, the color at a position on the gradation bar 66 indicated by the moving indicator 67 will not change. Accordingly, for example, as the intermediate portion indicator 67I is moved, the color set with respect to the intermediate portion indicator 67I on the gradation bar 66 similarly moves on the gradation bar 66. As a result, the tendency of the gradation of a color (including gray as well) between the intermediate portion indicator 67I and the left end indicator 67L or the right end indicator 67R changes. For example, if the intermediate portion indicator 67I is brought close to the left end indicator 67L, the gradation (changes in a color) of a color (including gray) from the left end indicator 67L to the intermediate portion indicator 67I becomes abrupt, and moreover, at this time, the gradation of a color (including gray) from the intermediate portion indicator 67I to the right end indicator 67R becomes gradual because the intermediate portion indicator 67I is away from the right end indicator 67R.

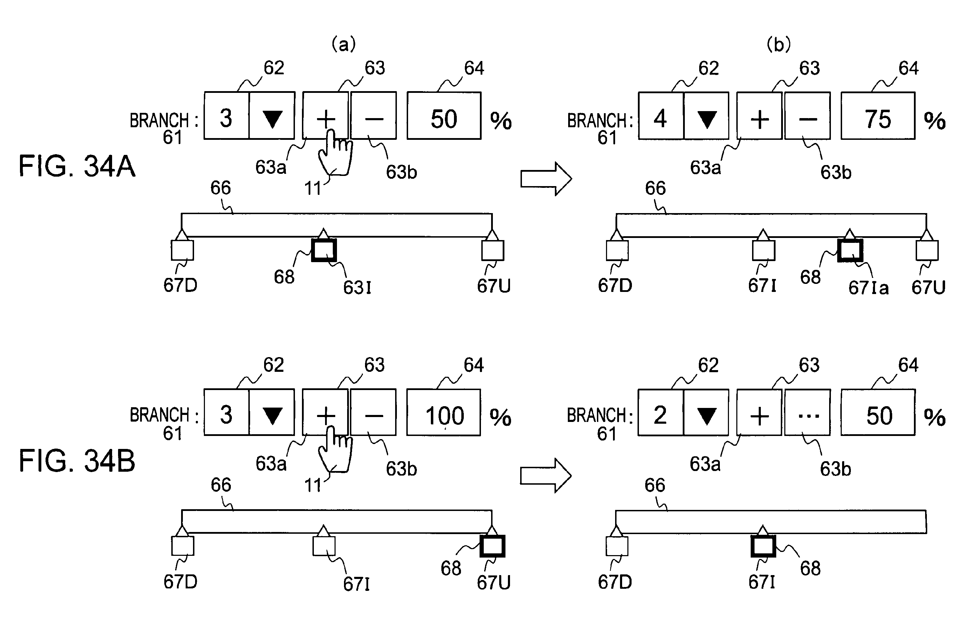

Next, the operation of the branch point increment/decrement portion 63 of the gradation branch point setting portion 61 is described referring to FIGS. 34A and 34B. In this view, reference numeral 67Ia represents the intermediate portion indicator, 63a represents a "+" button, and 63b represents a "-" button, wherein the same reference numerals are given to portions corresponding to those of FIG 33 to omit the duplicated description.

The branch point increment/decrement portion 63 comprises the "+" button 63a and the "-" button 63b, wherein the "+" button 63a is for incrementing the number of intermediate portion indicators in the gradation bar 66, and increments the number of the intermediate portion indicators by one for each depression operation in the cursor 11. Moreover, the "-" button 63a is for decrementing the number of intermediate portion indicators in the gradation bar 66, and decrements the number of the intermediate portion indicators by one for each depression operation in the cursor 11.

FIG 34A shows an operation of the "+" button 63a, wherein FIG 34A(a) shows a state where the same intermediate portion indicator 67I as the one shown in FIG 33 is selected. When the "+" button 63a is depressed with the cursor 11 in such a state, a new intermediate portion indicator 67Ia is added and displayed at the intermediate position between the currently selected intermediate portion indicator 67I and the indicator on the right thereof (here, the right end indicator 67R), as shown in FIG 34A(b). Here, as with FIG 33, assuming the position on the gradation bar 66 of the intermediate portion indicator 67I is the position of "50%" (this "50%" is displayed in the selection branch point position display portion 64, in this case), then the new intermediate portion indicator 67Ia is displayed at the position of "75%", which is the intermediate position between the intermediate portion indicator 67I and the right end indicator 67R, in the selected state (accordingly, in the state where the new intermediate portion indicator 67Ia in place of the intermediate portion indicator 67I is attached with the selection frame 68). In the selection branch point position display portion 64, "75%" indicative of the position of the new intermediate portion indicator 67Ia currently selected is displayed. Moreover, the display in the number-of-branch points display portion 62 is changed from a value "3" to a value "4" because the number of indicators 67 is incremented by one.

In this manner, as the "+" button 63a is operated using the branch point increment/decrement portion 63, one intermediate portion indicator 67I is added for each operation. The addition position of the indicator 67I in this case is the intermediate position between the intermediate portion indicator 67I currently selected and the indicator 67 on the right thereof. Then, when the "+" button 63a is operated in the state of FIG 34A(b), a new intermediate portion indicator 67I is added at the intermediate position between the intermediate portion indicator 67Ia currently selected and the right end indicator 67R on the right thereof. This position corresponds to "83%" (the fractional part is rounded up), and the new intermediate portion indicator 67I becomes in the selected state and this position "83%" is displayed in the selection branch point position display portion 64.

In this manner, the added intermediate portion indicator 67Ia is also brought in the selection state where it is attached with the selection frame 68, and then by selecting a gray or color with the gray scale 41 or color palette 42, this selected color (including gray as well) can be set at a position of the intermediate portion indicator 67Ia of the gradation bar 66. Accordingly, in the state shown FIG 34A(b), between the position of the intermediate portion indicator 67I and the position of the intermediate portion indicator 67Ia or between the position of the intermediate portion indicator 67Ia and the position of the right end indicator 67R, the gradation starting from a color (including gray) set at the position of the intermediate portion indicator 67Ia is set.

Note that, when the selected indicator 67 is the right end indicator 67R, there is no indicator 67 on the right thereof and therefore even if the "+" button 63a is operated at this time, a new intermediate portion indicator 67I will not be added. That is, at this time the "+" button 63a is set in the inactive state.

Moreover, here, if the "+" button 63a of the branch point increment/decrement portion 63 is operated, then a new intermediate portion indicator 67I shall be added at a position between the intermediate portion indicator 67Ia currently selected and the indicator 67 on the right thereof, however, the new intermediate portion indicator 67I may be added at a position between the intermediate portion indicator 67Ia currently selected and the indicator 67 on the left thereof However, in this case, if the selected indicator 67 is the left end indicator 67L, the "+" button 63a becomes inactive because there is no indicator 67 on the left thereof.

FIG 34B shows an operation of the "-" button 63b, wherein FIG 34B(a) shows a state where the right indicator 67R is selected, which is the same state as in FIG 33. When the "-" button 63b is depressed with the cursor 11 in such a state, as shown in FIG 34B(b), the selected right end indicator 67R is deleted and the deleted indicator 67, i.e., the indicator 67 on the left of the right end indicator 67R, (here, the intermediate portion indicator 67I) is selected. Accordingly, the intermediate portion indicator 67I is attached with the selection frame 68, and "50%" corresponding to the position of the newly selected intermediate portion indicator 67I is displayed in the selection branch point position display portion 64. Moreover, the display in the number-of-branch points display portion 62 is changed from a value "3" to a value "2" because the number of indicators 67 is decremented by one.

Similarly, when the left end indicator 67L is selected and the "-" button 63b is operated, the left end indicator 67L is deleted, and moreover, similarly when the intermediate portion indicator 67I is selected and the "-" button 63b is operated, the intermediate portion indicator 67I is deleted.

Since there remain only two indicators 67, i.e., the left end indicator 67L and the right end indicator 67R, in the gradation bar 66, the gradation (changes in a color (including gray)) from a color set by the left end indicator 67L to a color set by the right end indicator 67R has been set while in the area of a relevant element, such a gradation is set with an angle set by the gradation angle setting portion 60 from one end to the other end. However, as shown in FIG 34B (b), if two indicators 67 are the left end indicator 67L and the intermediate portion indicator 67I, then the gradation from a color set by the left end indicator 67L to a color set by the intermediate portion indicator 67I will be set with an angle set by the gradation angle setting portion 60 from one end to the other end in the area of a relevant element.

Moreover, when the number of indicators 67 set in the gradation bar 66 is two (in this case, the display in the number-of-branch points display portion 62 is a value "2"), the number of indicators 67 cannot be reduced any more and the "-" button 63b of the branch point increment/decrement portion 63 becomes inactive and there is no response even if this button is depressed with the cursor 11.

As described above, by operating the branch point increment/decrement portion 63, the branch indicator 67I can be added or deleted and the mode of the gradation of a color (including gray as well) set in the area of an element can be suitably set.

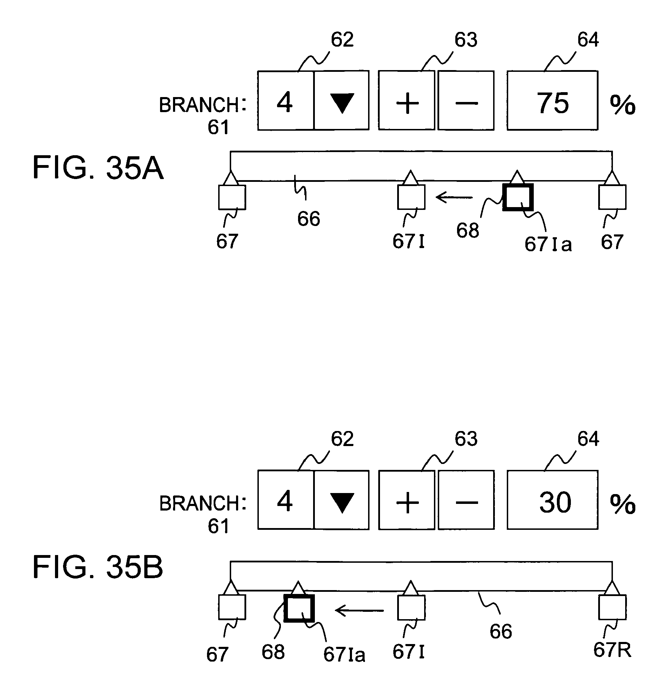

Next, the operation of the intermediate portion indicator 67I in FIG 33 is described referring to FIG 35. Note that, in this view, portions corresponding to those of FIG 34 are given the same reference numerals to omit the duplicated description.

FIG 35A shows a state similar to that in FIG 34A(b), showing an operation of the "+" button 63a. Here, in the state shown in FIG 33, assume that the intermediate portion indicator 67Ia is added between the intermediate portion indicator 67I and the right end indicator 67R and that at the position of the intermediate portion indicator 67Ia in the gradation bar 66, a desired color (including gray) is set in the gray scale 41 or color palette 42.

In such a state, if the intermediate portion indicator 67Ia is brought into the selection state where it is attached with the selection frame 68, and the cursor 11 (not shown) is moved, then the intermediate portion indicator 67Ia can be moved along the gradation bar 66. Now, as the cursor 11 is moved in the direction of the left end indicator 67L indicated by an arrow, the intermediate portion indicator 67Ia moves. Here, this movement of the intermediate portion indicator 67Ia is not affected by other intermediate portion indicator 67I, and as shown in FIG 35B, the intermediate portion indicator 67Ia can be moved beyond the intermediate portion indicator 67I and to the left end indicator 67L side of the intermediate portion indicator 67I. Here, assume the intermediate portion indicator 67Ia is moved from the position "75%" of the gradation bar 66 and beyond the position "50% of the intermediate portion indicator" 67I to the position "30%". In this case, in the selection branch point position display portion 64, "30%" indicative of the position of the intermediate portion indicator 67Ia is displayed. The movement of the intermediate portion indicator 67Ia is the same also in the direction of the right end indicator 67R opposite to the above-described direction. However, the intermediate portion indicator 67Ia cannot be moved to the position of the right end indicator 67R nor the left end indicator 67L.

In this manner, the position of the intermediate portion indicator 67a can be arbitrarily changed within the gradation bar 66, so that the mode of the gradation of a color (including gray as well) in an element can be set arbitrarily.

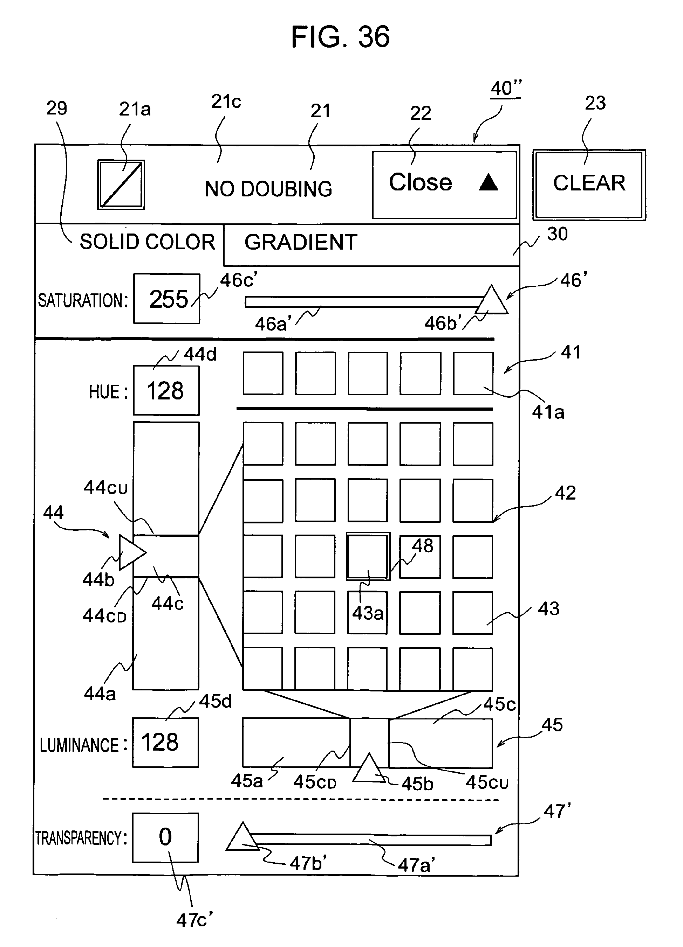

FIG 36 is a view showing one specific example of the color selector expanded in the color customization operation screen as shown in FIG 8, in a third embodiment of the method of color customization of a content screen according to the present invention, wherein reference numeral 40" represents a color selector, 46' represents a saturation specifying portion, 46a' represents a saturation display bar, 46b' represents a saturation specifying slider, 46c' represents a selected-saturation value display box, 47' represents a transparency specifying portion, 47a' represents a transparency display bar, 47b' represents a transparency specifying slider, and 47c' represents a selected-transparency display box. Here, the same references are given to portions corresponding to those of FIG 22 numerals to omit the duplicated description.

In this view, the color selector 40" of this specific example differs from the color selector 40 shown in FIG 22 in that in the "color" tab 29, the saturation specifying portion 46' and the transparency specifying portion 47' differ from the saturation specifying portion 46 and the transparency specifying portion 47, respectively, while the gray scale 41, the color palette 42, and the luminance specifying portion 45 in this example are the same as the gray scale 41, the color palette 42, and the luminance specifying portion 45 in the color selector 40 shown in FIG 22.

The saturation specifying portion 46' is arranged above the gray scale 41 and the hue specifying portion 44, and comprises the saturation display bar 46a', the saturation specifying slider 46b', and the selected-saturation value display box 46c'. Here, a color with the saturation corresponding to the saturation value of the saturation display bar 46a in the saturation specifying portion 46 in FIG 22 is displayed. However, the saturation display bar 46a' in the saturation specifying portion 46' has an oblong and narrow bar (rod) shape, as shown in the view so that the position of this bar corresponds to a saturation value. Here, as with the saturation display bar 46 in FIG 22, the left end of the saturation display bar 46a' is the minimum saturation value "0" and the right end is the maximum saturation value "255". A saturation value in the saturation display bar 46a' is selected by means of the saturation specifying slider 46b', and the saturation value to select is varied by moving the saturation specifying slider 46b' along the saturation display bar 46a'.

When a color corresponding to a saturation is displayed in the saturation display bar 46a' as with the saturation display bar 46a in the saturation specifying portion 46 shown in FIG 22, then a selected saturation displayed in the saturation display bar 46a may look differ from a saturation that thereby actually appears in an element, which may confuse users. In this specific example, in order to avoid this, the saturation display bar 46a' is presented in a narrow bar shape that does not represent a color.

Note that, in the selected-saturation value display box 46c' in the saturation specifying portion 46', as with the selected-saturation value display box 46c in the saturation specifying portion 46 in the color selector 40 shown in FIG 22, a saturation value selected by the saturation specifying slider 46b' in the saturation display bar 46a' is displayed. In the selected-saturation value display box 46c in the saturation specifying portion 46 in the color selector 40 shown in FIG 22, in order to explicitly specify a target (the selected saturation value) to be displayed in the selected- saturation value display box 46c, "S:" is displayed with a symbol "S" indicative of saturation. However, in this specific example, in order to make clearer a target to be displayed, in the selected-saturation value display box 46c, as its title, a name, e.g., " saturation: ", indicative of the target to be displayed is displayed.

In this manner, in this specific example, the saturation specifying portion 46' is arranged above (i.e., on the uppermost side of) the other specifying portions, so that a user pays attention to the saturation specifying portion 46' first when the user operates the color selector 40". Usually, when the saturation value is a value "0", the color remains a gray even if a user operates other specifying portion, and the user may repeatedly operates just the hue or luminance without noticing this fact. However, by arranging the saturation specifying portion 46' above the other specifying portions in this manner, the probability of a user paying attention to the saturation specifying portion 46' increases to prompt the user to select a saturation first. As a result, the saturation can be a target for the operation at the same level as the hue or luminance, thereby facilitating the selection of a color.

Moreover, since the name of a target for the selection operation is displayed in the selected-saturation value display box 46c', a user can easily recognize that the saturation specifying portion 46' is for adjusting the saturation of a color. As a result, the saturation specifying portion 46' is also handled in selecting a color (including gray as well) to the same level as the hue specifying portion 44 or the luminance specifying portion 42 is.

The transparency specifying portion 47', as with the saturation specifying portion 46', comprises the transparency display bar 47a', the transparency specifying slider 47b', and the selection transparency-values display box 47c'. Here, although a color with a transparency corresponding to a transparency of the transparency display bar 47a in the transparency specifying portion 47 in FIG 22 is displayed, the transparency display bar 47a' in the transparency specifying portion 47' has an oblong and narrow bar (rod) shape as shown in the view so that a position of this bar corresponds to a transparency. Here, as with the transparency display bar 47a in FIG 22, the left end of the transparency display bar 47a' is the minimum transparency "0" and the right end is the maximum transparency "255". The transparency in the transparency display bar 47a' is selected with the transparency specifying slider 47b', and the transparency to select is varied by moving the transparency specifying slider 47b' along the transparency display bar 47a'.

Moreover, the transparency specifying portion 47' is similar to the transparency specifying portion 46', and as with the transparency display bar 47a in the transparency specifying portion 47 shown in FIG 22, if a color corresponding to a transparency is displayed in the transparency display bar 47a, then the selected transparency displayed in the transparency display bar 47a may look different from a transparency that thereby actually appears in an element, which may confuse users. In this specific example, in order to avoid this, the transparency display bar 47a' is presented in a narrow bar shape that does not represent a color.

Note that, also in the selected-transparency value display box 47c' in the transparency specifying portion 47', as with the selected-transparency display box in the transparency specifying portion 47 in the color selector 40 shown in FIG 22, a transparency selected with the transparency specifying slider 47b' in the transparency display bar 47a' is displayed. However, as with the saturation specifying portion 46', in place of the symbol "$\alpha$" indicative of a transparency as the title in the selected-transparency display box 47c in FIG 22, in this specific example, in order to make clearer a target to be displayed, a name, e.g., " transparency:", indicative of the target to be displayed is displayed in the selection transparency-values display box 47c' as its title.

The "color" tab 29 of the color selector 40" of this specific example differs from the "color" tab 29 in the color selector 40 shown in FIG 22 in the above-described points. The gray scale 41, the color palette 42, and the hue specifying portion 44 in this specific example correspond to the gray scale 41, the color palettes 42, and the hue specifying portion 44 of the "color" tab 29 in the color selector 40 shown in FIG 22, respectively. However, in the selected-luminance value display box 45d in the hue specifying portion 44 or in the selected-hue value display box 44d in the luminance specifying portion 45, as with the selected-saturation value display box 46c' or selection transparency-values display box 47c' described above, the name of an object to be displayed is displayed with an expression, for example, such as "hue" or " luminance ", as shown in the view.

Points other than the above-described ones are the same as those of the embodiments previously described. For example, as the hue specifying portion 44 or luminance specifying portion 45, the hue specifying slider 44b' or luminance specifying slider 45b' having the configuration shown in FIG 24' can be used, and the displays shown in FIGS. 28A, 28B and FIG 29 to FIG 32 can be implemented.

Similarly with regard to the "gradation" tab 30, for example, in the "gradation" tab 30 shown in FIG 33, the gray scale 41, the color palette 42, the hue specifying portion 44, the saturation specifying portion 46, and the transparency specifying portion 47 shall have the configuration of the gray scale 41, the color palette 42, the hue specifying portion 44, the saturation specifying portion 46', and the transparency specifying portion 47' shown in FIG. 36, respectively.

It should be further understood by those skilled in the art that although the foregoing description has been made on embodiments of the invention, the invention is not limited thereto and various changes and modifications may be made without departing from the spirit of the invention and the scope of the appended claims.

**Claims**

**1.** A method of color customization of a content screen (2), the method supporting selection of a color of a component (100, 200) displayed in the content screen, the method comprising the steps of:

designating a component (100, 200) that is a target for color selection in the content screen (2) and displaying a color customization operation screen (17);
in the color customization operation screen, displaying a color palette for color selection (29c) for each element constituting the designated component as well as a color palette for color selection for each element constituting other component adjacent to the designated component; and
selecting desired colors by using of the color palettes (29c) and thereby displaying an element of the selected component and an element of the other component in each selected colors.

**2.** The method of color customization of a content screen according to claim 1, wherein the component comprises a text (101) and a background (200) as its elements, and further includes a frame line (103) as its element as occasion demands.

3. The method of color customization of a content screen (2) according to claim 2, further comprising the steps of:

in either one of the color palette for the text as the element and the color palette for the background as the element, judging a color, whose luminance contrast ratio between the text and the background becomes less than a first ratio, to be unselectable color and attaching a mark indicative of the unselectable color to this color (31a); and
in either one of the color palettes with respect to the respective two elements other than the text as the element, judging a color, whose luminance contrast ratio between these elements becomes less than a second ratio, as an unrecommended color and attaching a mark indicative of the unrecommended color to this color (31a).

4. The method of color customization of a content screen (2) according to claim 3, wherein the first ratio is 4.5:1 and the second ratio is 1.7:1.

5. The method of color customization of a content screen according to claim 1, wherein the designated components are a plurality of components contained in a designated drag area (37), the method further comprising a step of displaying a color palette for color selection (29c) of each element constituting the component, for every component in the drag area (37).

6. The method of color customization of a content screen (2) according to claim 1, wherein the other component is a component on which the designated component is overlaid and displayed.

7. The method of color customization of a content screen (2) according to claim 1, further comprising a step of displaying a selected component area containing the component, which is designated in the content screen, in a preview area (24) set in the color customization operation screen.

8. A method of color customization of a content screen (2), the method supporting a selection of a color of a component (100, 200) displayed in the content screen, the method comprising steps of:

designating a component (100, 200) which is a target for color selection in the content screen and displaying a color customization operation screen (17); and
displaying a color palette for color selection (29c) in the color customization operation screen; wherein
in the color palette, specifying portions for specifying hue (44), luminance (45), saturation (46), and transparency (47), respectively, are provided, and also color cells (43) of a plurality of colors with hues in a hue range specified in the hue specifying portion and luminance's in a luminance range specified in the luminance specifying portion are arranged in matrix, the method further comprising a step of selecting the color cell indicative of a desired color with a color palette and thereby displaying the designated component in the selected color.

9. The method of color customization of a content screen (2) according to claim 8, wherein
the color cells (43) are arranged in matrix with an axis of hue and an axis of luminance, and wherein
the color cells arranged along the hue axis in the matrix display colors having the same luminance but different hues in the hue range while the color cells arranged along the luminance axis in the matrix display colors having the same hue but different luminance's in the luminance range.

10. The method of color customization of a content screen (2) according to claim 8, wherein in the hue specifying portion (44), an unselectable area (58) indicative of an unselectable hue range is set and displayed, while in the luminance specifying portion, an unselectable area indicative of an unselectable luminance range is set and displayed.

11. The method of color customization of a content screen (2) according to claim 10, wherein the unselectable area of the hue specifying portion (44) also contains a hue that is selectable but is not recommended to select, while the unselectable area of the luminance specifying portion (45) also contains a luminance that is selectable but is not recommended to select.

12. The method of color customization of a content screen (2) according to claim 8, wherein
the hue specifying portion (44) includes a hue display bar (44b) and a hue specifying slider (44b') being movable along the hue display bar and specifying a hue in the hue display bar, wherein a hue specifying range, having a center at a hue in the hue display bar and specified by the hue specifying slider, is set, and wherein a hue within the hue specifying range is the hue of a color displayed in the color cell of the color palette, and wherein the luminance specifying portion (45) includes a luminance display bar (45a) and a luminance specifying slider (45b) being movable along the luminance display bar and specifying a luminance in the luminance display bar, wherein a luminance specifying range (45c), having a center at a luminance in the luminance display bar specified by the luminance specifying slider, is set, and wherein a luminance within the luminance specifying range is the luminance of a color displayed in the color cell of the color palette.

13. The method of color customization of a content screen (2) according to claim 8, wherein a color selector (40) including the color palette and the hue, luminance, saturation, and transparency specifying portions is displayed for each element of the designated component at the same time.

14. The method of color customization of a content screen (2) according to claim 11, wherein the unselectable color and the color selectable but not recommended to select with respect to an element of the selected component are colors determined by a calculation of whether or not these colors can be distinguished with respect to a color of other element adjacent to the relevant element.

15. The method of color customization of a content screen (2) according to claim 8, wherein the saturation specifying portion (46) is arranged above the color palette (42), while below the saturation specifying portion the color cells (43) are arranged in a matrix with an axis of hue and an axis of luminance.

# FIG. 1

103    101              102

100
(COMPONENT 1)

TEXT

200
(COMPONENT 2)

## FIG. 2

| COMPONENT NAME | TEXT/ SYMBOL | BORDER LINE OF TEXT/ SYMBOL | TEXT/ SYMBOL IN INACTIVE STATE | BORDER LINE OF TEXT/ SYMBOL IN INACTIVE STATE | TEXT/ SYMBOL AT SELECTION | BORDER LINE OF TEXT/ SYMBOL AT SELECTION | BACK- GROUND | FRAME LINE | BACK- GROUND AT SELECTION | FRAME LINE AT SELECTION | BACK- GROUND IN INACTIVE STATE | FRAME LINE IN INACTIVE STATE | SHADE | ... |
|---|---|---|---|---|---|---|---|---|---|---|---|---|---|---|
| BUTTON | O | O | O | O | | | O | O | | | O | O | O | |
| TEXT | O | O | O | O | | | | | | | | | | |
| LAYOUT (CUSHION) | O | O | | | | | O | O | | | | | O | |
| TEXT BOX | O | O | O | O | | | O | O | | | O | O | O | |
| CHECK BOX | O | O | O | O | | | O | O | | | O | O | O | |
| RADIO BUTTON | O | O | O | O | | | O | O | | | O | O | O | |
| TAB PANEL | O | O | O | O | O | O | O | O | O | O | O | O | O | |
| ⋮ | | | | | | | | | | | | | | |

EP 2 333 723 A2

# FIG. 3

START ～S100

SELECT COLOR CUSTOMIZATION MODE ～S101

CUSTAMIZE A PLURALITY OF COMPONENTS? ～S102

No → SELECT ONE COMPONENT TO CUSTAMIZE ～S103

Yes → SELECT A PLURALITY OF COMPONENTS TO CUSTOMIZE ～S117

IS THERE ANY COMPONENT PLACED ON A RELEVANT COMPONENT? ～S104

IS THERE ANY COMPONENT PLACED ON THE RELEVANT COMPONENT, WITH RESPECT TO ONE OF THE SELECTED COMPONENTS? ～S118

S106 Yes — No S105

S119 Yes — No S120

DISPLAY A COLOR SELECTOR OF AN ELEMENT CONSTITUTING THE RELEVANT COMPONENT AND A COLOR SECECTOR OF AN ELEMENT CONSTITUTING A COMPONENT PLACED ON THE RELEVANT COMPONENT

DISPLAY A COLOR SELECTOR OF AN ELEMENT CONSTITUTING THE RELEVANT COMPONENT AND A COLOR SECECTOR OF AN ELEMENT CONSTITUTING A COMPONENT "BACKGROUND" ON WHICH THE RELEVANT COMPONENT IS PLACED

DISPLAY A COLOR SELECTOR OF AN ELEMENT CONSTITUTING THE RELEVANT COMPONENT AND A COLOR SECECTOR OF AN ELEMENT CONSTITUTING A COMPONENT PLACED ON THE RELEVANT COMPONENT

DISPLAY A COLOR SELECTOR OF AN ELEMENT CONSTITUTING THE RELEVANT COMPONENT AND A COLOR SECECTOR OF AN ELEMENT CONSTITUTING A COMPONENT "BACKGROUND" ON WHICH THE RELEVANT COMPONENT IS PLACED

HAVE COLOR SELECTORS WITH RESPECT TO ALL THE SELECTED COMPONENTS BEEN DISPLAYED? ～S121 — No

Yes ～S107

RENDER EACH SELECTOR IN A STATE WHERE A COLOR CURRENTLY DISPLAYED IN EACH ELEMENT IS SELECTED

～S108

CALCULATE A SELECTABLE COLOR IN EACH ELEMENT BASED ON A COLOR OF EACH OF THE OTHER ELEMENTS, AND SEPARATELY DISPLAY AN UNSELECTABLE COLOR/COLOR NOT TO SELECT, RESPECTIVELY

IS THERE ANY ELEMENT WHOSE COLOR IS DESIRED TO CHANGE? ～S109

Yes — No → DEPRESS OK BUTTON ～S113

IS A COLOR SELECTOR OF AN ELEMENT WHOSE COLOR IS DESIRED TO CHANGE CAPABLE OF SELECTING THE COLOR DESIRED TO SELECT? ～S110

CHANGE ALL COLORS OF THE SAME TYPE OF COMPONENTS PLACED ON THE SAME LAYOUT COMPONENT INTO THE SAME COLOR? ～S114

Yes → SELECT THE COLOR DESIRED TO SELECT WITH THE COLOR SELECTOR OF THE ELEMENT WHOSE COLOR IS DESIRED TO CHANGE

No → CLEAR A COLOR SELECTOR OF OTHER ELEMENT AFFECTING A SELECTABLE COLOR IN THE RELEVANT ELEMENT

S111      S112

Yes → DELETE THE COLOR SELECTOR DISPLAY, AND DISPLAY A SCREEN, ON WHICH A RESULT OF A CHANGE MADE BY THE COLOR SELECTOR AND A RESULT OF ALL THE COLORS OF THE SAME TYPE OF COMPONENTS PLACED ON THE SAME LAYOUT COMPONENT BEING CHANGED TO THE SAME COLOR, ARE REFLECTED

No → DELETE THE COLOR SELECTOR DISPLAY, AND DISPLAY A SCREEN, ON WHICH A RESULT OF A CHANGE MADE BY THE COLOR SELECTOR IS REFLECTED

S115      END      S116

## FIG. 4

EP 2 333 723 A2

| ⊞ CUSTOMIZE COLOR | ↻ RE-DISPLAY | LOGOUT |

PERSONAL | GROUP

TASK LIST

MAIL
SCHEDULE
BULLETIN BOARD
FILE SHARING
MEMO
INSTANT MESSAGE

TASK LIST | FILTER 123/10000 ▲

TARGET COLUMN: TIME LIMIT ▼ | FILTER CONDITION: 2009/06/10 CALENDAR 2009/06/30 CALENDAR | +ADD CONDITION | DELETE

TARGET COLUMN: LEVEL OF IMPORTANCE ▼ | FILTER CONDITION: LARGE | +ADD CONDITION | DELETE

EXECUTE | RESET

SELECT: ALL | ALL IN THIS PAGE | NONE | NUMBER OF ITEMS FOR DISPLAY: 20 CHANGE | ◄ ◄ ITEM 1~20 ► ►| | PAGE: GO | HEADER SETTINGS

| SELECT | TO-DO | LEVEL OF IMPORTANCE | TIME LIMIT | PERSON IN CHARGE | STATUS | MEMO |
|--------|-------|---------------------|------------|------------------|--------|------|
| ☐ | TASK 1 | LARGE | 2009/06/10 | MR. A | COMPLETE | xxxxxxxxxxx |
| ☐ | TASK 2 | LARGE | 2009/06/10 | MR. A | IN EXECUTION | xxxxxxxxxxx |
| ☑ | TASK 3 | LARGE | 2009/06/10 | MR. B | DELAYED | xxxxxxxxxxx |
| ☑ | TASK 4 | LARGE | 2009/06/10 | MR. B | DELAYED | xxxxxxxxxxx |
| ☐ | TASK 5 | LARGE | 2009/06/10 | MS. A | COMPLETE | xxxxxxxxxxx |
| ☐ | TASK 6 | LARGE | 2009/06/10 | MS. A | COMPLETE | xxxxxxxxxxx |
| ☐ | TASK 7 | LARGE | 2009/06/10 | MR. C | | xxxxxxxxxxx |
| ☐ | TASK 8 | LARGE | 2009/06/11 | MS. B | IN EXECUTION | xxxxxxxxxxx |
| ☐ | TASK 9 | LARGE | 2009/06/11 | MS. B | IN EXECUTION | xxxxxxxxxxx |

| OFTEN USED COMMANDS | CHANGE LEVEL OF IMPORTANCE | CHANGE TIME LIMIT | CHANGE PERSON IN CHARGE | CHANGE STATUS | OTHER COMMANDS | MEMO DESCRIPTION ▼ | EXECUTE |

FIG. 5

FIG. 6

# FIG. 7

EP 2 333 723 A2

# FIG. 8

EP 2 333 723 A2

# FIG. 9

17a

**PREVIEW**

2009/06/10

| NUMBER OF ITEMS FOR DISPLAY | 20 | CHANGE |
| --- | --- | --- |

| LEVEL OF IMPORTANCE | TIME LIMIT |
| --- | --- |
| LARGE | 2009/06/10 |
| LARGE | 2009/06/10 |
| LARGE | 2009/06/10 |
| LARGE | 2009/06/10 |
| LARGE | 2009/06/10 |
| LARGE | 2009/06/10 |
| LARGE | 2009/06/10 |
| LARGE | 2009/06/11 |
| LARGE | 2009/06/11 |

CHANGE TIME LIMIT

16

**COLOR CUSTOMIZATION**

**"CHANGE TIME LIMIT" BUTTON**

TEXT COLOR   19a   23
■ #000000   Close ▲   CLEAR   11

SOLID COLOR / GRADIENT
29   30
OPACITY: 100 %

BUTTON'S BACKGROUND COLOR   19b   23
▧ GRADATION   Close ▲   CLEAR

SOLID COLOR / GRADIENT
OPACITY: 100 %
ANGLE: 90 °
29   30

BUTTON'S FRAME LINE COLOR   19c   23
▧ #808080   Close ▲   CLEAR

SOLID COLOR / GRADIENT
29   30
OPACITY: 100 %

19

**BACKGROUND OF "CHANGE TIME LIMIT" BUTTON**

18

20

TEXT COLOR   20a
☐ #FFFFFF   Select ▼   CLEAR

BACKGROUND COLOR   20b
▧ #808080   Close ▲   CLEAR

SOLID COLOR / GRADIENT
29   30
OPACITY: 100 %

FRAME LINE COLOR   20c
▧ #808080   Select ▼   CLEAR

OK   CANCEL   CLEAR ALL
26   27   28

EP 2 333 723 A2

## FIG. 10A

21a — [■] #000000  21  Close ▲  22  CLEAR  23

29 — SOLID COLOR | GRADIENT

OPACITY: [100] %  — 29a

— 29b

29e1

— 29d1

→ HUE

29c

29d2

DENSITY

29e2

## FIG. 10B

21b — [ ] GRADATION  21  Close ▲  22  CLEAR  23

SOLID COLOR | GRADIENT — 30

OPACITY: [100] %  — 30a
30f2  30f4  30f1  30f  — 30f
30f3
ANGLE: [90] °  — 30g

— 30b

30e1
— 30d1
→ HUE

30e2
DENSITY — 30c

30d2

EP 2 333 723 A2

# FIG. 11A

23 — CLEAR

22 — Close ▲

21 — #000000

29 — SOLID COLOR | GRADIENT

29a — OPACITY: 100 %

29b

29c

31a

# FIG. 11B

23 — CLEAR

22 — Close ▲

21 — #000000

29 — SOLID COLOR | GRADIENT

29a — OPACITY: 100 %

29b

29c

31b

# FIG. 12

EP 2 333 723 A2

**FIG. 13**

17a

CUSTOMIZE COLOR  |  RE-DISPLAY  |  LOGOUT

CLEAR ALL  |  CANCEL  |  OK

**COLOR CUSTOMIZATION**

BUTTON'S FRAME LINE COLOR
☐ #FFFFFF   Close ▼   CLEAR
SOLID COLOR / GRADIENT
OPACITY: 100 %
29   29C   19C   11

BUTTON'S BACKGROUND COLOR
GRADATION   Close ▼   CLEAR
SOLID COLOR / GRADIENT
ANGLE: 90 °
OPACITY: 100 %

TEXT COLOR
☐ #FAFBD   Close ▼   CLEAR
SOLID COLOR / GRADIENT
OPACITY: 100 %

**BACKGROUND OF "CHANGE TIME LIMIT" BUTTON**

FRAME LINE COLOR
#808080   Select ▲   CLEAR

BACKGROUND COLOR
#808080   Close ▼   CLEAR
SOLID COLOR / GRADIENT
OPACITY: 100 %

TEXT COLOR
☐ #FFFFFF   Select ▲   CLEAR

**PREVIEW**

LEVEL OF IMPORTANCE   TIME LIMIT

NUMBER OF ITEMS: 20

CHANGE TIME LIMIT
CANCEL   CHANGE

LARGE   2009/06/10
LARGE   2009/06/10
LARGE   2009/06/10
LARGE   2009/06/10
LARGE   2009/06/10
LARGE   2009/06/11
LARGE   2009/06/11

2009/06/10

# FIG. 14

EP 2 333 723 A2

# FIG. 15

EP 2 333 723 A2

FIG. 16A

# FIG. 16B

EP 2 333 723 A2

EP 2 333 723 A2

# FIG. 17

# FIG. 18

PREVIEW

COLOR CUSTOMIZATION

17a

TIME LIMIT

LEVEL OF IMPORTANCE

ALL | ALL IN THIS PAGE

TO-DO

TASK 1

TASK 2

TASK 3

TASK 4

TASK 5

TASK 6

TASK 7

TASK 8

TASK 9

OFTEN USED COMMAND

16

TEXT COLOR — 19a

☐ #FAFFBD | Close ▲ | CLEAR

SOLID COLOR | GRADIENT

OPACITY: 100 %

BUTTON'S BACKGROUND COLOR — 19b

▨ GRADATION | Close ▲ | CLEAR

SOLID COLOR | GRADIENT

OPACITY: 100 %

90 °

BUTTON'S FRAME LINE COLOR — 19c

☐ #FFFFFF | Close ▲ | CLEAR

SOLID COLOR | GRADIENT

OPACITY: 100 %

TEXT COLOR — 20a

☐ #FFFFFF | Select ▼ | CLEAR

BACKGROUND COLOR — 20b

▨ #A28F00 | Close ▲ | CLEAR

SOLID COLOR | GRADIENT

OPACITY: 100 %

FRAME LINE COLOR — 20c

▨ #808080 | Select ▼ | CLEAR

26

OK | CANCEL | CLEAR ALL

11

EP 2 333 723 A2

## FIG. 19

CHANGE ALL COLORS OF THE SAME TYPE OF COMPONENTS PLACED ON THE SAME LAYOUT INTO THE SAME COLOR?

YES     NO

# FIG. 20

A figure showing a task management software interface window.

Top bar buttons: CUSTOMIZE COLOR | RE-DISPLAY | LOGOUT

Left panel tabs: PERSONAL | GROUP

TASK LIST

- MAIL
- SCHEDULE
- BULLETIN BOARD
- FILE SHARING
- MEMO
- INSTANT MESSAGE

TASK LIST — FILTER 123/10000 ▲

| TARGET COLUMN | TIME LIMIT ▼ | FILTER CONDITION | 2009/06/10 CALENDAR | 2009/06/30 CALENDAR | +ADD CONDITION | DELETE |
| TARGET COLUMN | LEVEL OF IMPORTANCE ▼ | FILTER CONDITION | LARGE | | +ADD CONDITION | DELETE |

EXECUTE | RESET

SELECT: ALL | ALL IN THIS PAGE | NONE | NUMBER OF ITEMS FOR DISPLAY: 20 CHANGE | ITEM 1~20 | PAGE: [ ] Go | HEADER SETTINGS

| SELECT | TO-DO | LEVEL OF IMPORTANCE | TIME LIMIT | PERSON IN CHARGE | STATUS | MEMO |
|---|---|---|---|---|---|---|
| ☐ | TASK 1 | LARGE | 2009/06/10 | MR. A | COMPLETE | xxxxxxxxxxx |
| ☐ | TASK 2 | LARGE | 2009/06/10 | MR. A | IN EXECUTION | xxxxxxxxxxx |
| ☑ | TASK 3 | LARGE | 2009/06/10 | MR. B | DELAYED | xxxxxxxxxxx |
| ☑ | TASK 4 | LARGE | 2009/06/10 | MR. B | DELAYED | xxxxxxxxxxx |
| ☐ | TASK 5 | LARGE | 2009/06/10 | MS. A | COMPLETE | xxxxxxxxxxx |
| ☐ | TASK 6 | LARGE | 2009/06/10 | MS. A | COMPLETE | xxxxxxxxxxx |
| ☐ | TASK 7 | LARGE | 2009/06/10 | MR. C | | xxxxxxxxxxx |
| ☐ | TASK 8 | LARGE | 2009/06/11 | MS. B | IN EXECUTION | xxxxxxxxxxx |
| ☐ | TASK 9 | LARGE | 2009/06/11 | MS. B | IN EXECUTION | xxxxxxxxxxx |

OFTEN USED COMMANDS | CHANGE LEVEL OF IMPORTANCE | CHANGE TIME LIMIT | CHANGE PERSON IN CHARGE | CHANGE STATUS | OTHER COMMANDS | MEMO DESCRIPTION ▼ | EXECUTE

EP 2 333 723 A2

# FIG. 21

EP 2 333 723 A2

# FIG. 22

# FIG. 23A

21a

50

51

$\alpha = 0\%$

# FIG. 23B

21a

50

51

$\alpha = 50\%$

# FIG. 24

EP 2 333 723 A2

(a)

(b)

FIG. 25A

44b₃  44b₂  11  11  44b₁

44b₃  44b₂  44b₂  44b₁

(a)

(b)

FIG. 25B

44b₁  11  11

44b₁  44b₁

# FIG. 26

# FIG. 27

# FIG. 28A

# FIG. 28B

# FIG. 29

EP 2 333 723 A2

# FIG. 30

50

55

CHANGE THE COLOR OF A TEXT OR ITS BACKGROUND INTO A COLOR NOT ATTACHED WITH "X" MARK BECAUSE THE TEXT MAY NOT BE DISTINGUISHED DEPENDING ON USERS

53

OK

54

# FIG. 31

40e

| □ | #A708EE | Close ▲ | CLEAR |

29

SOLID COLOR | GRADIENT   30

44d   41

H:   56₁

58₁   31a
56₂
44c   42
56₃

44

44a   56₄
43

582   56₅
57₅
57₁  57₂   57₃ 57₄   45c
45

L:   45a   58₃   45

S:

α:

# FIG. 32A

TEXT COLOR

21a

21

40C'

22

23

| □ | # 01FFFF | Close ▲ | CLEAR |

| SOLID COLOR | GRADIENT |

30

H: 128

58₁

44a

44

58₂

41

41a

42

49

43

45

45a

L: 128

S: 255

58₃

α: 0

BACKGROUND COLOR

21a

21   30

40B'

22   23

49

| □ | # 000000 | Close ▲ | CLEAR |

| SOLID COLOR | GRADIENT |

30

11

H: 128

58₁

44

58₂

41

41a

42

43

45

45a

L: 95

S: 255

58₃

α: 0

# FIG. 32B

TEXT COLOR

21a

40C'

22   23

| □ | # 01FFFF | Close ▲ | CLEAR |

| SOLID COLOR | GRADIENT |

30

H: 128

44a

44

41

41a

42

49

43

45

45a

L: 128

S: 255

α: 0

BACKGROUND COLOR

21   21d

40B'

22   23

21a

| ⊠ | NO DOUBING | Close ▲ | CLEAR |

| SOLID COLOR | GRADIENT |

30

29

58₁

44

58₂

41

41a

42

43

45

45a

L: 95

S: 255

58₃

α: 0

# FIG. 33

(a)

BRANCH : 62 — 3 ▼  63 — + — 63a — 63b  64 — 50 %
61

FIG. 34A

66

67D  68  63I  67U

(b)

BRANCH: 62 — 4 ▼  63 — + —  63a — 63b  64 — 75 %
61

66

67D  67I  68  67Ia  67U

BRANCH : 62 — 3 ▼  63 — + —  63a — 63b  64 — 100 %
61

FIG. 34B

66

67D  67I  68  67U

BRANCH: 62 — 2 ▼  63 — + ⋯  63a — 63b  64 — 50 %
61

66

67D  67I  68

11

FIG. 35A

FIG. 35B

# FIG. 36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009228553 A
- JP 2010017783 A
- JP 2008182513 A
- JP 2009027605 A
- JP 2008153749 A